(19) Europäisches Patentamt / European Patent Office / Office européen des brevets

(11) **EP 1 702 761 B1**

(12) **EUROPEAN PATENT SPECIFICATION**

(45) Date of publication and mention
of the grant of the patent:
**22.04.2009 Bulletin 2009/17**

(51) Int Cl.:
**B32B 27/32** (2006.01)    **B41M 5/40** (2006.01)
**C08J 5/18** (2006.01)

(21) Application number: **04807409.0**

(22) Date of filing: **21.12.2004**

(86) International application number:
**PCT/JP2004/019052**

(87) International publication number:
**WO 2005/063496 (14.07.2005 Gazette 2005/28)**

(54) **BIAXIALLY ORIENTED WHITE POLYPROPYLENE FILM FOR THERMAL TRANSFER RECORDING AND RECEIVING SHEET FOR THERMAL TRANSFER RECORDING THEREFROM**

BIAXIAL AUSGERICHTETE WEISSE POLYPROPYLENFOLIE FÜR WÄRMEÜBERTRAGUNGSAUFZEICHNUNG UND AUFNAHMEBOGEN FÜR WÄRMEÜBERTRAGUNGSAUFZEICHNUNGEN DAVON

FILM DE POLYPROPYLENE BLANC ORIENTE BI-AXIALEMENT POUR L'IMPRESSION PAR THERMOTRANSFERT ET FEUILLE DE RECEPTION POUR L'IMPRESSION PAR THERMOTRANSFERT FABRIQUEE A PARTIR DUDIT FILM

(84) Designated Contracting States:
**AT BE BG CH CY CZ DE DK EE ES FI FR GB GR HU IE IS IT LI LT LU MC NL PL PT RO SE SI SK TR**

(30) Priority: **26.12.2003 JP 2003431981**

(43) Date of publication of application:
**20.09.2006 Bulletin 2006/38**

(73) Proprietor: **TORAY INDUSTRIES, INC.**
**Tokyo 103-8666 (JP)**

(72) Inventors:
• **TANAKA, Shigeru**
**Yasu-shi,**
**Shiga 5202303 (JP)**
• **OHKURA, Masatoshi**
**Otsu-shi, Shiga5200052 (JP)**
• **MASUDA, Jun'ichi**
**Kyoto-shi, Kyoto 6078088 (JP)**
• **TONEGAWA, Kouichi**
**Ibaraki-shi, Osaka 5670031 (JP)**
• **MORITA, Reiko**
**Kusatsu-shi, Shiga 5250027 (JP)**

(74) Representative: **Kador & Partner**
**Corneliusstrasse 15**
**80469 München (DE)**

(56) References cited:
EP-A- 0 947 542    EP-A- 1 369 221
WO-A-98/10016    WO-A-02/081557
JP-A- 3 187 742    JP-A- 6 064 038
JP-A- 7 101 162    JP-A- 8 187 965
JP-A- 10 244 770    JP-A- 11 180 058
JP-A- 60 262 625    JP-A- 2004 160 689
JP-A- 2005 059 245

**Description**

[Field of the Invention]

This invention is defined by the claims and relates to a biaxially oriented white polypropylene film for thermal transfer recording and a receiving sheet for thermal transfer recording using the same. In more detail, the receiving sheet for thermal transfer recording using the white film of this invention as a substrate is high in sensitivity, excellent in crease resistance, surface appearance and processability. And, this invention relates to a biaxially oriented white polypropylene film (hereafter, may simply be abbreviated as white film) most suitable for a substrate of receiving sheet for thermal transfer recording and the receiving sheet for thermal transfer recording using the same which has compatibility of those characteristics with a high productivity at its production.

[Background Technology]

As one of recording methods in hard copy technology, thermal transfer recording system which has characteristics such as non impact, easy operation and maintenance, low cost and a possibility of miniaturization has been attracting attention. This thermal transfer recording system is a method in which an ink ribbon having an ink layer, a colorant containing layer, is superposed on a receiving sheet and, by heating a thermal head, the colorant containing component or colorant, which migrates by melting or sublimation, is transferred to thereby be printed as fine halftone (dots) on the receiving sheet. In recent years, a load by the heat which the receiving sheet receives when it is processed into the receiving sheet for thermal transfer recording or when it is printed (it is also called as an image print) is becoming large. Moreover, because processing speed is becoming high or processing condition becoming severe, or there is also an inclination that printers are becoming smaller, the environment where printing substrate (receiving sheet for thermal transfer recording) is used is becoming severe year by year. In view of the background of the environmental change where the printing substrate containing the sheet for these thermal transfer recording is used, it is strongly demanded that the white film applied to the substrate, while keeping whiteness and cushion factor, is improved in processability and transferring ability (sensitivity) exemplified by crease resistance, and is of high productivity (low price).

As a substrate of the receiving sheet conventionally used for such a thermal transfer recording system, a white film in which voids were formed by including an immiscible resin, such as an inorganic particle or polyester based resin in polypropylene, and exfoliating the interface between the polypropylene and the inorganic particles or the immiscible resin at stretching process, has been applied (for example, refer to patent references 1 to 8).

As a method other than the above by which voids are formed in polypropylene, for example, a method in which β-crystal having a low crystal density (crystal density: 0.922 g/cm$^3$) is formed in an undrawn sheet when a melt extrusion of polypropylene is carried out to produce an undrawn sheet, and a crystal transition into α-crystal having a high crystal density (crystal density: 0.936 g/cm$^3$) is carried out by stretching the undrawn sheet thereby to form voids by the difference between the two crystal densities, is mentioned:

As the white film or the micro-porous film using the crystal transition of β-crystal and its manufacturing method, for example, a manufacturing method of polypropylene micro-porous film obtained by stretching a polypropylene sheet which consists of polypropylene and a polymer with melt crystallization temperature higher than the polypropylene and β-crystal nucleating agent (refer to patent reference 9), or a method for manufacturing a micro-porous film obtained by melt extrusion of a specified composition of polypropylene and an amide based β-crystal nucleating agent and by crystallizing·stretching in a specified condition (refer to patent reference 10), or a micro-porous film obtained by biaxially stretching a sheet having a specific pore size and a specific nitrogen transmission coefficient, having a specific stretching strength with a uniform planer mechanical properties within the field and having a β-crystal ratio (K value), measured in specific conditions, of a specific range (refer to patent reference 11), or a micro-porous film containing polypropylene and a β-crystal nucleating agent and having a thickness uniformity of a specific range and having a specific cross-sectional structure (refer to patent reference 12), or a manufacturing method of a micro-porous film by melt molding a resin composition of polypropylene, polyethylene and a β-crystal nucleating agent of a specific composition, and then stretching under specific conditions (refer to patent reference 13), or a white film in which a skin layer having heat-sealability or printability is laminated at least on one side of the core layer which consists of an orientation enhancing polymer, homopolypropylene and β-crystal nucleating agent (patent references 14 and 15), or a white film, having a specific gravity, optical density, and a cushion factor, containing a specific amorphous polymer, which consists of a layer of which β-crystal ratio is in a specific range, and a layer containing non-nucleus voids, (refer to patent reference 16) or the like are mentioned.

[Patent reference 1] Japanese Patent No. 2599934 (claim 1)
[Patent reference 2] Japanese Patent No.1748101 (claims 1 to 15)
[Patent reference 3] Japanese Patent Laid Open No. Hei 11-343357 (claims 1 to 4)

## EP 1 702 761 B1

[Patent reference 4] Japanese Patent No. 2611392 (claims 1 and 2)
[Patent reference 5] Japanese Patent No. 2917331 (claims 1 to 4)
[Patent reference 6] Japanese Patent No. 2964608 (claims 1 to 5)
[Patent reference 7] Japanese Patent No. 2735989 (claims 1 and 2)
[Patent reference 8] Japanese Patent No. 2651469 (claims 1 and 2)
[Patent reference 9] Japanese Patent No. 1974511 (claim 1)
[Patent reference 10] Japanese Patent No. 3443934 (claims 1 to 5)
[Patent reference 11] Japanese Patent No. 2509030 (claims 1 to 8)
[Patent reference 12] International Publication WO02/66233 (claims 1 to 11)
[Patent reference 13] Japanese Patent No. 3523404 (claim 1)
[Patent reference 14] International Publication WO03/93003 (claims 1 to 29)
[Patent reference 15] International Publication WO03/93004 (claims 1 to 23)
[Patent reference 16] Japanese Patent Laid Open No. 2004-142321 (claims 1 to 8)

[Disclosure of the Invention]

[Problem(s) to be Solved by the Invention]

However, in the white film or micro-porous film in which the above-mentioned crystal transition of β-crystal is used, it was impossible to make the productivity in the film formation process and the receiving sheet production process for thermal transfer recording compatible with the sensitivity of the receiving sheet in a high level.

That is, the void-containing film or white film obtained according to the patent references 1 to 8 had the fatal fault as indicated below.

That is, for the white film in which an inorganic particle is used, it is required to add a lot of inorganic particles in order to attain a high whiteness or preferable L, a and b values, but by the addition, protrusions by the particle were made on the film surface to thereby cause problems that surface roughness becomes large, or in the film formation process or in the production process of receiving sheet for thermal transfer recording, the inorganic particle falls out and soils these processes.

Moreover, in the white film in which an immiscible resin is used, the void formed by the immiscible resin is large and the number of voids is small. That is, since the void is rough and big and the sum of the film strengths at 2% elongation (F2 value) of longitudinal direction (MD) and transverse direction (TD) of film is too high, there was a problem that the film is inferior to flexibility to bring about a low crease resistance, on the other hand, if it is too low, there was a problem that its processability is inferior. Moreover, there was also a problem that the cushion factor was low and the sensitivity of the receiving sheet for thermal transfer recording in which this white film is used as a substrate was low.

In addition, as above-mentioned, the white film used for the substrate of the receiving sheet for thermal transfer recording is required to have a high sensitivity owing to speed-up of printing process. That is, a white film which can exhibit a sensitivity higher than that of the above-exemplified conventional white film is demanded.

Moreover, the micro-porous film obtained according to the patent references 9 to 13 has a pore penetrated from front to reverse side, namely, it has permeability, and probably by this pore, the surface smoothness of the film may get worse, or surface glossiness may fall. Therefore, as for the receiving sheet for thermal transfer recording in which these films are used, surface appearance may worsen. Furthermore, receiving layer is made by coating method in many cases, but in the film which has such permeability, the coating material permeated into the inside and it was not able to form a receiving layer well. Moreover, there was a problem that the sum of the strengths of the film at 2% elongation (F2 value) of the longitudinal direction and of the transverse direction of film is too high, and the film is inferior in flexibility to bring about a low crease resistance.

There is a problem that, in a film in which only skin layer is laminated on a core layer having β-crystal activity which can be obtained according to the patent references 14 or 15, the productivity is low. When producing a white film in which the crystal transition of β-crystal is used, melt extruded polymer sheet is held and solidified on a metal drum kept at a high temperature of 100˚C or more. By crystallizing a sheet on different conditions from the conventional transparent polypropylene film like this, a lot of β-crystals are formed in the undrawn sheet. In order to form uniform and fine void in the white film, it is important to raise the β-crystal ratio of the undrawn sheet, and from this point, it is preferable to set the temperature of the metal drum at 100˚C to 130˚C in many cases. However, for example, at such a hot drum temperature, since solidification of the undrawn sheet takes too long time, there was a problem that the holding time on the drum became long to thereby result in a low productivity. Moreover, probably because of a big spherical β-crystal generated in the skin layer, there is a problem of generating crater-like defect by crystal transition of β-crystal in the skin after biaxial stretching, and a white film with a high quality surface appearance was not able to be manufactured as a substrate of the receiving sheet for thermal transfer recording. That is, the above-mentioned films did not satisfy the quality which can be used as a substrate of the receiving sheet for thermal transfer recording and the productivity of

3

industrial level, in the same time.

The white film obtained according to the patent reference 16 was, due to the use as the core layer an amorphous resin which is immiscible to polypropylene, big and rough voids were formed like conventional white film, the sensitivity of the receiving sheet for thermal transfer recording in which said film is used for the substrate was also low.

This invention aims to provide a biaxially oriented white polypropylene film for thermal transfer recording of which productivity in the film formation process is high, which is excellent in processibility in the production process of the receiving sheet for thermal transfer recording, which has non-nucleus voids in the core layer, which is flexible and of low specific gravity, high in whiteness, excellent in crease resistance, film formability and processability, and when it is used as a substrate of a receiving sheet for thermal transfer recording, it shows a sensitivity superior to conventional white film, and to provide a receiving sheet for thermal transfer recording using the biaxially oriented white polypropylene film for thermal transfer recording.

[Means for Solving the Problem]

This invention mainly has the following constitutions, in order to solve the above-mentioned problems.

(1) A biaxially oriented white polypropylene film for thermal transfer recording characterized in that it is a film of polypropylene resin of which β-crystal ratio is 30% or more and melting temperature is 140 to 172˚C, which has substantially non-nucleus voids, a void ratio of 30 to 80% and a sum of strengths of the film at 2% elongation (F2 value) of longitudinal direction and transverse direction being in the range of 10 to 70 MPa and a surface glossiness being in the range of 10 to 145 % (the first configuration)

(2) A biaxially oriented white polypropylene film for thermal transfer recording characterized in that a skin layer (B layer) of which surface glossiness is 10 to 145 % is laminated to at least one side of a core layer (A layer) of polypropylene resin of which β-crystal ratio is 30% or more, melting temperature is 140 to 172˚C, which has a substantially non-nucleus void, a void ratio is 30 to 80%, and a sum of the strengths at 2% elongation (F2 value) of longitudinal direction and transverse direction being in the range of 10 to 70 MPa (the second configuration)

(3) A biaxially oriented white polypropylene film for thermal transfer recording in which a skin layer (B layer) of which surface glossiness is in the range of 10 - 145 % is laminated to at least one side of a core layer (A layer) of polypropylene resin of which has substantially non-nucleus voids, characterized in that a sum of strengths at 2% elongation (F2 value) of longitudinal direction and transverse direction of the film is in the range of 30 to 100 MPa and that the film has β-crystal activity (the third configuration).

(4) A biaxially oriented white polypropylene film for thermal transfer recording which is a film in which a skin layer (B layer) having a half-crystallization time of 60 seconds or less and a surface glossiness of 30 to 145 % is laminated at least on one side of a core layer (A layer) which consists of polypropylene resin having substantially non-nucleus voids, characterized in that it is a film of a specific gravity of 0.3 to 0.7 and has β-crystal activity (the fourth configuration).

In addition, this invention is characterized in a receiving sheet for thermal transfer recording in which a receiving layer is provided on at least one side of said white film, or in providing an anchor layer between the receiving layer and the film in said receiving sheet for thermal transfer recording, or in that said anchor layer consists of at least one or more kinds of resin selected from acryl based resin, polyester based resin, and polyurethane based resin.

[Effect of the Invention]

According to this invention, as explained below, a biaxially oriented white polypropylene film excellent as a substrate of a receiving sheet for thermal transfer recording and excellent in productivity, and a receiving sheet for thermal transfer recording using the same, can be provided.

(1) The white film of this invention has many substantially non-nucleus voids, is low in specific gravity, is high in whiteness, optical density and cushion factor, and by making its surface glossiness into a specific range, the sensitivity of the receiving sheet becomes high, and images are printed clearly when it is used for a receiving sheet for thermal transfer recording.

(2) The white film of this invention, because the crystallization speed of the skin layer is high, does not stick or does not cause defect even in high speed and high temperature casting condition. From the above point, it excels in productivity.

(3) The white film of this invention exhibits a good flexibility and slipperiness and is more excellent in crease resistance compared to conventional white film. From the above point, it excels in processibility.

(4) Because the white film of this invention is substantially non-nucleus, a void formation agent does not fall out in film formation process and in receiving sheet production process. From the above point, its productivity is excellent.
(5) By making melting temperature and the sum of the strengths at 2% elongation (F2 value) of longitudinal direction and transverse direction of the film into a proper range, the white film of this invention exhibits an excellent dimensional stability, and the receiving sheet for thermal transfer recording using this film as a substrate also exhibits an excellent dimensional stability.

[Brief Explanation of the Drawing]

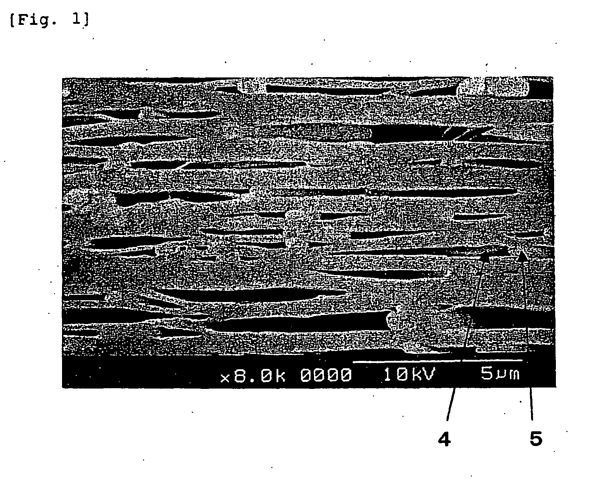

[Fig. 1] is an electron photomicrograph (SEM) magnified at 1,500 times of a cross section of a conventional white film having nuclei (white film having nuclei).

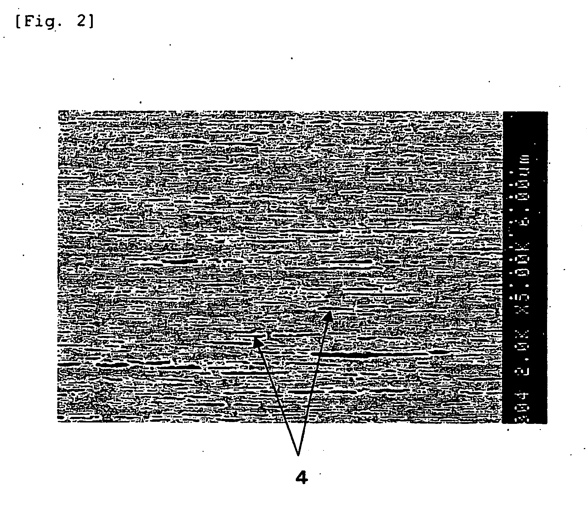

[Fig. 2] is an electron photomicrograph (SEM) magnified at 800 times of a cross section of a biaxially oriented white polypropylene film for thermal transfer recording of this invention (white film of this invention having no nuclei).

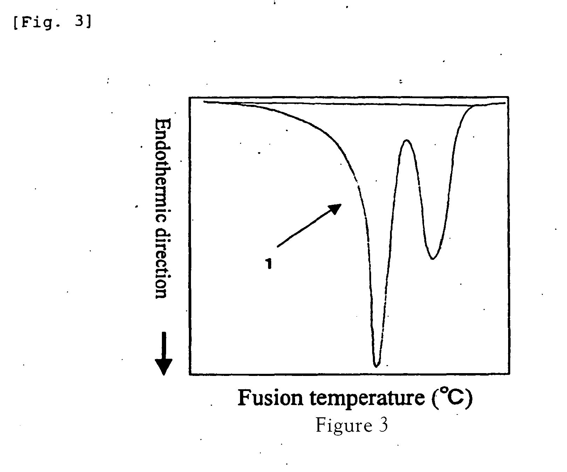

[Fig. 3] is a drawing schematically illustrating the peak when an endothermic peak accompanying fusion of polypropylene is detected for determining β-crystal ratio according to the above-mentioned evaluation method (3) using a differential scanning calorimeter (DSC).

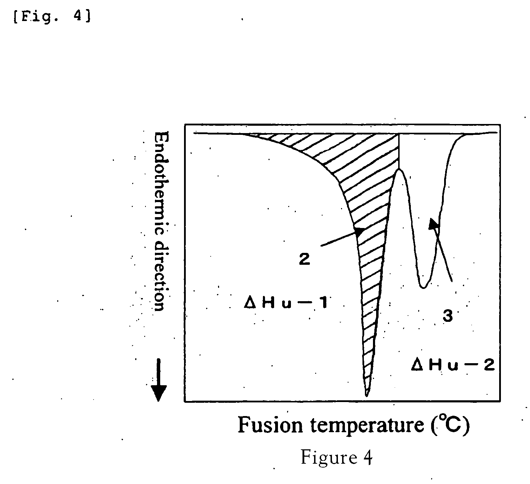

[Fig. 4] is a drawing illustrating the heat of fusion of endothermic peak (ΔHu-1) accompanying the fusion of β-crystal of polypropylene having a peak between 140˚C and 160˚C in Fig. 3 and the heat of fusion of endothermic peak (ΔHu-2) accompanying the fusion of a crystal of polypropylene other than β-crystal having a peak above 160˚C in Fig. 3.

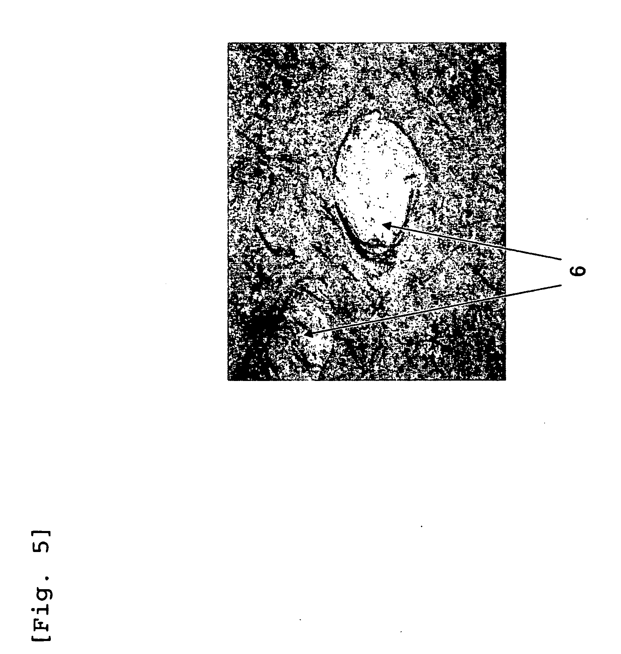

[Fig. 5] is a photograph in which a crater-like defect formed on film surface of a white film other than of this invention is observed.

[Explanation of the Numeral Code]

1. All melting curves of β-crystal containing PP and of β-crystal containing film
2. The amount of heat of fusion of β-crystal part, ΔHu-1
3. The amount of heat of fusion of α-crystal part, ΔHu-2
4. Void
5. Void nucleus
6. Crater like surface defect

[Best Mode of Carrying Out the Invention]

Hereafter, the best mode for obtaining the film of this invention, and the biaxially oriented white polypropylene film (hereafter, may simply be abbreviated as white film) of this invention are explained taking a case where it is applied to a receiving sheet for thermal transfer recording.
The A layer (hereafter, may simply be abbreviated as A layer) of the white film of the first configuration of this invention and the white film of the second to fourth configuration has substantially non-nucleus voids. Here, "non-nucleus void" means a void which does not have a nucleus (void formation agent) for forming a void by stretching. In such a non-nucleus void, nothing is observed in the void in cross-sectional image at the time of observing the film cross section with a scanning electron microscope (SEM). On the other hand, in so-called "nucleus containing void" which has a nucleus in the void, namely, which is formed by the nucleus (void formation agent), a nucleus of a spherical or fibrous shape, or of an unfixed shape, or of other shapes is observed in the void.
In this invention, what "has substantially non-nucleus voids", as mentioned below, is defined as the case where the ratio (percentage) occupied by the void which has a nucleus per all voids is 5 % or less, when a film cross section prepared in specific conditions is observed in specific conditions with a scanning electron microscope (SEM) and total number of voids and nuclei per 1000 $\mu m^2$ are counted. Cases other than the above-mentioned are defined as not having the non-nucleus voids. At this time, although a void which originally has a nucleus may also be detected as the non-nucleus void by the above-mentioned method, if the ratio of the void which does not have the nucleus is in the above-mentioned range, the purpose of this invention will be attained.
The following five points are raised as an advantage of having substantially non-nucleus voids in a layer of the white film of the first configuration or of the white film of the second to fourth configuration of this invention.

(1) By using an immiscible resin, an inorganic particle or an organic particle as the void formation agent, as compared with the case where it does not have non-nucleus voids, there are few uneven, big and rough voids resulting from poor dispersibility or agglomeration of the void formation agent, uniform and fine voids can be formed.

(2) Since there are few big and rough voids, it is excellent in crease resistance even as a film of low specific gravity.

(3) It is possible to prevent such troubles, beforehand, that the void formation agent falls out from film at film formation process or film processing process and soils the processes, or a film breakage occurs thereby.

(4) The cushion factor of the whole film is high.

(5) Especially, since the whiteness defined below is high and b value defined below can be made in a low preferable range, when it is used as a receiving sheet for thermal transfer recording, sensitivity can be raised drastically as compared with a film which contains the above mentioned void formation agent and does not have the non-nucleus voids.

The white film of the first configuration or the A layer of the white film of the second configuration of this invention consists of polypropylene. Here, although it means that all the resin that constitutes A layer is polypropylene, as long as the effect of this invention is maintained, in the A layer, for example, resins other than polypropylene, additives or the like exemplified below may be included. Hereafter, whole material constituting A layer may be abbreviated simply as whole resin of A layer.

The A layer of the white film of the first configuration or the white film of the second configuration of this invention consists of polypropylene resin of which β-crystal ratio is 30% or more and melting temperature is 140 to 172˚C. More preferably, it is polypropylene resin of which melting temperature is in the range of 150 to 170˚C, since film formation ability is stabilized and coating process of receiving layer is stabilized. If the melting temperature is lower than 140˚C, when used as a receiving sheet for thermal transfer recording, the recording paper may contract and curl with the heat at the time of transfer, and it may not be preferable. On the other hand, if it exceeds 172˚C, since film breakage occurs frequently at biaxial stretching to thereby worsen film formation ability, or the sum of strengths of the film at 2% elongation (hereafter, abbreviated as F2 value) of longitudinal direction (hereafter, abbreviated as MD) and transverse direction (hereafter, abbreviated as TD) exceeds 70 MPa, to thereby get flexibility worse or to thereby get crease resistance worse, and it may not be preferable.

The polypropylene resin of the first and second configuration having a melting temperature of 140 to 172˚C, or the polypropylene resin of the A layer of the third or fourth configuration is homopolypropylene or a propylene copolymerized with the second component other than propylene, for example, ethylene or α-olefin such as butene, hexene or octene in the amount of 5% by weight or less by random or block copolymerization. Moreover, it is preferable that the following elastomer component is added to the above-mentioned polypropylene resin since drawing stress may fall at the time of film formation or effect of void formation may be accelerated. For example, a linear low-density-polyethylene by the metallocene catalyst method (m-LLDPE), ultra-low-density-polyethylene (VLDPE), as ethylene/α-olefin copolymer, ethylene-butene rubber (EBR), ethylene-propylene rubber (EPR), propylene-butene rubber (PBR), ethylene vinyl acetate (EVA), ethylene-ethacrylate (EEA), ethylene-methyl methacrylate (EMMA), ethylene-propylene-diene copolymer (EPDM), isoprene rubber (IR), as styrene based copolymer such as styrene-butadiene rubber (SBR), hydrogenated styrene-butadiene rubber (H-SBR), styrene-butylene-styrene copolymer (SBS), and styrene-ethylene-butylene-styrene copolymer (SEBS) are mentioned. Among these, by adding and mixing 1 to 5 % by weight of ultra-low density polyethylene, "Engage" (produced by E. I. du Pont Dow) or "Kernel" (produced by Mitsubishi Chemical), crease resistance or uniformity of voids of the film is improved, and it may be preferable. If the amount added or copolymerized is less than 1% by weight, no effect of the addition can be seen and if it exceeds 5 % by weight, a maldistribution happens to thereby form a gel-like protrusion or lower the thermal resistance of the receiving sheet, and the sensitivity may fall.

As for the isotactic index (II) of the above-mentioned polypropylene resin, it is preferable to be 90 to 99.8%. If the II is under the above-mentioned range, the strength of the film may fall or crease resistance may get worse. If the II exceeds the above-mentioned range, film formability may become unstable. More preferably, the II of the polypropylene of the A layer is 92 to 99.5 %.

Moreover, it is preferable that the melt flow rate (MFR) of the above-mentioned polypropylene resin is in the range of 1 to 20g/10 min (230˚C, 2.16kg) in respect of extrusion moldability and void formability (uniformity and fineness of void). If MFR is under the above-mentioned range, extrusion output may fluctuate, or a replacement of extrusion raw material may take a long time, or a void may become hard to be formed. If MFR exceeds the above-mentioned range, when carrying out the co-extrusion lamination of the A layer and the skin layer, it becomes difficult to laminate in a uniform thickness, or the film may become brittle to break easily at film formation process or film processing process. MFR of the polypropylene resin is more preferably 1 to 15 g/10 min.

Here, as for the characteristic values (II, MFR, etc.) of the above-mentioned polypropylene resin, it is preferable to determine using the raw material chip before film production, but the characteristic values measured using the film can also be used.

To the polypropylene resin of the white film of the first configuration and of the white film of the second to fourth configurations of this invention, in the range which does not spoil the purpose of this invention, for example, well-known additives, such as an anti-oxidant, a thermostabilizer, a chlorine scavenger, an antistatic agent, a lubricant, an antiblocking agent, a viscosity controlling agent, and copper inhibitor, may be mixed.

In addition, in the white film of the first configuration, and in the A layer of the polypropylene resin of the white film of the second to fourth configuration of this invention, by mixing high melt strength polypropylene (High Melt Strength-PP, hereafter, abbreviated as HMS-PP), melt extrusion is stabilized to thereby improve film formability, and a stable subsequential biaxial stretching at high draw ratio becomes possible. Accompanying this, void ratio increases and it is preferable.

As an method for obtaining HMS-PP, for example, a method of blending polypropylene resin containing much amount of high molecular weight component, a method of blending oligomer or polymer with branched structure, or as described in Japanese Patent Laid Open No. Shou 62-121704, a method of introducing a long-branched structure into polypropylene molecule, or as described in Japanese Patent No. 2869606, a method of, without introducing long-branchded, making a linear crystallinepolypropylene of which melt strength, intrinsic viscosity and crystallization temperature, melting point satisfy specific relation, respectively, and has a ratio of boiling xylene extraction residue in a specific range, etc., is preferably used.

Among these HMS-PPs, it is especially preferable that the polypropylene which has long-branches in main chain is used. Here, the polypropylene which has long-branches in main chain is polypropylene resin which has a polypropylene main chain having a branched polypropylene chain of the length similar to the main chain.

As examples of polypropylene resin having long-branches on its main chain skeleton, the polypropylene produced by Basell (type name: PF-814, PF-633, PF-611, SD-632, etc.), the polypropylene produced by Borealis (type name: WB130HMS, etc.), the polypropylene produced by Dow (type name: D114, D201, D206, etc.), etc. are mentioned.

Although the amount to be added of the above-mentioned HMS-PP depends also on the type of HMS-PP to be used, it is preferably 1 to 30 % by weight, and it is characteristic that the effect can also be seen even by a little amount of addition. If the amount of mixing is under the above-mentioned range, improvement in film formation ability may not be expected, but if the amount of addition exceeds the above-mentioned range, film formability gets worse, in particular, the longitudinal drawability at high ratio longitudinal stretching may get worse, or the extrusion stability of the molten polymer at melt extrusion or the smoothness of film, etc., may get worse, and the amount of mixing of HMS-PP is more preferably 1 to 20% by weight, and most preferably, 2 - 12 % by weight.

In addition, since the stretching stress at the time of stretching (in case of manufacturing the white film of this invention by sequential biaxial stretching, especially, at the time of longitudinal stretching) may be reduced to thereby make it possible to manufacture within a capacity of stretching torque of existing facility or since the void formation accompanying stretching may be accelerated, at least one kind selected from other type polymers other than the above-mentioned polypropylene resin and the elastomer component may be added to the white film of this invention, if necessary. However, of course, the white film of this invention should have the above-mentioned non-nucleus voids, but it may be more preferable not to add these other type polymer, when the drawing stress is not improved at the time of film formation, or on the contrary, when it becomes higher than necessary level, or when a void configuration becomes not uniform by forming a big and rough void. As these other type polymers, vinyl polymer resin which includes well-known polyolefin based resin, polyester based resin, polyamide based resin, polyphenylene sulfide based resin, polyimide based resin, etc., are mentioned.

The β-crystal ratio of the polypropylene resin of the A layer of the white film of the first configuration and of the white film of the second configuration of this invention needs to be 30% or more. If the β-crystal ratio is under the above-mentioned, the amount of void formation is insufficient and uniform voids in thickness direction of film may be hard to be obtained. Moreover, the higher the β-crystal ratio of the A layer of the white film of this invention, the better accelerated the void formation described above. Therefore, since a high sensitivity can be obtained when it is processed into a receiving sheet for thermal transfer recording, an upper limit is not especially proposed in the above-mentioned β-crystal ratio, but when it is too high, since crease resistance may get worse although it improves sensitivity, it is preferable in view of sensitivity compatible with the crease resistance to be 95 % or less for example. The β-crystal ratio in the A layer is more preferably 40 to 95%, and still more preferably 45 to 90 %.

Moreover, the white film of the third and fourth configurations of this invention contains non-nucleus voids in the A layer and therefore needs to have β-crystal activity. By this β-crystal activity, β-crystal is generated in an undrawn sheet in the film formation process, and the β-crystal changes to α-crystal at successive stretching process. It enables to form uniform and fine voids.

Here, in this invention, considering that the whole white film of this invention has β-crystal activity, it is determined that the A layer has β-crystal activity by the following criteria. That is, using a differential scanning calorimeter (DSC), a 5 mg white film is heated to 280°C at a rate of 10°C/min under nitrogen-gas-atmosphere according to JIS K 7122 (1987), after keeping for 5 minutes, it is cooled down to 30°C at a rate of 10°C/min, then after keeping for 5 minutes, then a calorimetric curve was obtained when a temperature is elevated again at a rate for 10°C/min (hereafter, may be abbreviated as calorimetric curve of second run). If an endothermic peak exists between 140°C and 160°C of the calorimetric curve and if the heat of fusion determined by the peak area of the endothermic peak is 10 mJ/mg or more, it is defined that the white film has β-crystal activity (as the whole film). On the other hand, although an endothermic peak exists in the above-mentioned temperature range and if it is unclear whether the peak is originated from the β-crystal activity or not, you may judge that "it has the β-crystal activity" by combining the result of DSC with, using wide angle X-ray diffraction method, an existence of diffraction peak in the field (300) observed near $2\theta = 16°$ which originates from β-crystal, for the sample which carried out melt crystallization of said sample under the following specified conditions mentioned below.

In order to keep β-crystal ratio of 30% or more of the polypropylene resin of the white film of the first and second configuration of this invention, or to have β-crystal activity of the white film of the third or fourth configuration of this invention, it is preferable to add so-called β-crystal nucleating agent to the above-mentioned polypropylene resin. When such β-crystal nucleating agent is not added, the above high β-crystal ratio may not be obtained. As the β-crystal nucleating agent which can be preferably added to the polypropylene resin which constitutes the white film of this invention, for example, alkali or alkaline earth metal salt of carboxylic acid represented by such as potassium 1,2-hydroxy stearate, magnesium benzoate, magnesium succinate, magnesium phthalate; amide based compound represented by such as N,N'-dicyclohexyl-2,6-naphthalene dicarboxyamide; aromatic sulfonic-acid compound represented by such as sodium benzenesulfonate, sodium naphthalene sulfonate; di- or tri-esters of di- or tri- carboxylic acid; tetraoxaspiro compounds; imide carboxylic-acid derivatives; phthalocyanine based pigment represented by such as phthalocyanine blue; quinacridone based pigment represented by such as quinacridone, quinacridone quinone; two-component based compound which consists of component A which is an organic dibasic acid and component B which is an oxide, hydroxide or salt of the IIA group metal of the periodic table, etc., are mentioned. However, it is not necessarily limited to these, and only one kind may be used, or two or more kinds may be mixed and used. As the β-crystal nucleating agent added to the polypropylene resin which constitutes the A layer of the white film of the first and second to fourth configurations of this invention, among the above mentioned, the following compounds 1 and 2 are especially preferable since they can make the β-crystal ratio of undrawn sheet high and can accelerate the formation of void at subsequent stretching process.

[Compound 1]

Amide based compound represented by such as N,N'-dicyclohexyl-2,6-naphthalene dicarboxamide expressed by the following chemical formula

$$R_2 - NHCO - R_1 - CONH - R_3$$

[Here, in the formula, $R_1$ denotes a saturated or unsaturated aliphatic dicarboxylic acid residue having 1 to 24 carbon atoms, a saturated or unsaturated alicyclic dicarboxylic acid residue having 4 to 28 carbon atoms or an aromatic dicarboxylic acid residue having 6 to 28 carbon atoms, and $R_2$ and $R_3$ are same or different cyclo alkyl groups having 3 to 18 carbon atoms or cyclo alkenyl groups having 3 to 12 carbon atoms, or derivative2 thereof.]

$$R_5 - CONH - R_4 - NHCO - R_6$$

[Here, in the formula, $R_4$ denotes a saturated or unsaturated aliphatic diamine residue having 1 to 24 carbon atoms, a saturated or unsaturated alicyclic diamine residue having 4 to 28 carbon atoms, a heterocyclic diamine residue having 6 to 12 carbon atoms or an aromatic diamine residue having 6 to 28 carbon atoms, and $R_5$ and $R_6$ are same or different cyclo alkyl groups having 3 to 12 carbon atoms or cyclo alkenyl groups having 3 to 12 carbon atoms, or derivatives thereof.]

[Compound 2]

Two-component based compound which consists of component A which is an organic dibasic acid and component B which is an oxide, hydroxide or salt of the IIA group metal of the periodic table.

As examples of such especially preferable β-crystal nucleating agent or β-crystal nucleating agent containing polypropylene, β-crystal nucleating agent, "NJStar" (type name: NU-100, etc.), produced by New Japan Chemical Co., Ltd. and β-crystal nucleating agent containing polypropylene, "BEPOL" (type name: B-022-SP etc.), produced by Sunoco Chemicals, etc., are mentioned.

Regarding the amount to be added of the β-crystal nucleating agent of this invention, although it depends on the β-crystal generation ability of the β-crystal nucleating agent to be used, it is preferable to be 0.001 - by weight to the whole quantity of the whole resin of the A layer. If the amount to be added of the β-crystal nucleating agent is under the above-mentioned range, the β-crystal ratio of the white film obtained becomes insufficient or the specific gravity becomes high or a big and rough void is formed, and the sensitivity may be inferior when it is processed into a receiving sheet for thermal transfer recording. If the added the amount of β-crystal nucleating agent exceeds the above-mentioned range, β-crystal ratio of the white film obtained may not be improved even if it is added more, but the economical efficiency becomes inferior, the dispersibility of the nucleating agent itself may get worse and β-crystal ratio may fall on the contrary. The amount to be added of β-crystal nucleating agent is, more preferably, 0.005 to 0.5 % by weight, still more preferably, 0.05 to 0.2 % by weight.

The void ratio of the A layer of the white film of the first configuration and the white film of the second configuration of this invention needs to be 30 to 80%. If the void ratio is less than 30%, specific gravity is high, whiteness and cushion factor becomes low to thereby bring about low sensitivity of receiving sheet for thermal transfer recording. If the void ratio exceeds 80%, crease resistance will get worse or the film may become easy to be broken to cause a problem in processability. In order to make the receiving sheet for thermal transfer recording into high sensitivity, it is preferable that the white film has a high whiteness at low specific gravity, and the cushion factor is high.

Moreover, the sum of the strengths at 2% elongation (F2 value) of longitudinal direction (hereafter, may be abbreviated as MD) and transverse direction (hereafter, may be abbreviated as TD) of the white film of the first configuration and of the A layer of the white film of the second configuration of this invention is in the range of 10 to 70 MPa. The F2 value of the white film of this invention can be controlled by the added the amount of the β-crystal nucleating agent which is preferably added to polypropylene resin, by the ratio of the thickness of the core layer (A layer) and the skin layer (B layer), and in its production process, by the crystallization conditions (metal drum temperature, rotating speed of metal drum and thickness of undrawn sheet obtained) at the time of solidifying the molten polymer in casting process, by stretching conditions (stretching direction (longitudinal or transverse), by stretching method (longitudinal-transverse or transverse-longitudinal sequential biaxial stretching, simultaneous biaxial stretching, re-stretching after biaxial stretching, etc.) in stretching process, streching ratio, stretching speed, stretching temperature, etc.), or by heat treating condition, etc. If sum of F2 value of MD and TD is less than 10 MPa, the film is too soft and stretched at winding in the film formation process to thereby cause creases in the film. On the other hand, if F2 value exceeds 70 MPa, the film is damaged at winding after film formation process and crease resistance may become low.

Next, in the white film of the second to fourth configurations of this invention, the polypropylene resin layer having the above-mentioned substantially non-nucleus voids is used as the core (A layer), and the skin (B layer) (hereafter, may simply be abbreviated as B layer) is laminated to at least one side of the core. Thereby, as compared with the case where the laminating of B layer is not carried out, surface smoothness and glossiness of film can be improved. Furthermore, in case a receiving layer is formed on the B layer to be processed into a receiving sheet for thermal transfer recording, as compared with the case where the lamination of B layer is not carried out, close contact with thermal head is improved and heat loss is prevented to thereby improve transferring ability from ink ribbon, i.e., sensitivity.

As for the B layer of the white film of the second and third configuration of this invention, it is preferable to consist of at least one or more kinds of resin from polyolefin based resin, acryl based resin, polyester based resin, polyurethane based resin, etc., and polyolefin based resin is especially preferable, and more preferably it is polypropylene resin. As polyolefin resin which can make the adhesion with the A layer and/or glossiness high, for example, homopolypropylene or a random or block copolymer of propylene with ethylene or α-olefins such as butene, hexene or octene, etc., are mentioned. Among them, homopolypropylene is preferable since it makes thermal resistance of B layer surface high.

As polypropylene resin of the B layer of the white film of the second and third configuration of this invention, crystalline polypropylene having II of 92% or more is preferable. To this polypropylene resin, it is possible to add 1 to 10% by weight of poly methyl pentene, isotactic polystyrene, syndiotactic polystyrene, polymethyl methacrylate, polycarbonate, etc. as the immiscible resin component. By this addition, fine voids are formed in the B layer and it may be possible to increase sensitivity as the receiving sheet. If the added the amount is less than 1% by weight, a void is hard to be formed, and if it is more than 10% by weight, since the immiscible resin may fall out at film formation process and at a further processing process, it is not preferable.

As for the average dispersed diameter of this immiscible resin component, it is preferable to be in the range of 0.2 to 2μm. If the average dispersed diameter is less than 0.2 μm, a void is hard to be formed. On the other hand, if it is more than 2 μm, the immiscible resin will fall out, or the diameter of a void becomes large and the surface appearance may worsen, and it is not preferable.

As said immiscible resin component, it is preferable to use poly methyl pentene (hereafter, abbreviated as PMP) which has good dispersibility in polypropylene resin and can form a fine void.

As the above-mentioned PMP, preferably a PMP having an MFR of 5 to 100g/10 min at 260˚C, 5 kg is preferable and an MFR of 10 to 50g/10 min is more preferable since a uniform and fine voids can be formed.

Moreover, as for the B layer of the white film of the second and third configurations of this invention, the following resin is preferably used as the resin other than the above-mentioned polypropylene resin. As the acryl based resin, for example, ethylene-acrylic acid copolymer, ethylene - acrylic acid ester copolymer, ethylene-methacrylic acid copolymer, ethylene-methacrylic acid ester copolymer, etc. can be mentioned. As the polyester based resin, aromatic polyester is preferable and, as polyurethane based resin, polyether urethane or polyester urethane of ionomer type is preferable.

The laminating method of the above-mentioned B layer is not specified, but laminating of polypropylene resin by co-extrusion with the A layer or extrusion lamination is preferable. On the other hand, lamination of such as acryl based resin, polyester based resin or polyurethane based resin is preferably a lamination by coating method. It is preferable that the B layer by coating method is that formed by coating a mixed coating material of water-soluble and/or water-dispersible cross-linked polyester urethane based resin and a water-soluble organic solvent, and drying, in view of film forming ability and good adhesion with the A layer.

The above-mentioned polyester urethane based resin is that made from dicarboxylic acid, polyester polyol which is obtained by esterification of diol component and polyisocyanate, and, if necessary, and a chain extender, etc.

As the dicarboxylic acid component of the polyester urethane based resin, terephthalic acid, isophthalic acid, 2,6-naphthalene dicarboxylic acid, adipic acid, trimethyl adipic acid, sebacic acid, malonic acid, dimethyl malonic acid, succinic acid, glutaric acid, pimelic acid, 2,2-dimethyl glutaric acid, azelaic acid, fumaric acid, maleic acid, itaconic acid, 1,3-cyclopentane dicarboxylic acid, 1,2-cyclohexane dicarboxylic acid, 1,4-cyclohexane dicarboxylic acid, 1,4-naphthalic acid, diphenic acid, 4,4'-oxybenzoic acid, 2, 5-naphthalene dicarboxylic acid, etc., can be used.

Moreover, as the diol component of the above-mentioned polyester urethane based resin, aliphatic glycols such as ethylene glycol, 1,4-butanediol, diethylene glycol, and triethylene glycol, aromatic diols such as 1,4-cyclohexane dimethanol, poly(oxyalkylene)glycols such as polyethylene glycol, polypropylene glycol and polytetramethylene glycol, are mentioned.

Moreover, to the above-mentioned polyester urethane based resin, other than the dicarboxylic acid component and the diol component, oxycarboxylic acid such as p-oxybenzoic acid or acrylic acid (and derivative thereof) may be copolymerized, furthermore, although these are of linear structure, they can be made into a branched polyester using an ester formable component of trivalent or more.

As the above-mentioned poly isocyanate, hexamethylene di-isocyanate, diphenylmethane diisocyanate, tolylene diisocyanate, isophorone diisocyanate, tetramethylene diisocyanate, xylylene diisocyanate, lysine diisocyanate, addition product of tolylene diisocyanate with trimethylol propane and addition product of hexamethylene di-isocyanate with trimethylolethane, etc., can be mentioned.

Moreover, as the above-mentioned chain extender, pendant carboxyl group containing diols, or glycols such as ethylene glycol, diethylene glycol, propylene glycol, 1,4-butanediol, hexamethylene glycol and neopentyl glycol, or diamines such as ethylenediamine, propylenediamine, hexamethylenediamine, phenylenediamine, tolylenediamine, diphenyl diamine, diamino diphenylmethane, diamino diphenylmethane, and diamino cyclohexyl methane, etc., are mentioned.

As examples of the above-mentioned polyester urethane based resin, "HYDRAN" (type name: AP-40F etc.) produced by Dainippon Ink & Chemicals, Inc. etc., are mentioned.

When the B layer is formed by a coating method, in order to improve film forming ability and adhesive strength with the A layer, it is preferable to add to the coating material, as water-soluble organic solvent, at least one or more kinds of N-methyl pyrrolidone, ethyl cellosolve acetate and dimethylformamide. In particular, N-methyl pyrrolidone is excellent in improving film formation ability and adhesive strength with the A layer and it is preferable. Regarding the amount to be added, 1 to 15 parts by weight per 100 parts by weight of said polyester urethane based resin is preferable in view of preventing inflammability and odor aggravation of the coating material, and still more preferably, it is 3 to 10 parts by weight.

Furthermore, when a water-dispersed polyester urethane based resin is used, it is preferable to introduce a crosslinked structure to improve adhesive property between the B layer and the A layer. As methods for obtaining such coating liquid, the methods of Japanese Patent Laid Open No. Shou 63-15816, Japanese Patent Laid Open No. Shou 63-256651 and Japanese Patent Laid Open No. Hei 5-152159 are mentioned. As the crosslinking component, adding at least one kind or more of cross linking agent selected from isocyanate based compound, epoxy based compound and amine based compound, is mentioned.

As the above-mentioned isocyanate based compound, for example, toluene diisocyanate, xylene diisocyanate, naphthalene diisocyanate, hexamethylene diisocyanate, isophorone diisocyanate mentioned above, etc., are exemplified, but it is not limited thereto.

Moreover, as the above-mentioned epoxy based compound, for example, diglycidyl ether of bisphenol A and its oligomer, diglycidyl ether of hydrogenated bisphenol A and its oligomer, orthophthalic acid diglycidyl ether, isophthalic acid diglycidyl ether, terephthalic acid diglycidyl ether, adipic acid diglycidyl ether, etc., are exemplified, but it is not limited thereto.

As the above-mentioned amine based compound, for example, amine compound such as melamine, urea and benzoguanamine, and amino resin obtained by addition condensation of the above-mentioned amino compound with formaldehyde or an alcohol having 1 to 6 carbon atoms, hexamethylenediamine, triethanolamine, etc., are exemplified, but it is not limited thereto.

When the water-dispersed polyester urethane based resin of said B layer is used, it is preferable to add an amine based compound in view of adhesive strength with the A layer. As an example of the amine based compound used as the cross linking agent, "BEKKAMIN" (type name: APM etc.) produced by Dainippon Ink & Chemicals, Inc. etc.,

is mentioned.

It is preferable that the amount to be added of the cross linking agent selected from the above-mentioned isocyanate based compound, epoxy based compound and an amine based compound is 1 to 15 parts by weight per 100 parts by weight of the mixed coating material of said water-dispersed polyester urethane based resin and the water-soluble organic solvent, in view of improving chemical resistance and preventing waterproof aggravation, and more preferably, 3 to 10 parts by weight. If the added amount of the cross linking agent is under the above-mentioned range, an adhesion improvement effect may not be acquired, and if the above-mentioned range is exceeded, the adhesive strength of the B layer and the A layer may fall, presumably due to unreacted cross linking agent remained.

Moreover, in order to accelerate crosslinking·hardening of the above-mentioned B layer composition, a small amount of crosslinking accelerator may be added to the coating material which forms the B layer.

As the crosslinking accelerator to be added to the water-dispersed polyester urethane based resin of said B layer, since accelerating effect of the crosslinking is large, a water-soluble, acidic compound is preferable. As the crosslinking accelerator, for example, terephthalic acid, isophthalic acid, 2,6-naphthalene dicarboxylic acid, adipic acid, trimethyl adipic acid, sebacic acid, malonic acid, dimethyl malonic acid, succinic acid, glutaric acid, sulfonic acid, pimelic acid, 2,2-dimethyl glutaric acid, azelaic acid, fumaric acid, maleic acid, itaconic acid, 1,3-cyclopentane dicarboxylic acid, 1,2-cyclohexane dicarboxylic acid, 1,4-cyclohexane dicarboxylic acid, 1,4-naphthalic acid, diphenic acid, 4,4'-oxybenzoic acid, 2,5 -naphthalene dicarboxylic acid, etc., can be used.

As an example of the above-mentioned crosslinking accelerator, "CATALYST" (type name: PTS etc.) produced by Dainippon Ink & Chemicals, Inc. etc., is mentioned.

As the coating method of the coating material which forms the above-mentioned B layer, a coating method using a reverse roll coater, a gravure coater, a rod coater, an air doctor coater, or well-known coaters other than these is preferable.

Moreover, in order to impart slipperiness to the B layer of the white film of the second and third configurations of this invention, it is preferable to add at least one kind or more of a small amount of inorganic or organic particles. However, it is preferable that the amount to be added at this time is 0.01 to 1% by weight, and more preferably, it is 0.1 to 0.5% by weight. If it exceeds 1% by weight, said resin or particles may fall out in the film formation process or in the production process of the receiving sheet for thermal transfer recording, thus it is not preferable. In case of that the added amount is less than 0.01% by weight, the effect of imparting slipperiness is not attained.

As the above-mentioned inorganic particles, for example, wet and a dry type silica, colloidal silica, aluminum silicate, titanium oxide, calcium carbonate, calcium phosphate, barium sulfate, alumina, magnesium carbonate, zinc carbonate, titanium oxide, zinc oxide (zinc white), antimony oxide, cerium oxide, zirconium oxide, tin oxide, lanthanum oxide, magnesium oxide, barium carbonate, zinc carbonate, basic lead carbonate (white lead), barium sulfate, calcium sulfate, lead sulfate, zinc sulfide, mica, mica-titanium, talc, clay, kaolin, lithium fluoride, calcium fluoride, etc., are mentioned.

The above-mentioned organic particles are particles obtained by crosslinking a polymer compound with a crosslinking agent. For example, crosslinked particle of a poly methoxysilane based compound, crosslinked particle of a polystyrene based compound, crosslinked particle of an acryl based compound, crosslinked particle of a polyurethane based compound, crosslinked particle of a polyester based compound, crosslinked particle of a fluoride based compound, or a mixture thereof, can be mentioned.

It is preferable that the average particle diameter of the inorganic particles and the crosslinked organic particles is in the range of 0.5 to 2 $\mu$m, and that they are spherical, since agglomeration of particles are little and the effect of slipperiness is high. If the average particle diameter is less than 0.5 $\mu$m, the effect of slipperiness decreases and if it exceeds 2$\mu$m, the particle may fall out or film surface will easily get damaged when the film is rubbed with each other, and they are not preferable.

It is necessary that the sum of the strengths at 2% elongation (F2 value) of longitudinal direction (MD) and transverse direction (TD) of the white film of the third configuration of this invention is in the range of 30 to 100 MPa. The F2 value of the whole film becomes high by laminating the B layer to at least one side of the above-mentioned A layer, preferably laminating to both sides. The F2 value can be controlled by the amount to be added of the β-crystal nucleating agent which is preferably added to polypropylene resin, the ratio of thickness of the A layer and the skin layer (B layer), and in its production process, by the crystallization conditions at the time of solidifying the molten polymer in casting process, by the stretching conditions in stretching process (stretch ratio, stretching speed, stretching temperature, etc.), or by heat treatment conditions, etc. By being the sum of the F2 value of MD and TD in the range of 30 to 100 MPa, crease resistance is improved further and elongation of film by the tension in winding process at film formation or by the tension at production process of receiving sheet for thermal transfer recording is prevented to thereby improve processability.

Regarding the white film of the fourth configuration of this invention, to at least one side of the above-mentioned A layer, it is necessary to laminate a B layer having a half crystallization time ($t_{1/2}$) of 60 seconds or less.

Here, $t_{1/2}$ is defined as the time from the starting time to the time of the highest point of the endothermic peak accompanying crystallization, when, using DSC, a sample is cooled from a molten stage and the time when the temperature arrives at a specified temperature (125˚C) is set as a starting time (=0), and the sample is kept at said specified temperature.

If the $t_{1/2}$ of the B layer of the white film of the fourth configuration of this invention is made less than 60 seconds, and preferably, the B layer is the metal drum side at producing an undrawn sheet, there are the following advantages.

(1) Even if the drum temperature is made high in order to increase the β-crystal ratio of the undrawn sheet, many voids can be formed in the film without generating crater-like defect after biaxial stretching on surface of the white film.
(2) Even if retention time of the undrawn sheet is shortened by increasing rotating speed of the drum, productivity can be improved because the film is unlikely to stick to the drum.
$t_{1/2}$ of said B layer is preferably less than 50 seconds, more preferably, less than 40 seconds. In addition, as the $t_{1/2}$ of B layer becomes shorter, the above-mentioned product quality and productivity is apt to be more improved. Accordingly, $t_{1/2}$ of the B layer is, in view of productivity, most preferably, "0 second" which is defined below. However, when it is processed to a receiving sheet for thermal transfer recording by providing a receiving layer on the B layer, if drawability in film formation process worsens or adhesion with the receiving layer (or anchor layer) worsens or to make the void ratio of the B layer more than 0 %, it is not necessary that $t_{1/2}$ is 0 second. $t_{1/2}$ can be, for example, controlled by selecting type or amount of nucleating agent and HMS-PP exemplified below.

The B layer of the white film of the fourth configuration of this invention consists of polypropylene resin. Here, what the B layer consist of polypropylene resin means that the whole resin constituting the B layer is polypropylene resin, but as long as the effect of this invention is maintained, in the B layer, for example, a resin, additive, particle or the like other than polypropylene which is mentioned below may be included. In any event, the above-mentioned $t_{1/2}$ is the value measured for the polypropylene in the state including these whole material constituting the B layer (hereunder, may be abbreviated simply as the whole resin of B layer) .

Although it is preferable that the polypropylene resin constituting the B layer mainly consists of homopolymers of propylene, as long as the purpose of this invention is not impaored, it may be a polymer in which propylene and other monomer component of unsaturated hydrocarbon are copolymerized, or a polymer in which propylene and monomer component other than propylene is copolymerized may be blended, or a (co) polymer of monomer component of unsaturated hydrocarbon other than propylene may be blended. As these copolymerizing component or monomer component constituting blended product, for example, ethylene, propylene (in case of copolymerized blended product), 1-butene, 1-pentene, 3-methyl pentene-1, 3-methylbutene-1, 1-hexene, 4-methyl pentene-1, 5-ethyl hexene-1, 1-octene, 1-decene, 1-dodecen, vinyl cyclohexene, styrene, allyl benzene, cyclopentene, norbornene, 5-methyl-2-norbornene, acrylic acid and derivatives thereof, are mentioned. Among these, as polypropylene resin constituting the B layer, homopolypropylene or ethylene·propylene random copolymer in which less than 5 % by weight of ethylene copolymerized is preferable in view of film formability and adhesion (in case of processing into a receiving sheet for thermal transfer recording by providing a receiving layer or a anchor layer on the B layer) to receiving layer (or anchor layer), but it is not limited thereto.

As a method for obtaining a polypropylene resin of which $t_{1/2}$ is less than 60 seconds as mentioned above, for example, methods in which α-crystal nucleating agent or β-crystal nucleating agent is added to polypropylene resin, or adding the above-mentioned HMS-PP to polypropylene resin, etc., are preferably used.

Here, as the α-crystal nucleating agent, sorbitol based nucleating agent, metal organic phosphate based nucleating agent, metal organic carboxylate based nucleating agent, rosin based nucleating agent, etc., are mentioned. Among them, rosin based nucleating agent is especially preferable in view of high effect of improving product quality and productivity by crystallization acceleration. As examples of these especially preferable rosin based nucleating agent, "PINECRYSTAL" produced by Arakawa Chemical Ind. Ltd. (type name: KM-1300, KM-1500, KM-1600, etc.), etc., are mentioned.

As the β-crystal nucleating agent, same nucleating agent as shown in the first to third configurations of this invention can be used.

Regarding these nucleating agents, when it is added to polypropylene resin constituting the B layer, since there are some cases in which a void which penetrates through both sides of film (so-called through hole) is formed, its selection should be careful. When a through hole is formed, because smoothness worsens or surface glossiness decreases, sensitivity may worsen when processed to the receiving sheet by providing a receiving layer on the B layer, or when a receiving layer (anchor layer) is provided by coating a solution prepared beforehand, the coated solution penetrates inside the film and a receiving layer may not be formed well.

Regarding the amount to be added of the above-mentioned crystal nucleating agent, although it depends on type of the crystal nucleating agent, it is preferable to be 0.001 to 1 % by weight per total amount of the whole resin of the B layer. If the added amount of the crystal nucleating agent is less than the above-mentioned range, the effect of decreasing $t_{1/2}$ may not be obtained. When the added amount of the crystal nucleating agent is more than the above-mentioned range, even if it is added more than that, $t_{1/2}$ is not shortened, and economical efficiency may worsen, slipperiness may worsen and glossiness may become outside the range of this invention or dispersibility of the nucleating agent may worsen and thereby may generate a surface defect. The amount of the nucleating agent to be added is, more preferably, 0.01 to 0.8 % by weight. Moreover, since α-crystal nucleating agent decreases β-crystal forming activity of β-crystal nucleating agent in some cases, when film containing α-crystal nucleating agent is recycled to an A layer, in order to achieve predetermined β-crystal ratio, it is necessary to control the amount of α-crystal nucleating agent to be added.

For the B layer of the white film of the fourth configuration of this invention, it is preferable to use the above-mentioned HMS-PP. Since melt extrusion stabilizing effect and the above-mentioned improving effect on product quality and productivity by acceleration of crystallization are significant, it is especially preferable to use a polypropylene having a long-chain branch in its main chain.

The amount to be added of the above-mentioned HMS-PP, although it depends on properties of HMS-PP used, it is preferable to be 1 to 20 % by weight per total amount of the whole resin of the B layer. If the added amount of HMS-PP is less than the above-mentioned range, the effect of decreasing $t_{1/2}$ may not be obtained. If the added amount of HMS-PP is more than the above-mentioned range, even if it is added more that, $t_{1/2}$ is not shortened, and economical efficiency may worsen. The amount of HMS-PP to be added is, more preferably, 1 to 15 % by weight.

It is preferable that the crystallization temperature (Tc) of the B layer of the white film of the fourth configuration of this invention is 115˚C or more. Here, Tc is, similar to that of $t_{1/2}$, a value measured for the whole resin of the B layer. If Tc of the B layer is less than the above-mentioned range, in casting process, when a molten polymer is solidified on a metal drum maintained at a high temperature higher than 100˚C, especially when rotating speed of the drum is high, the solidification is not finished before leaving the sheet from the drum, and the undrawn sheet may stick to the drum. Tc is, more preferably, 119˚C or more. In addition, the higher the Tc of the B layer, adhesion or defect is more unlikely to be generated even by high temperature-high speed casting, and a white film having a similar quality as in a case of low temperature·low rotating speed may be obtained. An upper limit is not determined especially, but if it is too high, since co-drawability with the A layer may worsen or adhesion to the receiving layer (or anchor layer) may worsen when it is processed to a receiving sheet for thermal transfer recording by providing a receiving layer on the B layer, for example, it is preferable to be 150˚C or lower. The Tc of the B layer can be controlled by crystallinity of polypropylene (II, etc.), by amounts to be added of the above exemplified crystal nucleating agent or HMS-PP, or by amount to be added of the immiscible resin, inorganic particle, organic particle, etc. exemplified below. The Tc of the B layer is, more preferably, 120 to 145˚C, most preferably, 123 to 130˚C.

It is preferable that the isotactic index (II) of the polypropylene constituting the B layer of the white film of the fourth configuration of this invention is 95 to 99.8 %. If the II is less than the above-mentioned range, heat resistance against heat from thermal head is inferior when used as a receiving sheet for thermal transfer recording by providing a receiving layer on the B layer, and sensitivity becomes low depending on transferring energy. If the II exceeds the above-mentioned range, in production process of white film, a breakage is generated and drawability may become inferior. The II of the polypropylene resin constituting the B layer is, more preferably, 97 to 99.5 %.

The void ratio of the B layer of the white film of the fourth configuration of this invention is preferably 0.1 to 5 %. Here, the void ratio of the B layer is, as mentioned below, the ratio occupied by void in skin layer when the cross-section of a film prepared in a specified condition is observed by SEM under a specified condition. If the void ratio is less than the above-mentioned range, sensitivity at low energy may decrease when used as a receiving sheet for thermal transfer recording by providing a receiving layer on the B layer, or, for this reason, high speed printing ability may become inferior. If the void ratio of the B layer exceeds the above-mentioned range, B layer surface of the white film becomes easy to be broken in layers (skilled in the art says this phenomena as becoming easy to be cleaved), and apparent adhesion with receiving layer (or anchor layer) may worsen when processed into a receiving sheet for thermal transfer recording by providing a receiving layer on the B layer. The void ratio of the B layer is, more preferably, 0.2 to 3 %, still more preferably, 0.2 to 2 %.

In order to form a void of the above-mentioned configuration in the B layer, in its production process, it is important to adjust the surface temperature of the metal drum of the undrawn sheet production process, for example, at a high temperature of 100 to 130˚C. However, in order to accelerate the void formation, the immiscible resin, inorganic particle, organic particle, etc. mentioned below, may be added to the polypropylene which constitutes the B layer. Here, these additions, not only accelerate void formation, of course, but also may be effective for improving slipperiness by forming fine protrusion on the film surface.

As the above-mentioned immiscible resin which can preferably be added to the B layer, although not limited thereto, the resin immiscible to the polypropylene resin which can be added to the B layer of the white film disclosed in the second and third configurations of this invention can similarly be used.

As the immiscible resin used in the B layer of the white film of the fourth configuration of this invention, in view of its handling, production cost (price of raw material), dispersibility in polypropylene and void formation, it is especially preferable to use publicly known polymethylpentene, polycarbonate, saturated polyester, etc.

As the above-mentioned polymethylpentene, although publicly known product can be used, it is preferable that its melt flow rate (MFR; measured under conditions of 260˚C, 5 kg) is 5 to 100 g/10 min. If the MFR is less than the above-mentioned range, or exceeds the above-mentioned range, polymethylpentene component coarsening in the polypropylene is formed and big and rough void may be formed in the B layer, and the B layer may cleave easily. The MFR of the polymethylpentene is, more preferably, 8 to 80 g/10 min, still more preferably, 10 to 60 g/10 min.

Moreover, MFR of the above-mentioned polycarbonate (measured under conditions of 300˚C and 1.2 kg) is preferably 10 to 100 g/10 min. If the MFR is less than the above-mentioned range, or exceeds the above-mentioned range, polycarbonate component coarsening in the polypropylene is formed and big and rough void may be formed in the B layer, and the B layer may cleave easily. The MFR is, more preferably, 20 to 80 g/10 min.

Moreover, glass transition temperature (Tg) of the above-mentioned polycarbonate is preferably 100 to 180˚C. If Tg is lower than the above-mentioned range, when void is formed in the B layer during the process of biaxial stretching, polycarbonate may collapse and a void may not be formed. If the Tg exceeds the above-mentioned range, polycarbonate component coatsening in the polypropylene is formed and big and rough void may be formed in the B layer, and the B layer may cleave easily. The Tg is preferably, 120 to 170˚C. In addition, it is the same when other amorphous resin is used as the immiscible resin, and, it is preferable that its Tg satisfy the above-mentioned range.

The amount of the immiscible resin to be added to the B layer of the white film of the fourth configuration of this invention is preferably 1 to 10 % by weight per total amount of the whole resin of the B layer. If the added amount of the immiscible resin is less than the above-mentioned range, substantial amount of void may not be formed. If the added amount of the immiscible resin exceeds the above-mentioned range, more than necessary amount of void is formed and the B layer may easily cleave. The amount of the immiscible resin to be added is, preferably, 1 to 8 % by weight, more preferably, 2 to 5 % by weight.

And, average dispersed diameter of the above-mentioned immiscible resin is preferably 0.2 to 2 $\mu$m. If the average dispersed diameter is less than the above-mentioned range, a substantial amount of void may not be formed. If the average dispersed diameter exceeds the above-mentioned range, in the production process of the white film or the receiving sheet for thermal transfer recording, the immiscible resin may fall out or big and rough void may be formed, the B layer may easily cleave. The average dispersed diameter of the immiscible resin is, more preferably, 0.3 to 1.5 $\mu$m.

And, as inorganic particles which can preferably be added to the B layer of the white film of the fourth configuration of this invention, although not limited thereto, for example, at least one type of particles selected from wet and dry silica, colloidal silica, aluminum silicate, titanium oxide, calcium carbonate, calcium phosphate, barium sulfate, alumina, magnesium carbonate, zinc carbonate, titanium oxide, zinc oxide (zinc white), antimony oxide, cerium oxide, zirconium oxide, tin oxide, lanthanum oxide, magnesium oxide, barium carbonate, zinc carbonate, basic lead carbonate (white lead), barium sulfate, calcium sulfate, lead sulfate, zinc sulfide, mica, mica-titanium, talc, clay, kaolin, lithium fluoride, calcium fluoride, etc., are mentioned.

The above-mentioned organic particle is a particle obtained by crosslinking a polymer compound with a crosslinking agent. As organic particle which can preferably be added to the B layer, although not limited thereto, for example, at least one type of particles selected from crosslinked particle of a polymethoxysilane based compound, crosslinked particle of a polystyrene based compound, crosslinked particle of an acryl based compound, crosslinked particle of a polyurethane based compound, crosslinked particle of a polyester based compound, crosslinked particle of a fluoride based compound, can be mentioned.

Amount of the inorganic particle or the organic particle to be added is preferably 0.03 to 5 % by weight per total amount of the whole resin of the B layer. If the added amount is less than the above-mentioned range, a substantial amount' of void may not be formed in the B layer, or slipperiness may not be much improved compared to a case without the addition. If the added amount exceeds the above-mentioned range, in the production process of the white film or the receiving sheet for thermal transfer recording, the particle may fall out and may soil the production process. The amount of the inorganic particle or the organic particle to be added is, more preferably, 0.05 to 3 % by weight.

And, these inorganic particle or organic particle, even in a case in which it is not necessary to form a substantial amount of void in the B layer, may be added in order to improve slipperiness of film. In this case, amount to be added is preferably 0.02 to 1 % by weight, in view of preventing blocking, improving slipperiness, etc. More preferably, it is 0.05 to 0.5 % by weight.

The above-mentioned inorganic particle or organic particle is preferably spherical, since it little falls out in the production process of the white film or the receiving sheet for thermal transfer recording.

It is preferable that the average particle diameter of the inorganic particle or organic particles to be added to the B layer of the white film of the fourth configuration of this invention is 0.5 to 5 $\mu$m. If the average particle diameter is less than the above-mentioned range, a substantial amount of void may not be formed in the B layer, or slipperiness may not be much improved compared to a case without the addition. If the average particle diameter exceeds the above-mentioned range, in the production process of the white film or the receiving sheet for thermal transfer recording, the particle may fall out and film surface will easily get damaged when the film is superposed and rubbed with each other. The average diameter of the inorganic particle or the organic particle is, more preferably, 0.8 to 3 $\mu$m.

It is preferable not to substantially add the above-mentioned immiscible resin, inorganic particle or organic particle in case where, in the production process of the white film or the receiving sheet for thermal transfer recording, it falls out and may soil the process. And, the amount to be added may be selected suitably.

Thickness of the B layer of the white film of the second to fourth configurations of this invention is in the range of 0.1 to 5μm, and it is preferable to be laminated to both sides of the A layer, because driving property in the film formation process and the production process of a receiving sheet for thermal transfer recording is good and a cleavage can be prevented. If the thickness of the B layer is less than the above-mentioned range, it may become difficult to laminate in uniform thickness or worsen crease resistance. If the thickness of the B layer exceeds the above-mentioned range, sensitivity may worsen when it is processed to a receiving sheet for thermal transfer recording by providing a receiving layer on the B layer. The thickness of the B layer is, preferably, 0.5 to 4 μm, more preferably, 1 to 4 μm.

In addition, it is necessary that the surface glossiness of the white film of the first configuration of this invention and the B layer of the white film of the second and third configuration of this invention is 10 to 145%. If the surface glossiness is less than 10 %, when used as a receiving sheet for thermal transfer recording, image or character becomes unclear, and if it exceeds 145 %, image or character becomes hard to read due to reflection, and both are not preferable.

The surface glossiness of the B layer of the white film of the fourth configuration of this invention is 30 to 145 %.

Here, the glossiness of the B layer is the value measured on the B layer surface of the white film. If the B layer is laminated on both sides of the A layer, the purpose of this invention is satisfied if any one of the surface glossiness of the B layer meet the above-mentioned range. By making the surface glossiness in the above-mentioned range, when an image is printed on a receiving sheet for thermal transfer recording in which a white film of this invention is used as a substrate, an excellent image visibility can be realized without making image and character unclear and without reflecting light on the receiving sheet which makes image and character hard to read. The surface glossiness can be controlled by crystallinity (II or mmmm, etc.) or raw material composition of polypropylene resin constituting of the B layer to be evaluated, crystallization condition at solidification of molten polymer at casting process or stretching condition at stretching process, etc. Among these, especially when β-crystal nucleating agent is added to the B layer, since, as mentioned above, a void which penetrates through both sides (so-called penetrated hole) in the white film obtained may be formed and surface glossiness may fall, its selection needs carefulness. The surface glossiness of the B layer, more preferably, 70 to 130 %, still more preferably, 85 to 128 %.

Average surface roughness (Ra) of the white film of the first configuration of this invention and of the B layer of the white film of the second and third configuration of this invention is, preferably, in the range of 0.02 to 1 μm. Average surface roughness (Ra) of the B layer of the white film of the fourth configuration of this invention is, being smoothened by speed up of $t_{1/2}$, preferably 0.01 to 0.5 μm. If Ra is less than the above-mentioned range, slipperiness of the white film worsens and creases may be formed in the white film or in the receiving sheet in the production process of the film or the receiving sheet for thermal transfer recording. If Ra exceeds 1μm, surface glossiness unnecessarily decreases, or the white film or the receiving sheet may be damaged when passed on metal drum at winding process during white film formation or at processing process in the production process of the receiving sheet for thermal transfer recording. The average roughness (Ra) can be controlled by crystallinity (II or mmmm, etc.) of the polypropylene (or polypropylene based resin) used for the B layer or crystallization condition at solidification of molten polymer in casting process (metal drum temperature, rotating speed of metal drum and thickness of undrawn sheet obtained) or by the stretching conditions in stretching process (stretching direction (longitudinal or transverse), by stretching method (longitudinal-transverse or transverse-longitudinal sequential biaxial stretching, simultaneous biaxial stretching, re-stretching after biaxial stretching, etc.), or by draw ratio, stretching speed, stretching temperature, etc.)etc. Ra is, more preferably, 0.05 to 0.50 μm, still more preferably, 0.15 to 0.45 μm.

To the white film of the second to fourth configuration of this invention, other layer (hereafter, may be abbreviated simply as C layer) other than the above-mentioned B layer may be laminated as a skin layer. When the C layer is laminated and a three layer laminate is formed, its film constitution becomes B layer/A layer/C layer (/ denotes interface). When the white film of this constitution is processed to a receiving sheet for thermal transfer recording, the receiving layer (anchor layer) may be provided on the B layer or on the C layer, but it is especially preferable that, in the white film production process, at the time of undrawn sheet production, a high speed film formation is carried out by making B layer side closely contact with metal drum, and at production process of the receiving sheet for thermal transfer recording, the receiving layer is provided on the C layer which is provided on the reverse side of the B layer. By this way, the white film can be produced at high speed and, at the same time, the adhesion strength of the receiving layer can be improved by properly selecting C layer.

It is preferable that the resin constituting the above-mentioned C layer is polyolefin based resin, in view of adhesion between the C layer and the neighboring layer, etc, and it is more preferable that the resin is polypropylene resin in view of thermal resistance of the film, etc.

Although it is preferable that the polypropylene resin constituting the above-mentioned C layer mainly consists of homopolymers of propylene, as long as the purpose of this invention is not impaired, it may be a polymer in which propylene and other monomer component of unsaturated hydrocarbon are copolymerized, or a polymer in which polypropylene and monomer component other than propylene is copolymerized may be blended, or a (co)polymer of monomer component of unsaturated hydrocarbon other than propylene may be blended. As these copolymerizing component or monomer component constituting blended product, although, not especially limited, for example, ethylene, propylene (in case of copolymerized blended product), 1-butene, 1-pentene, 3-methyl pentene-1, 3-methylbutene-1, 1-hexene, 4-methyl pentene-1, 5-ethyl hexene-1, 1-octene, 1-decene, 1-dodecen, vinyl cyclohexene, styrene, allyl benzene, cyclopentene, norbornene, 5-methyl-2-norbornene, acrylic acid and derivatives thereof, are mentioned.

In case where a receiving layer (anchor layer) is provided on the C layer, among them, it is especially preferable to use polypropylene of low stereoregularity or ethylene·propylene random copolymer for compatibility between the co-drawability with the A layer and the adhesion to the receiving layer (anchor layer).

The stereoregularity (mmmm) of the above-mentioned low stereoregular polypropylene is preferably 70 to 90 % in view of adhesion to the receiving layer (anchor layer). If mmmm is less than the above-mentioned range, when used as a receiving sheet for thermal transfer recording by forming a receiving layer (anchor layer) on the B layer, thermal resistance against heat from thermal head may be inferior and sensitivity may worsen depending on transfer energy. If mmmm exceeds the above-mentioned range, adhesion strength to the receiving layer (anchor layer) may substantially not increase. mmmm is more preferably 72 to 85 %. Here, ethylene may be copolymerized to the low stereoregular polypropylene, since the adhesion strength to the receiving layer (anchor layer) may further be improved.

It is preferable that the copolymerization ratio of ethylene in the ethylene·propylene random copolymer of the above-mentioned C layer is 1 to 5 % by weight. If the copolymerization ratio of ethylene is less than the above-mentioned range, the adhesion to the receiving layer (anchor layer) may not be improved. If the copolymerization ratio of ethylene exceeds the above-mentioned range, when used as a receiving sheet for thermal transfer recording by forming a receiving layer on the B layer, thermal resistance against heat from thermal head may be inferior and sensitivity may worsen depending on transfer energy. The copolymerization ratio of ethylene is, more preferably, 1 to 3 % by weight.

Thickness of said C layer is preferably 0.1 to 5 $\mu$m. If the thickness of C layer is less than the above-mentioned range, lamination in uniform thickness may become difficult. If the thickness of C layer exceeds the above-mentioned range, when processed into a receiving sheet for thermal transfer recording by providing a receiving layer on C layer, sensitivity may worsen. The thickness of the C layer is preferably 0.5 to 4 $\mu$m, more preferably, 1 to 4 $\mu$m.

As the laminating method of C layer, co-extrusion, inline·offline extrusion laminate, inline·offline coating, physical vapor deposition, chemical vapor deposition, sputtering, etc. are mentioned, but it is not limited to any of them, and any best method may be selected at any time. When lamination is carried out simply in B layer/A layer/C layer constitution, co-extrusion is preferable in view of low lamination cost.

In the A layer, B layer and C layer, of the white film of the fourth configuration of this invention, publicly known additives other than the above-mentioned, for example, antioxidant, thermal stabilizer, antistatic agent, lubricant, anti-blocking agent, filler, etc. may be included to such an extent that the purpose of this invention is not impaired.

Specific gravity of the white film of the first to third configuration of this invention is preferably 0.2 to 0.8. And, specific gravity of the white film of the fourth configuration of this invention is 0.3 to 0.7. By controlling the specific gravity in this range, sensitivity is high when processed into a receiving sheet for thermal transfer recording, and mechanical.strength is moderately high, and windability and processability is excellent in the production process of the white film and the receiving sheet for thermal transfer recording. The specific gravity of the white film of this invention can be controlled by the amount of β-crystal nucleating agent preferably added to polypropylene resin or by the ratio of thicknesses of A layer, B layer and C layer, and in its production process, by the crystallizing condition at solidifying molten polymer in casting process, by stretching condition in stretching process, or by heat treating condition, etc. Among these, in casting process, it is especially important to uniformly generate dense β-crystals in the white film of the first configuration and in the A layer of the white film of the second to fourth configuration and, in the stretching process, areal ratio, especially longitudinal draw ratio, etc. The lower the specific gravity of the white film of this invention, the higher the sensitivity may be when processed into a receiving sheet for thermal transfer recording, and it is preferable. However, if it is too low, in the production process of the white film or the receiving sheet for thermal transfer recording, the film may be elongated, or crease may be generated, or the film may be broken (skilled in the art says, when these phenomena are observed, that the film is inferior in processability), or crease resistance may worsen. The specific gravity of the white film of this invention is, more preferably, 0. 33 to 0. 69, still more preferably, 0. 35 to 0. 65, most preferably, 0.35 to 0.62.

In addition, it is preferable that thermal conductivity of the white film of the first to third configuration of this invention is less than 0.14 W/mK, and preferably less than 0.12 W/mK, in view of increasing sensitivity of the receiving sheet for thermal transfer recording. If the thermal conductivity exceeds 0.14 W/mK, the heat of thermal head of printer diffuses and transferring ability from printer ribbon decreases to thereby decrease sensitivity (color development property) of receiving sheet for thermal transfer recording, and it is not preferable. It is preferable that the lower limit of the thermal conductivity is 0.03 W/mK in view of the thickness constitution of A layer and B layers, void ratio and total thickness of the biaxially oriented white polypropylene film of this invention.

It is preferable that the white film of first to fourth configurations of this invention has a whiteness of more than 50 %, an L value of more than 50, an a value of -2 to 5 and a b value of -4 to -0.01, in view of increasing sensitivity of receiving sheet for thermal transfer recording.

Color difference is, as described in JIS Z 8722 (2000) or JIS Z 8730 (2002), using Colorimeter SE-2000 produced by Nippon Denshoku Ind. which is designed based on the color difference formula of Richard S. Hunter, the whiteness, L value, a value and b value of sample measured by the reflection method. The whiteness is determined according to the following formula from Y, Z values in X, Y and Z values which indicate three stimulus values of color.

$$\text{Whiteness (\%)} = 4 \times 0.847 \times Z \text{ value} - 3 \times Y \text{ value}$$

The barometers, L, a, b are conceived by Richard S. Hunter, and are used in color indicator which is appropriate for quality control of color, and have been widely used in U.S. and Japan. In the color indicator, the position of sample color in color solid can be determined by L, a and b values. The greater the L value, the higher the lightness, that is, it means to be light. It is indicated that, the larger the a value in (+) side, the higher the degree of red, and, the larger in (-) side, the higher the degree of green. It is indicated that the larger the b value in (+) side, the higher the degree of yellow, and, the larger in (-) side, the higher the degree of blue.

It is preferable that the whiteness of the white film of the first to fourth configuration of this invention is in the range of 50 to 100 %. If the whiteness is less than the above-mentioned range, image may become dark as a whole when the image is printed on the receiving sheet for thermal transfer recording. The whiteness is, more preferably, 60 to 100 %.

L value of the white film of this invention is preferably more than 50. If the L value is less than the above-mentioned range, image may look unclear when processed into a receiving sheet for thermal transfer recording. L value is, more preferably, 60 to 100. It is preferable that a value of the white film of the first to fourth configurations of this invention is -2 to 5. If a value is higher than the above-mentioned range in + side, image may look reddish as a whole when the image is printed on the receiving sheet for thermal transfer recording. If a value is lower than the above-mentioned range in the "minus" side, image may look greenish. a value is, more preferably, -0.02 to 3, still more preferably -0.02 to 1.

b value of the white film of the first to fourth configurations of this invention is preferably -5 to -0.01. If b value is higher than the above-mentioned range in + side, an image may look yellowish as a whole, when the image is printed on a receiving sheet for thermal transfer recording, especially tint color such as flesh color may look yellowish. If b value is lower than the above-mentioned range in - side, image may look bluish. b value is, more preferably, -4.5 to -2.7.

It is preferable that the optical density (OD) of the white film of the first to fourth configurations of this invention is 0.4 to 1. If OD is less than the above-mentioned range, an image impression may be dark when the image is printed on the receiving sheet for thermal transfer recording. OD changes depending on thickness of film, and in this invention, if it is in the above-mentioned range at film thickness of 35 $\mu$m, the whiteness and L, a, b values of film can probably be made into the preferable range. OD of the white film of this invention is, more preferably, 0.65 to 0.82.

The whiteness, L, a, b values and OD of the white film of the first to fourth configurations of this invention can be controlled by the amount of β-crystal nucleating agent which is preferably added to polypropylene resin, by the ratio of thicknesses of A layer and skin layer (B layer and C layer), and, in its production process, by the crystallization condition at solidifying the molten polymer in casting process or by stretching condition at stretching process, etc.

It is preferable that the cushion factor of the white film of the first to fourth configurations of this invention is 15 to 30 %. If the cushion factor is less than the above-mentioned range, a receiving sheet for thermal transfer recording becomes hard to closely contact with thermal head to thereby diffuse heat from the thermal head and may worsen transfer ability (sensitivity falls) from transfer sheet (ink ribbon). If the cushion factor exceeds the above-mentioned range, crease resistance of receiving sheet for thermal transfer recording may worsen. The cushion factor can be controlled by the amount of β-crystal nucleating agent preferably added to polypropylene resin of A layer, by the ratio of thicknesses of A layer and skin layer (B layer and C layer), by the crystallinity of polypropylenes (or polypropylene besed resins) used in A layer, B layer and C layer, and, in its production process, by the crystallization condition at solidifying the molten polymer in casting process or by stretching condition at stretching process, etc. The cushion factor is, more preferably, 16 to 25 %.

It is preferable that the thickness of the white film of the first to fourth configurations of this invention is 10 to 100$\mu$m, in view of productivity of the white film, and sensitivity and crease resistance of the receiving sheet for thermal transfer recording. The thickness of the white film of this invention is, more preferably, 20 to 60 $\mu$m.

It can preferably be applied that at least one surface of the white film of the first to fourth configurations of this invention is subjected to corona discharge treatment to thereby make wet tension of the film surface to 35 mN/m or more, in order to increase adhesion strength between the treated surface and a receiving layer (anchor layer) and adhesion strength between the treated surface and other material exemplified below. In this instance, as atmospheric gas at the corona discharge treatment, at least one type of gas selected from air, oxygen, nitrogen, carbon dioxide, etc., are mentioned. Among these, it is preferable to use air in view of economics and it is preferable to use nitrogen/carbon dioxide mixture system, in view of the above-mentioned adhesion improvement. The surface wet tension is, more preferably, 37 mN/m or more. Upper limit of the surface wet tension is not determined especially, but an excess surface treatment may deteriorate the surface and the above-mentioned adhesion strength may worsen on the contrary, therefore, 60 mN/m or less is preferable.

On at least one surface of the white film of the first to fourth configurations of this invention, in order to increase adhesion strength between the white film and a receiving layer, an anchor layer may be provided. The constitution of the receiving layer of this case becomes white film/anchor layer/receiving layer. In addition, the anchor layer may be provided on any one of the white film of the first configuration and core layer (A layer; in case of only one side laminated B layer) and skin layer (B layer, C layer) of the white film of the second to fourth configurations, but since adhesion strength can be controlled by suitably selecting resin composition, it is especially preferable to be provided on the skin layer.

Regarding the resin constituting the above-mentioned anchor layer, although it is not especially limited as long as it can substantially increase the adhesion strength between the white film and the receiving layer, for example, it is preferably at least one type of resins selected from acryl based resin, polyester based resin, polyurethane based resin and the like. In view of adhesion strength with the white film, it is preferable that these resins are prepared as a coating material dissolved or dispersed in an organic solvent or water, and it is also preferable that this is provided on the white film by a coating method.

As the above-mentioned acryl based resin, although not especially limited, for example, at least one type of resins selected from ethylene·acrylic acid copolymer, ethylene·acrylate copolymer, ethylene·methacrylic acid copolymer, ethylene·methacrylate copolymer and the like, is mentioned.

It is preferable that the above-mentioned polyester resin is, although not especially limited, for example, aromatic polyester.

As the above-mentioned polyurethane resin, although not especially limited, for example, polyether based urethane and polyester based urethane of ionomer type, etc., are mentioned. Trimethyl adipic acid, sebacic acid, malonic acid, dimethyl malonic acid, succinic acid, glutaric acid, pimelic acid, 2,2-dimethyl glutaric acid, azelaic acid, fumaric acid, maleic acid, itaconic acid, 1,3-cyclopentane dicarboxylic acid, 1,2-cyclohexane dicarboxylic acid, 1,4-cyclohexane dicarboxylic acid, 1,4-naphthalic acid, diphenic acid, 4,4'-oxy-benzoic acid, 2,5- naphthalene dicarboxylic acid, etc., can be used.

And, as diol component of the polyester urethane based resin, aliphatic glycols such as ethylene glycol, 1,4-butanediol, diethylene glycol, and triethylene glycol, aromatic diols such as 1,4-cyclohexane dimethanol, poly(oxyalkylene)glycols such as polyethylene glycol, polypropylene glycol and polytetramethylene glycol, are mentioned.

In addition, in the polyester urethane based resin, other than the dicarboxylic acid component and the diol component, oxycarboxylic acid such as p-oxybenzoic acid or acrylic acid (and derivative thereof) may be copolymerized, and further, although these are of linear structure, the resin can be made into a branched polyester using ester formable component of trivalent or more.

As the polyisocyanate, hexamethylene di-isocyanate, diphenylmethane diisocyanate, tolylene diisocyanate, isophorone diisocyanate, tetramethylene diisocyanate, xylylene diisocyanate, lysine diisocyanate, addition condensation product of tolylene diisocyanate with trimethylol propane and addition condensation product of hexamethylene diisocyanate with trimethylolethane, etc., can be mentioned.

And, as the chain extender, pendant carboxyl group containing diols, or glycols such as ethylene glycol, diethylene glycol, propylene glycol, 1,4-butanediol, hexamethylene glycol and neopentyl glycol, or diamines such as ethylenediamine, propylenediamine, hexamethylenediamine, phenylenediamine, tolylenediamine, diphenyl diamine, diamino diphenylmethane, diamino diphenylmethane, and diamino cyclohexyl methane, etc., are mentioned.

As examples of the polyester urethane based resin, "HYDRAN" (type name: AP-40F etc.) etc. produced by Dainippon Ink & Chemicals, Inc., are mentioned.

And, when an anchor layer is formed, in order to improve film form ability and adhesive strength with the white film, it is preferable to add to the above-mentioned coating material, as water-soluble organic solvent, at least one or more kinds of organic solvents selected from N-methyl pyrrolidone, ethyl cellosolve acetate and dimethylformamide, etc. In particular, N-methyl pyrrolidone is preferable since its effect of improving film formability and adhesive strength is significant.

Regarding the amount to be added of the above-mentioned organic solvent, 1 to 15 parts by weight per 100 parts by weight of polyester urethane based resin is preferable in view of preventing inflammability and odor aggravation of the coating material, and still more preferably, it is 3 to 10 parts by weight.

Furthermore, it is preferable to introduce a crosslinked structure in the water dispersible polyester urethane based resin to improve adhesive strength between the anchor layer and the white film. As methods for preparing such coating material, the methods of Japanese Patent Laid Open No. Shou 63-15816, Japanese Patent Laid Open No. Shou 63-256651 and Japanese Patent Laid Open No. Hei 5-152159 are mentioned.

As the above-mentioned crosslinking agent, at least one kind of cross linking agent selected from isocyanate based compound, epoxy based compound and amine based compound, is mentioned, and it is added to the coating material, if necessary.

As the above-mentioned isocyanate based compound, although it is not limited thereto, for example, toluene diisocyanate, xylene diisocyanate, naphthalene diisocyanate, hexamethylene diisocyanate, isophorone diisocyanate, etc., as mentioned above, are mentioned.

As the above-mentioned epoxy based compound, although it is not limited thereto, for example, diglycidyl ether of bisphenol A and oligomer thereof, diglycidyl ether of hydrogenated bisphenol A and oligomer thereof, orthophthalic acid diglycidyl ether, isophthalic acid diglycidyl ether, terephthalic acid diglycidyl ether, adipic acid diglycidyl ether, etc., are exemplified.

As the above-mentioned amine based compound, although it is not limited thereto, for example, amine compound such as melamine, urea, benzoguanamine, etc., amino resin obtained by addition condensation of the above-mentioned amino compound with formaldehyde or alcohol having 1 to 6 carbon atoms, hexamethylenediamine, triethanolamine, etc., are mentioned.

In order to improve adhesion strength with the white film of the first to fourth configurations of this invention, it is preferable to add an amine based compound to the anchor layer (coating material). As an example of the amine based compound used as cross linking agent, "BEKKAMIN" (type name: APM etc.) produced by Dainippon Ink & Chemicals, Inc., etc., is mentioned. It is preferable that the amount to be added of the above-mentioned cross linking agent is 1 to 15 parts by weight per 100 parts by weight of the mixed coating material of said water-soluble polyester urethane based resin and the water-soluble organic solvent, in view of improving chemical resistance and preventing aggravation of waterproof property, and more preferably, it is 3 to 10 parts by weight. If the added amount of the cross linking agent is under the above-mentioned range, an adhesion improvement effect may not be acquired, and if it exceeds the above-mentioned range, the adhesive strength between the anchor layer and the white film may decrease, presumably due to unreacted cross linking agent remained.

In addition, in order to completely crosslink and cure the above-mentioned skin layer composition during the time for forming the white film of the first to fourth configurations of this invention, in the anchor layer (coating material), a small amount of crosslinking accelerator may be added.

It is preferable that the crosslinking accelerator added to the anchor layer, since its crosslinking accelerating effect is large, is a water-soluble, acidic compound. As the crosslinking accelerator, for example, terephthalic acid, isophthalic acid, 2,6-naphthalene dicarboxylic acid, adipic acid, trimethyl adipic acid, sebacic acid, malonic acid, dimethyl malonic acid, succinic acid, glutaric acid, sulfonic acid, pimelic acid, 2,2-dimethyl glutaric acid, azelaic acid, fumaric acid, maleic acid, itaconic acid, 1,3-cyclopentane dicarboxylic acid, 1,2-cyclohexane dicarboxylic acid, 1,4-cyclohexane dicarboxylic acid, 1,4-naphthalic acid, diphenic acid, 4,4'-oxybenzoic acid, 2,5 -naphthalene dicarboxylic acid, etc., are mentioned.

As an example of the above-mentioned crosslinking accelerator, "CATALYST" (type name: PTS, etc.) produced by Dainippon Ink & Chemicals, Inc., etc., are mentioned.

As the coating method, coating method using a reverse roll coater, a gravure coater, a rod coater, an air doctor coater, or publicly known coaters other than these, is preferable.

It is preferable that the glossiness of the receiving layer surface of the receiving sheet for thermal transfer recording after coating the receiving layer on the white film of this invention is 50% or more since an image becomes clear, when the image is printed on the receiving sheet. The glossiness of the receiving layer surface is, more preferably, 70% or more. Since, as the glossiness of the receiving layer surface becomes higher, the above-mentioned effect becomes higher, which is preferable, an upper limit is not determined.

The receiving sheet for thermal transfer recording using the white film of the first to fourth configuration of this invention may be a receiving sheet in which the white film is used alone, or may be a receiving sheet to which other material is laminated. As the above-mentioned other material, although not limited thereto, for example, papers such as an ordinary paper, a high quality paper, a middle grade paper, a coated paper, an art paper, a cast coated paper, a resin impregnated paper, an emulsion impregnated paper, a latex impregnated paper, synthetic resin containing paper, a glassine paper and a laminated paper, synthetic papers, nonwoven fabrics or other type films are mentioned.

Moreover, in case where the other material is laminated to the white film of this invention, it is preferable to laminate it to the surface opposite to the surface to be provided with the receiving layer, since curl of the receiving sheet for thermal transfer recording can be made small.

And, it is preferable that the glossiness of a receiving layer surface after coating the receiving layer on the white film of the first to fourth configuration of this invention is 50% or more, since a character or an image transferred becomes clear, and it is, more preferably, 70% or more.

For manufacturing the white film of the first to fourth configurations of this invention, longitudinal-transverse or transverse-longitudinal sequential biaxial stretching method, simultaneous biaxial stretching method, and further, re-stretching after biaxial stretching, etc., can be used and; although it is not especially limited, it is preferable to use the longitudinal-transverse sequential biaxial stretching method which is excelled in productivity and applicability of apparatus. An example of the manufacturing method of the white film of this invention in which a longitudinal-transverse sequential biaxial stretching method is applied, is explained below, but this invention is not limited only to this example.

[Biaxially oriented white polypropylene film of the first configuration of this invention]

Polypropylene resin of β-crystal ratio of 30% or more is fed to an extruder heated to 180 to 280˚C and melted, and after filtration by a filter, it is extrusion molded by a monolayer T-die to obtain a molten sheet. At this time, HMS-PP or mLLDPE or the like may be added and mixed to the aboved-mentioned polypropylene. This molten sheet is contacted closely with a drum kept at a surface temperature of 90 to 130˚C, and then cooled and solidified by blowing air of 10 to 130˚C from non-drum side to obtain an undrawn sheet. At this time, the higher the drum temperature, the higher the void ratio of the film after biaxial stretching, and, the surface glossiness varies according to the blowing air temperature, i.e. the lower the temperature, the higher the glossiness.

Next, in order to form voids in the film to increase glossiness, the above-mentioned undrawn sheet is introduced to a group of rolls or an oven heated to 70 to 160˚C, passed through cooling rolls kept at 80 to 150˚C, drawn in length direction (longitudinal direction, namely running direction of film) 3 to 7 times by the rotating speed difference between the stretching rolls and the cooling rolls, and then, cooled with a group of rolls of 30 to 100˚C.
Then, the film drawn in length direction is introduced to a tenter by grasping both ends with clips, and drawn 5 to 12 times in direction perpendicular to length direction (transverse direction) in an atmosphere heated to 120 to 190˚C (film temperature: 100 to 165˚C). This makes void diameter in the film uniform and is preferable. The areal stretched ratio (longitudinal stretch ratio x transverse stretched ratio) is 15 times to 84 times, and in view of film formability, it is preferable to be 30 times to 60 times. If the areal draw ratio is less than 15 times, the glossiness of the obtained film is low, void formation is insufficient and film performance of this invention cannot be achieved. On the other hand, if the areal stretch ratio exceeds 84 times, the film tends to break at stretching process.

In order to complete crystal orientation of thus obtained biaxially oriented white polypropylene film and to impart smoothness and dimensional stability, it is successively heat treated in a tenter at 140 to 170˚C for 1 to 30 seconds, and then after cooled gradually and uniformly, by cooling to a room temperature and being wound, the white film of this invention can be obtained. Here, in the above-mentioned heat treatment process, 3 - 12 % relaxation treatment may be carried out to the transverse or longitudinal direction, if necessary. In addition, the biaxial stretching may be either of sequential biaxial stretching or simultaneous biaxial stretching, and after the biaxial stretching, the film may be re-stretched in any of longitudinal and transverse directions.

[Biaxially oriented white film of the second to fourth configurations of this invention]

In a multi-layer film formation apparatus having an extruder (a) and extruder (b), polypropylene resin as raw material for the above-mentioned A layer is fed to the extruder (a) to introduce into the multi-layer T-die. On the other hand, as raw material for B layer, the above-mentioned polyolefin based resin or polypropylene resin (homopolypropylene, polypropylene resin copolymerized with 5 % by weight or less of ethylene or α-olefin, or polypropylene resin having half crystallization time ($t_{1/2}$) of 60 seconds or less) is fed to the heated extruder (b), molten and kneaded at 180 to 280˚C, then after filtered by a filter, introduced into the multi-layer T-die to thereby laminate to one or both surfaces. At this time, in order to laminate the above-mentioned other layer, C layer, an extruder (c) is separately prepared and a resin for the C layer is molten and kneaded at 180 to 280˚C, and after filtered by a filter, it may be laminated in the multi-layer T-die to the surface opposite to the resin layer for B layer.

The multi-layer sheet to which this molten polymer is laminated is extruded, and solidified by closely contacting with a drum surface of which surface temperature is kept at 90 to 130˚C (skilled in the art says this process as casting process). Hereafter, the each layer constituting the above-mentioned multi-layer sheet which corresponds to A layer, B layer or C layer of the white film is called as Ac layer, Bc layer or Cc layer. Thickness constitution of the Ac layer, Bc layer and Cc layer and thickness of the film can be controlled by the amount of extrudate of molten polymer from each extruder. At this time, as the drum temperature becomes higher, the amount of generetion of β-crystal of the Ac layer becomes larger, therefore the specific gravity after biaxial stretching decreases, but if it is too high, sheet may stick to the drum, or a crater-like defect may generate on the surface of the sheet which contacts with the metal drum (hereafter, may be abbreviated simply as D side) after biaxial stretching. In the above-mentioned three-layered constitution of Bc layer/Ac layer/Cc layer, if the sheet is made to closely contact in Bc layer with the metal drum (Bc layer side of sheet confronts to D side), even if the drum temperature is elevated, or the drum rotating speed is made high, the sheet will not stick to the drum, and the amount of β-crystal generation of the undrawn sheet can be kept high. In addition, a crater-like defect does not generate on B layer surface after biaxial stretching.

At this time, it is preferable that the contact time onto metal drum is 3 to 60 seconds. Here, the contact time onto metal drum means, in the above-mentioned casting process, making the time at which molten polymer contacts first with drum surface as starting time (= 0 second), the time which needs until the time at which the undrawn sheet leaves the drum. If the contact time is less than the above-mentioned range, at the above-mentioned leaving point, the undrawn sheet may stick to the drum, or because the amount of β-crystal which generates in the undrawn sheet is small (because the β-crystal ratio of the undrawn sheet is low), specific gravity of the film after biaxial stretching may increase more than necessary. If the contact time exceeds the above-mentioned range, although it depends on size of metal drum, rotating speed of drum is low more than necessary, and productivity may greatly decreases. The contact time onto metal drum is, more preferably, 5 to 45 seconds, still more preferably, 7 to 20 seconds.

As the method for close contact with the above-mentioned cooling drum, any method selected from static discharge (pinning) method, method for close contact using surface tension of water, air knife method, press-roll method, in-water casting method, etc., may be used, but as the method for obtaining the white film of this invention, it is preferable to use the air knife method which is excellent in thickness control property and is capable of controlling cooling rate by temperature of blasting air.

Here, in the air knife method, air is blasted on the side of sheet which does not contact with metal drum (hereafter, it may simply be abbreviated as ND side). It is preferable that this air temperature is 10 to 130˚C, and by the air temperature, surface glossiness can be controlled, and glossiness increases as the air temperature becomes low.

Next, in order to form non-nucleus voids in the A layer of the film and to increase surface glossiness of at least one side of the film high, the above-mentioned undrawn sheet is pre-heated by introducing into a group of rolls or into an oven which is heated to 70 to 160˚C, and after elevating the film temperature to 80 to 150˚C, passed between a pair of rolls consisting of a hard chrome plated metal roll and a rubber roll (stretching rolls) kept at 80 to 140˚C and a pair of rolls consisting of a hard chrome plated metal roll and a rubber roll (cooling rolls) kept at 30 to 100˚C, drawn in length direction (running direction of film) 3 to 7 times by rotating speed difference between the stretching rolls and the cooling rolls; and then, cooled by a group of rolls of 30 to 100˚C.

Here, the above-mentioned film temperature and longitudinal draw ratio are important for controlling the specific gravity of the film after biaxial stretching. That is, as the film temperature becomes high, the specific gravity becomes low, and as the drawing ratio becomes high, the specific gravity becomes low. Moreover, there is capacity in the motor which drives the rolls. By suppressing drawing stress low, it becomes possible to draw by a motor of low capacity, thus, a plant investment becomes unnecessary. In the white film of this invention, as mentioned above, even at a high speed casting it is possible to increase β-crystal ratio while preventing sticking and defect. Therefore, it is possible to suppress drawing stress low because it is possible to achieve a predetermined specific gravity after biaxial stretching even if the film temperature is set high or the longitudinal draw ratio is set low.

Successively, the film drawn in longitudinal direction is introduced to a tenter by grasping both ends with clips, and drawn 5 to 12 times in the direction perpendicular to the longitudinal direction (transverse direction) in an atmosphere heated to 120 to 190˚C (film temperature: 100 to 165˚C).

Here, it is preferable that the areal drawn ratio (longitudinal draw ratio x transverse draw ratio) of longitudinal-transverse biaxial stretching is 15 times to 84 times, and in view of film formability, 30 to 60 times. If the areal draw ratio is less than the above-mentioned range, the glossiness of the white film after biaxial stretching is low, or the amount of generation of void is insufficient and film performance of this invention cannot be obtained. On the other hand, if the areal draw ratio exceeds the above-mentioned range, a lot of film breakage may occur at stretching process.

In order to complete crystal orientation of thus obtained biaxially oriented white polypropylene film and impart smoothness and dimensional stability, it is successively heat treated in a tenter at 140 to 170˚C for 1 to 30 seconds, and then after cooled gradually and uniformly, by cooling to a room temperature and being wound, the white film of this invention can be obtained. Here, in the above-mentioned heat treatment process, 3 - 12 % relaxation treatment may be carried out to the transverse or longitudinal direction, if necessary.

The surface of the white film of this invention thus obtained is, when it is coated with a receiving layer or it is laminated with the other substrate, subjected to a corona discharge treatment in the above-mentioned atmospheric gas to improve interlayer adhesion strength, and wound.

Here, it is possible in the production process of the white film to provide an anchor layer. That is, an inline coating method in which an acryl based resin, polyester based resin, polyurethane based resin or the like is coated on the above-mentioned longitudinally drawn film and the film is successively introduced into a tenter to draw transversely and dried, is preferably used since it is possible to provide an anchor layer in low cost. In the inline coating method, before providing the anchor layer, it is preferable that a corona discharge treatment is carried out beforehand to the surface to be provided the anchor layer, because it can increase adhesion strength between the white film and the anchor layer. As a matter of course, the anchor layer can be provided also by an offline coating method.

[Measuring Method and Evaluation Method of Properties]

The properties of this invention are determined according to the following evaluation method and standard.

(1) Judgment that A layer has substantially non-nucleus voids

By freeze microtome method, a cross sectional sample of the white film in transverse direction-thickness direction was obtained at -100˚C. After coating Pt on the cross section of the white film obtained, the cross section is observed by a scanning electron microscope (SEM) under the following conditions and a cross-sectional image is obtained. Here, preparation of sample and observation of cross section were carried out by Toray Research Center, Inc. (TRC).

- Equipment : super high-resolution field emission scanning electron microscope (UHR-FE-SEM S-900H) produced by Hitachi, Ltd.
- Acceleration voltage : 2kV
- Observation magnification : 5000 times.

Using the obtained cross-sectional image, all voids (independent void which has a boundary line) per 1000 $\mu m^2$ cross section were counted. Furthermore, the void which has a nucleus inside among all voids was counted, and the ratio of the number of voids which has a nucleus in inside per total number of voids was calculated in percentage (unit: %). Here, the cross-sectional images were obtained only for required number so that 1000 $\mu m^2$ observation area could be secured while changing observation portion.

In this invention, the A layer was observed by the above-mentioned method, and when the ratio of the number of voids which has a nucleus inside per total number of voids was 5 % or less, it was judged that said A layer has substantially non-nucleus voids, and was expressed as "○". On the other hand, the case where it exceeds 5 %, it was expressed as "x"

In addition, what "has a nucleus" means that, in an independent void having one boundary line, there is one or more immiscible resin, inorganic particle, or an organic particle which has spherical, or fibrous, or unfixed, or other shape, which can form a void in polypropylene.

(2) Half crystallization time ($t_{1/2}$)

It is measured according to JIS K 7122 (1987) using Thermal analyzer RDC220 type produced by Seiko Instruments Inc. A whole resin of B layer 5 mg (sample) was heated to 280˚C at a rate of 50˚C/min under nitrogen atmosphere. After completion of the temperature elevation, it was kept at 280˚C for 5 minutes. Successively, it was cooled to 125˚C at a rate of 50˚C/min. After the completion of the cooling, it was kept at 125˚C and the sample was crystallized under the same temperature. At this time, the time at which the temperature arrives first at 125˚C is put as starting time (= 0 min). After that an endothermic peak appears accompanying crystallization. In this invention, in a calorimetric curve of which horizontal line denotes time, measurement was carried out by defining $t_{1/2}$ as the time from the starting time to the time of the highest point of the exothermic peak (unit: second). Here, in a calorimetric curve of which horizontal line denotes time, when the exothermic peak appears before the above-mentioned starting time, namely, when the crystallization speed is extremely high such that it cannot be measured by this method, it is considered as 0 second. Here, as shape of sample, if it is whole resin of B layer, any shape may be allowed, but, it is preferable to be a chip. Or, the sample may be prepared by cutting out a necessary amount of B layer by a cutter knife or the like, from the skin layer of the white film (B layer). The same measurement is repeated five times for a same sample, and average value of the obtained $t_{1/2}$ was considered as $t_{1/2}$ of said sample.

(3) Specific gravity

The specific gravity of the white film is, by high resolution electronic densimeter SD-120L (product of Mirage Trade C., Ltd.), measured at 23˚C , 65 %RH according to JIS K 7112 (1999) A method (in-water replacement method), for a sample cut out in size of 30mm in the machine direction (MD) and 40mm in the transverse direction (TD). The same measurement is repeated five times for the same sample, and average value of the obtained specific gravity was considered as the specific gravity of said sample.

(4) Confirmation of β-crystal activity

[Confirmation of the whole film]

It is measured according to JIS K 7122 (1987) using Thermal analyzer RDC220 produced by Seiko Instruments Inc. A 5 mg white film (sample) was enclosed and loaded in an aluminium pan and it was set to said instrument. Under nitrogen-gas-atmosphere, the temperature was elevated from 30˚C to 280˚C at a rate of 10˚C/min (hereafter, the calorimetric curve obtained at this time may be abbreviated as first-run calorimetric curve). After completion of the temperature elevation, it was kept for 5 minutes at 280˚C. Successively, it was cooled to 30˚C at a rate of 10˚C/min. After completion of the cooling, it was kept for 5 minutes at 30˚C. Next, temperature was elevated to 280˚C at a rate of 10˚C/min (hereafter, the calorimetric curve obtained at this time may be abbreviated as second-run calorimetric curve). At this time, in the calorimetric curve of the second run obtained, when an endothermic peak accompanying fusion of β-crystal was observed at 140˚C or higher and lower than 160˚C, it was judged that said film (raw material polypropylene) has β-crystal activity. An endothermic peak here means a peak of which amount of heat of fusion is more than 10 mJ/mg. And, the amount of heat of fusion was an area surrounded by the base line and the calorimetric curve from where the calorimetric curve shifts to endothermic side and until subsequently returns to the location of the base line according the temperature elevation and it was determined by stretching a straight line from the position of fusion initiation temperature to the intersection with the calorimetric curve in high temperature side, and this area was computer-processed. Here, when the calorimetric curve shifts to an endothermic side, and does not return to the position of base line completely but shifts to an endothermic side again, the amount of heat of fusion may be defined as, by stretching a perpendicular line from the maximum point which begins to shift to an endothermic side again to the base line, the area surrounded by the calorimetric curve, the base line, and the perpendicular line.

And, in the above-mentioned method, in case where there is a peak between 140 to 160˚C, but it is not clear whether or not the peak is based on the fusion of β-crystal, it may be determined that there is β-crystal activity by the facts that there is a peak in 140 to 160˚C and that, in the diffraction profile by wide angle X-ray diffraction method, there is a diffraction peak based on β-crystal.

The Measuring condition of the wide angle X-ray diffraction method is shown below.

- Sample : After piling up films of this invention in same direction so that thickness after heat press would be about 1 mm, and this is inserted between aluminum plates of 0.5 mm thickness, heat pressed at 280˚C to thereby be melted and compressed. The obtained sheet with the aluminum plates is immersed in boiling water of 100˚C for 5 minutes to crystallize, and then cooled under an atmosphere of 25˚C. The obtained sheet is cut into 1 mm width and provided for the measurement.
- X-ray diffractometer : 4036A2 product of Rigaku Corporation.
- X ray source : CuKα rays (nickel filter is used)
- Output : 40kV, 20mA
- Slit system : 2mmΦ -1˚-1˚
- Detector : Scintillation counter
- Count recording device : RAD-C type produced by Rigaku Corporation.
- Measuring method : 2 θ/θ scan (step scan, 2θ range 10 to 55˚, 0.05˚ step, integrated time 2 seconds).

In the obtained diffraction profile, a diffraction peak with the strongest diffraction intensity form the (300) plane based on β-crystal should be observed near 2θ = 16.1 to 16.4˚. Here, regarding the structure of crystal polymorphs of polypropylene (α-crystal, β-crystal), the wide angle X diffraction profile obtained, etc., there are many reports such as, for example, Edward, P, Moore, Jr. "Polypropylene Handbook", published by Kogyo Chosakai (1998), p.135 -163; Hiroyuki Tadokoro, "Structure of Polymer", published by Kagaku-Dojin (1976), p.393; Turner Jones (A. Turner-Jones) et al. "Macromolekulare Chemie" (Macromol.Chem.), 75, p.134 to 158, and including the references cited by these, and they may be referred to.

Regarding the above-mentioned confirmation, it may be carried out for the corresponding undrawn sheet not to mention the film after biaxial stretching.

In this invention, those having β-crystal activity was classified as "○", and those not having β-crystal was classified as "x".

[Confirmation of B layer]

By the same method mentioned above, a calorimetric curve was obtained for the whole resin of B layer and judged. Here, regarding shape of sample, as long as it is the whole resin of B layer, any shape may be allowed, but it is preferable to be a chip because handling is easy. Or, the sample may be prepared by cutting out a necessary amount of B layer by a cutter knife or the like, from the skin layer of the white film (B layer).

(5) Judgment of biaxial orientation

Orientation condition of film is judged from X-ray diffraction photograph obtained by incidence of X-ray to film from three directions indicated below.

- Through incidence : incidence perpendicular to plane formed by longitudinal direction (MD) and transverse direction (TD) of film
- End incidence : incidence perpendicular to plane formed by transverse direction and thickness direction of film
- Edge irradiation : incidence perpendicular to plane formed by longitudinal direction and thickness direction of film

Here, the samples are piled in same direction and after adjusted to about 1 mm thickness, cut into 1 mm width and provided for the measurement.

The X-ray diffraction photograph was taken by the imaging-plate method under the following condition.

- X-ray generator : 4036A2 type produced by Rigaku Corp.
- X-ray source : CuKα rays (nickel filter is used)
- Output : 40Kv, 20mA
- Slit system : 1mmφ pinhole collimator
- Imaging plate : FUJIFILM BAS-SR
- Photograph taking conditions : Camera radius 40mm, exposure time 5 minutes

Here, distinction of non orientation, uniaxial orientation, and biaxial orientation can be judged by, for example, as explained by Kiyokazu Matsumoto et al. "The Journal of Society of Fiber Science and Technology, Japan", 26th volume, No. 12, 1970, p537 to 549; Kiyokazu Matsumoto "Making Film" published by Kyoritsu Shuppan (1993), P. 67 to 86; Seizo Okamura et al "Kobunshi Kagaku Joron (the second edition)", published by Kagaku-Dojin (1981), p.92 to 93, etc., the following criteria.

- Non orientation : the Debye Scherrer ring which has substantially almost equal intensity in X-ray diffraction photograph in any incidence direction is obtained.
- Longitudinal uniaxial orientation : the Debye Scherrer ring which has substantially almost equal intensity in X-ray diffraction photograph in end incidence is obtained.
- Biaxial orientation : in X-ray diffraction photograph of any direction, a diffraction image which reflects its orientation and is not equal in diffraction intensity, is obtained.

In this invention, film should meet the criteria of the above-mentioned biaxial orientation.

(6) Crystallization temperature (Tc) and melting temperature (Tm)

They were measured according to JIS K 7122 (1987) using Thermal analyzer RDC220 type produced by Seiko Instruments Inc. The main peak temperature of endothermic peak accompanying the melt of resin is defined as the melting temperature (Tm), when whole resin of 5 mg (film sample) was heated to 280˚C at a rate of 10˚C/min under nitrogen atmosphere. After completion of the temperature elevation, it was kept at 280˚C for 5 minutes. Successively, it was cooled to 30˚C at a rate of 10˚C/min. At this time, the peak temperature of exothermic peak accompanying crystallization from the molten state was defined as the crystallization temperature (Tc) (unit: ˚C). Here, it is preferable that the sample is chip-shaped if it is the whole resin of A layer and B layer, but if it is of the white film of the second to fourth configurations, in order to determine Tc and Tm of each layer, it may be prepared by cutting out a necessary amount from the skin layer (B layer) with a cutter knife or the like, based on the image obtained when the void ratio of skin layer (B layer) mentioned below (7) was determined and based on the thickness of each layer determined by the description (19) below. The same measurement was carried out 5 times for the same sample and the average values of Tc and Tm were defined as Tc and Tm of said sample.

(7) Void ratio of skin layer (B layer)

Except having increased the observation magnification to 10000 times, the cross section of the skin layer (B layer) of a white film was observed according to the same method as (1), and ten cross-sectional images were taken by changing the observation point.

An OHP sheet (OHP sheet specialized for EPSON produced by Seiko Epson) was put on the obtained cross-sectional image. Next, only the void (opening) of the skin layer (B layer) was blacked out with a marker on the OHP sheet. The image of the obtained OHP sheet was loaded on the following conditions.

- Scanner : GT-7600U produced by Seiko Epson
- Software : EPSON TWAIN Ver. 4.20J •
- Image type : line drawing

- Resolution : 600 dpi.

For the obtained image, an image analysis was performed using Image-Pro Plus, Ver. 4.0 for Windows produced by Planetron, Inc. At this time, a space calibration was performed using the scale of the scanned cross-sectional image. In addition, the measuring condition was set up as follows.

- In the display option setup in the count /size option, make the format of outline into black out.
- In the object extract option setup, make the removal of boundary none (None).
- Make the brightness range selection setup at measurement for an object of dark color, into automatic extraction.

Under the above-mentioned conditions, ratio of the area of void (part blacked out) to the whole area of the skin layer in the cross-sectional images of ten sheets, i.e., the area of rectangular object domain (Rectangular AOI) determined as the object of measurement, was calculated by percentage, and it was defined as the void ratio of the skin layer (unit: %).

(8) Void ratio of the white film of the first configuration, or of the core layer (A layer) of the second configuration

The specific gravity (d1) of film determined by the method of the above (3) is measured. Apart from this, this film was thermally melted and compressed with a heat press at 280°C to thereby prepare a sheet in which opening was completely removed. Next, an apparent specific gravity (d2) of a rapidly cooled sheet prepared by immersion of said sheet in 30°C water, is measured in the same way. The void ratio of the film was determined by the following formula.

```
Void ratio of the whole white film of the first configuration (%)

= (1 - d1/d2) x 100
```

Void ratio of the second core layer (A layer) was defined as, based on the thickness of each layer determined according the description (19) below, the value deducted the void ratio of the skin layer of the above-mentioned (7) from the value determined in the same way as that of the void ratio of the whole white film of the above-mentioned first configuration.

(9) Average surface roughness (Ra)

Based on JIS B 0601 (2001), it was measured using a stylus type surface roughness meter. Here, using the high precision thin film level difference measuring instrument (type: ET-30HK) and the three-dimensional roughness analyzer (type: SPA-11), produced by Kosaka Laboratory Ltd., it was measured, for the first configuration, on the drum side (D side) surface of the white film and for the second to fourth configurations, for the surface of B layer of the white film, by the following conditions.

- Stylus scanning direction : transverse direction of film
- Measurement mode : Stylus system (STYLUS)
- Processing mode : 8 (ROUGHNESS)
- Measurement length : 1mm
- Diameter of stylus : conical 0.5 $\mu$mR
- Load : 16mg
- Cut-off : 250 $\mu$m
- Number of measurement Line : 30 lines
- Scanning speed : 100 $\mu$m/second
- Pitch : X direction 4 $\mu$m, Y direction 10 $\mu$m
- SLOPE COMP :ON
- GAIN: x 1
- Measurement area : 0.2988 mm$^2$
- Standard area : 0.1 mm$^2$.

At measurement, roughness curve was recorded using a recorder when it is necessary. The conditions at that time are as follows.

- X and Y axes direction record magnification : 100 times

- Z axis direction magnification : 10000 times (if roughness curve magnification is too large on recorder, it may be 5000 times)
- Recorder speed : 40 μm/second
- Y record pitch : 2 mm.

At this time, center line average surface roughness (Ra) is, when a part of measurement length L was sampled from the roughness curve and put the center line of this sampling part to X-axis, length direction to Y-axis and expresses the roughness curve with y = f (x), the value calculated by the following formula (unit: μm).

[Equation 1]

$$R_a = \frac{1}{L} \int |f(x)|\, dx$$

The same measurement was carried out 5 times for the same sample and the average value of Ra was defined as Ra of the sample.

(10) Optical density (OD)

It was measured by the optical densimeter TR-927 produced by Macbeth corp. The same measurement was carried out 5 times for the same sample and the value of OD was defined as OD of the sample.

(11) Surface glossiness

Based on JIS Z 8741 (1997), using digital deformation glossimeter UGV-5D produced by Suga Test Instruments Co., Ltd., under the condition of angle of incidence of 60˚, for the first configuration, on drum side (D side) surface of the white film and for the second to fourth configuration, on the surface of B layer of the white film, surface glossiness was measured (unit: %). The same measurement was carried out 5 times for the same sample and the average value of the surface glossiness was defined as the surface glossiness of the sample.

(12) Whiteness, L, a and b values

Using the colorimeter SE-2000 produced by Nippon Denshoku Ind., under the condition of the reflection method, L, a, b values and X, Y and Z values are measured, for the surface which forms the receiving layer. The whiteness was determined by the following formula using the Y and Z values (unit: %).

$$Whiteness\ (\%) = 4 \times 0.847 \times Z - 3 \times Y$$

The same measurement was carried out 5 times for the same sample and the average value of whiteness, L, a and b values were defined as the whiteness, L, a and b values of the sample.

(13) Isotactic index (II)

The isotactic index (II) is determined based on the residue of boiling n-heptane extract. A sample is extracted with boiling n-heptane for a fixed time, and weight (%) of the part which is not extracted is calculated to determine the isotactic index (II)

In detail, after drying an extraction thimble at 110 $\pm$ 5˚C for 2 hours and leaving it for 2 hours or more in a room of 23˚C, 65 %RH, and then, a sample (polypropylene in powder or flake form or the like) 10g is put into the extraction thimble, and it is weighed precisely with a direct-reading balance using a weighing cup and a pincette (to 4 decimal places).

This is set to upper part of an extractor containing 80cc heptane, and an extractor and a condenser are assembled. This is heated by an oil bath or an electrical heater, and is extracted for 12 hours. The heating is adjusted so that the number of drops from a condenser may be 130 or more for 1 minute. The extraction thimble into which the extraction residue is taken out, and is put into a vacuum dryer, and dries for 5 hours at 80˚C and at a degree of vacuum of 100 mmHg or less. After the draying and leaving it for 2 hours in a room of 23˚C, 65 %RH, it is weighed precisely, II is calculated by the following formula (unit: %). Here, Po is the weight (g) of the sample before the extraction, and P is the weight (g) of the sample after the extraction.

$$II \ (\%) = (P/Po) \times 100$$

The same measurement was carried out 5 times for the same sample and the average value of II was defined as the II of the sample.

(14) Melt flow rate (MFR)

For polypropylene and thermoplastic elastomer, it is measured according to the condition M of JIS K 7210 (1995) (230˚C, 2.16kg). For ethylene resin, it is measured according to the condition D of JIS K 7210 (1995) (190˚C, 2.16kg). For polycarbonate, it is measured according to the condition W of JIS K 7210 (1995) (300˚C, 1.2kg). For polymethylpentene, it is measured according to ASTM D 1238 (260˚C, 5.0kg).

(15) β-crystal ratio

For polypropylene resin and a film, it is measured according to JIS K 7122 using a scanning differential calorimeter (DSC). In detail, a 5 mg sample is heated to 250˚C at a rate of 10˚C/min under nitrogen-gas-atmosphere, and after it is kept for 5 minutes, it is cooled to 20˚C at a rate of 10˚C/min. Subsequently, the temperature is elevated at a rate of 10˚C/min again, and the β-crystal ratio is determined by the following formula based on sum of the heat of fusion of endothermic peak (ΔHu-1) accompanying fusion of β-crystal of polypropylene having a peak in 145 to 157˚C and sum of the heat of fusion of endothermic peak (ΔHu-2) accompanying fusion of crystal of polypropylene other than β-crystal having a peak above 160˚C. At this time, between ΔHu-1 and ΔHu-2, small endothermic or exothermic peak may arise, but it may be ignored.

In addition, when it is necessary to determine β-crystal ratio of the core layer (A) and of the skin layer (B) separately, after checking the thickness configuration by the section observation by SEM carried out in the above-mentioned (7) and the thickness constitution by (19) described below, the skin layer (B) is shaved off and the peak of fusion is measured for each layer. Here, the skin layer (B) is shaved off by a single-edge, or after cutting by a single edge on the surface of the film surface and after bonding an adhesive tape on the film surface, the skin layer (B) can be exfoliated'by rapidly pulling the adhesive tape along the film. Next, from the thickness determined by the above-mentioned cross-sectional observation by SEM, 80% of the thickness from said exfoliated film is made as sample. Regarding the core layer (A), similarly, cutting by a single edge to the middle of the film thickness and after bonding adhesive tapes on both surfaces of the film, then the film can be halved in thickness by simultaneously pulling them so that the film is exfoliated. A sample is made by shaving off the middle part of the halved film.

$$B\text{-crystal ratio} \ (\%) = \{\Delta Hu\text{-}1/ \ (\Delta Hu\text{-}1 + \Delta Hu\text{-}2)\} \times 100$$

(16) Glass transition temperature (Tg)

It is measured according to JIS K 7122 (1987) using Thermal analyzer RDC220 produced by Seiko Instruments Inc. A 5 mg sample was enclosed and loaded in an aluminium pan and it was set to said instrument. Under nitrogen-gas-atmosphere, the temperature was elevated from 30˚C to 280˚C at a rate of 20˚C/min. After completion of the temperature elevation, it was kept for 5 minutes at 280˚C. Successively, it was cooled to 30˚C at a rate of 20˚C/min. After completion of the cooling, it was kept for 5 minutes at 30˚C. Next, temperature was elevated again to 280˚C at a rate of 20˚C/min. In the calorimetric curve obtained at this time, the starting point of glass transition is defined as the glass transition temperature (Tg) (temperature: ˚C). Here, for the analysis, the program installed in the thermal analysis system SSC5200 made by Seiko Instruments Co., Ltd. was used. The same measurement was carried out 5 times and average value of Tg obtained was defined as the Tg of said sample.

(17) Average dispersed diameter of immiscible resin

An ultra-thin section (sample) in transverse direction-thickness direction of undrawn sheet was obtained by

RuO$_4$ dye ultra-thin sectioning method. The obtained sample was observed by a transmission electron microscope under the following condition. In addition, sample preparation and observation were done by Toray Research Center Inc (TRC).

- • Instrument : Transmission electron microscope (H-7100FA) of Hitachi, Ltd.
- • acceleration voltage : 100 kV
- • Observation magnification :20000 times

Using the obtained image, minor and major axis of all the immiscible resin that exists in area of 1000 $\mu$m$^2$ were measured and the averages of all of these was defined as the average dispersed diameter of immiscible resin (unit: um). Here, the major or minor axis is, in the configuration of each void observed in the cross section, length of the largest part or of the smallest part, respectively.

(18) Average particle diameter

Volume average particle diameter measured by centrifugal sedimentation method using CAPA500 of HORIBA, Ltd. was defined as the average particle diameter (unit: $\mu$m).

(19) Thickness of each layer which constitutes film

In the above (7), changing.the observation point, thickness of skin layer (B layer etc.) was measured in ten points, and average of them was defined as the thickness of skin layer (B layer etc.), respectively (unit: $\mu$m). At this time, observation magnification can be as high as possible, namely, if it is a magnification which can measure with a sufficient precision, the observation magnification can be set arbitrarily. Moreover, the thickness of core layer was calculated by deducting the thickness of the above-mentioned skin layer from the thickness of the whole white film determined by the description (23) mentioned below.

(20) Strength at 2% elongation of longitudinal direction (MD) and transverse direction (TD) (F2 value)

For the longitudinal direction (MD) and for the transverse direction (TD), respectively, it was measured according to the method specified in JIS Z 1702, using a tensile tester, Tensilon produced by ORIENTEC Co., Ltd. in an atmosphere of 25°C, 65 %RH. Regarding the strength at 2% elongation (F2 value) in the longitudinal direction (MD) and in the transverse direction (TD), a sample cut into a size of 15 cm and 1 cm in MD direction and TD direction, respectively, from a film sample and it was elongated at a speed of 300 mm/min per original length 50 mm, and the stress at 2 % elongation was measured.

(21) Meso pentad fraction (mmmm)

Polypropylene was extracted by n-heptane with a temperature of 60°C or lower for 2 hours, and the impurity and the additive in polypropylene were removed. After that, it was vacuum dried at 130°C for 2 hours or more as a sample. This sample was dissolved in a solvent and the meso pentad fraction (mmmm) (unit: %) was determined using $^{13}$C-NMR under the following condition.

[Measuring condition]

- • Equipment : DRX-500 produced by Bruker
- • Measuring nucleus : $^{13}$C nucleus (resonance frequency: 125.8 MHz)
- • Measuring concentration : 10 % by weight
- • Solvent : Benzene : Heavy orthodichlorobenzene = 1:3 mixed solution
- • Measuring temperature: 130°C
- • Spin revolution :12Hz
- • NMR sample tube : 5 mm tube
- • Pulse width :45°(4.5 $\mu$s)
- • Pulse repetition time: 10 seconds
- • Data point : 64K
- • Count of conversion : 10000 times

- Measuring mode : complete decoupling.

[Analysis condition]

LB (line-broadening factor) was set to 1, and the Fourier transform was performed and the mmmm peak was set to 21.86 ppm. Peak division is performed using WINFIT software (product of Bruker). At that time, peak division was performed as follows from the peak of high magnetic field side, furthermore, automatic fitting of software was performed and peak division was optimized. After that, the total of the peak fractions of mmmm and ss (spinning side band peak of mmmm) is defined as the meso pentad fraction (mmmm)

    (1) mrrm
    (2) (3) rrrm (divided as two peaks),
    (4) rrrr
    (5) mrmm + rmrr
    (6) mmrr
    (7) mmmr
    (8) ss (spinning side band peak of mmmm)
    (9) mmmm
    (10) rmmr.

The same measurement was carried out 5 times for the same sample, and the average of the obtained mmmm was defined as the mmmm of said sample.

(22) Cushion factor

A dial gage type thickness meter (JIS B 7503 (1997), UPRIGHT DIAL GAUGE (0.001 x 2mm) No. 25 produced by PEACOCK, gage head 5 mm$\phi$ flat type) is equipped with a dial gage stand (No. 7001 DGS-M). The film thickness obtainable by this (d0) is measured. Furthermore, the thickness when 500gf load is applied to a dial gage press element (d500) is measured, and the cushion factor was calculated by the following formula (unit: %).

$$\texttt{Cushion factor (\%) = \{(d0 - d500) / d0\} x 100}$$

The same measurement was carried out 5 times for the same sample, and the average of the obtained cushion factor was defined as the cushion factor of said sample.

(23) Thickness of film

Using the dial gage type thickness meter (JIS B 7503 (1997), UPRIGHT DIAL GAUGE (0.001 x 2mm) No. 25 produced by PEACOCK, gage head 5 mm$\phi$ flat type, 125 gf load), measurements are made at ten points at intervals of 10cm in longitudinal direction and transverse direction and the average thereof is defined as the thickness of film of said sample (unit: $\mu$m).

(24) Wet tension (mN/m)

It was measured according to JIS K 6768 (1999), using a mixed liquid of formamide and ethylene glycol (unit: mN/m).

(25) Crease resistance

A sample for the crease resistance evaluation was prepared by uniformly pasting a high quality paper with a binder of 65 $\mu$m thickness (label sheet for word processor, Thai-2110-W, produced by Kokuyo Co., Ltd.) on the surface (opposite side of receiving layer) of the white film. Said sample was cut out into 200 mm length and 15 mm width, the cut sheet was fixed at one end and fold back 180˚, around 5 mm$\phi$ round iron axis tied 200 g weight with wire to both ends, with the film side of said sheet inside, and the other end was pulled at 200 mm/second. Crease generation on the film side was observed by a stereoscopic microscope, and the crease resistance was judged by the following criteria.

A: 0 to 1 crease / cm of 1 mm length or more generated
B: 2 to 4 creases / cm of 1 mm length or more generated
C: 5 to 8 creases / cm of 1 mm length or more generated
D: 9 or more creases / cm of 1 mm length or more generated.

It is the film judged to be Class A or Class B which can be industrially provided for a practical application

(26) Thermal conductivity ($\lambda$)

It was determined by the following method, using the quick thermal conductivity meter produced by Kyoto Electronics Manufacturing Co., Ltd.

Device :        quick thermal conductivity meter QTM-500 (Kyoto Electronics Manufacturing Co., Ltd.)
Probe :         standard probe (0.023 to 12 W/mK)
Reference :     Polyethylene foam ($\lambda$=0.0347) Silicone rubber ($\lambda$= 0.2342) Quartz ($\lambda$= 1.4183)

Measuring method

[1] Place a sample on a reference and set the probe thereon.
[2] Wait until the temperature of thermocouple which is the probe becomes constant, and if it becomes constant, start heating 30 to 82°C, and the inclination of the temperature elevation curve at that time is considered to be the thermal conductivity of the sample + reference.
[3] Thermal conductivity was measured by the method of [1] and [2] for the three above-mentioned references, respectively. A graph of $\varepsilon$, which is the difference value between the thermal conductivity ($\lambda$) of a reference and the measured value was drawn, and the thermal conductivity of the sample was calculated from the following formula.

$$\lambda = q \times \ln (t2 / t1) / 4\pi (T2 - T1)$$

$\lambda$ :        Thermal conductivity of sample [W/mK]
q :        Calorific value per unit time and unit length of heater [W/m]
t1, t2 :        Measuring time [s]
T1, T2 :        Temperature at t1 and t2 [K]

(27) Effective draw ratio

On an undrawn sheet prepared by extruding molten polymer from a T-die and cooled and solidified in a shape of sheet by solidifying on metal drum, squares of 1 cm length are drawn such that the respective side becomes parallel to the longitudinal or transverse direction of the film. After that, stretching and winding were carried out and measured the length of the square (cm) of the obtained film for ten squares in longitudinal direction and for ten squares in transverse direction. Average values of these were defined as the effective draw ratio of longitudinal direction and transverse direction, respectively.

(28) Judgement of sticking to metal drum at casting process

It was determined by the following criteria, by observing the position where an undrawn sheet leaves metal drum in casting process.

○ : Crystallization of D side of undrawn film is completed and sheet does not stick to drum.
X : Crystallization of D side of undrawn film is not completed and sheet sticks to drum.

What can be used for industrial applications is, of course, the film judged as ○.

(29) Judgement of surface defect

Surface of the white film after biaxial stretching was observed visually, and it was judged by the following criteria.

○ : no crater-like defect was observed
X : crater-like defect was observed

What can be used for industrial applications is the film judged as O.

(30) Sensitivity

The white film of this invention is pasted to a paper of 150 μm thickness. Then, using a micro gravure coater, the following coating materials for forming a receiving layer on the film surface were applied such that the amount of coating after drying is 3 g/m$^2$, and the receiving sheet for thermal transfer recording was prepared.

[Coating liquid for receiving layer formation]

| | |
|---|---|
| Polyester resin (Vylon 200 produced by Toyobo Co., Ltd.) : | 20 parts |
| Silicone oil (X-2.2-3000T produced by Shin-Etsu Chemical Co. , Ltd.) : | 2 parts |
| Toluene : | 39 parts |
| Methyl ethyl ketone : | 39 parts. |

Next, a test pattern was printed to the surface on which the receiving layer of the above-mentioned receiving sheet was formed, using a color printer produced by SEIKO Electronic industry (Professional Color Point 1835), and the ink ribbon specified for that. The same print on the same receiving sheet was performed 10 times, and the sensitivity was judged by the following criteria based on the reproductivity and clearness of the obtained image of the sheet.

A: Very good. The concentration of color is high, and the image is clear in all sheets.
B: Although there are 1 or 2 sheets with a slightly low concentration of color or with a slight "fall out" observed, except that the concentration of color is high and the image is clear.
C: There are 3 to 5 sheets with low concentration of color or with "fall out" or "deformation" observed, and there are sheets in which the image is reddish or yellowish on the whole.
D: There are more than 6 sheets with low concentration of color, or with "fall out" or "deformation" observed, and there are sheets in which the image is reddish or yellowish on the whole.

(31) Adhesive strength of receiving layer

In the above-mentioned (30), the cellophane tapes (produced by Nichiban Co., Ltd., 18 mm width) were pasted on the receiving layer side and on the opposite side of the receiving sheet for thermal transfer recording for 15 cm length, respectively such that they are parallel and oppositely positioned in the same part. Then, the receiving layer side was fixed by non-dominant hand and quickly exfoliate the cellophane tape of the receiving layer side by dominant hand to about 45° direction. At this time, by observing the ratio of receiving layer transferred to the cellophane tape (including other layer of the receiving sheet), the adhesive strength of receiving layer was evaluated by the following criteria.

◎ : receiving layer did not transfer to cellophane tape at all.
○ : less than 20% of receiving layer transferred to cellophane tape.
Δ : 20% or more and less than 50% of receiving layer transferred to cellophane tape.
X : 50% or more of receiving layer transferred to cellophane tape.

What can be industrially used in practical applications is the film judged to be ◎ and ○.

(32) Film forming ability

A biaxially oriented white polypropylene film of 5 m width was formed, and film breakage was observed in 10000 m winding. The film forming ability was judged by the following criteria.

◎ : no breakage and film formation was stable.
○ : 1 or less breakage and film formation was stable.
X : 2 or more breakages and film formation was not necessarily stable.

What can be used in industrial applications is the film judged as ◎ and ○.

(33) Processability

In the above-mentioned (32), by observing whether a white powder caused by falling out of the immiscible resin or the particle is adhered or not on a metal roll arranged in the film formation machine, especially on a stretching roll, the processability was judged by the following criteria.

○ : white powder has not adhered to stretching roll.
X : White powder had adhered to stretching roll and the process was soiled.

What can be used in industrial applications is the film judged to be ○.

[Example]

This invention is explained by the following examples, but this invention is not limited thereto. Here, in order to obtain the film which has a desired thickness configuration, polymer extrusion output from each extruder was adjusted to predetermined value. It was measured on f(D) side.

(Example 1)

A publicly known homopolypropylene resin 99.9 % by weight (hereafter, referred to H-PP) (produced by Mitsui Chemicals, Inc., MFR: 4g/10 min, II: 98.5 %) and N, N'-dicyclohexyl-2,6-naphthalene dicarboxyamide (NU-100 produced by New Japan Chemical Co., Ltd.), 0.1 % by weight as β-crystal nucleating agent were mixed and supplied to a twin screw extruder to thereby be melted and mixed at 280˚C. After that, it was extruded in a shape of gut, cooled by passing through a water bath of 20˚C and cut by a chip cutter into 3 mm length, and then it was dried at 100˚C for 2 hours. β-crystal ratio of said β-crystal nucleating agent added PP (hereafter, abbreviated as β-crystal PP) was 82 %.
Next, this β-crystal PP was fed to an extruder heated at 200˚C and melted, extruded in a shape of sheet through a monolayer T-die, and it was closely contacted with a metal drum (casting drum) heated to a surface temperature of 90˚C, and cooled and solidified by blasting 30˚C cold air from the non-drum side and an undrawn film was produced. The contact time with the metal drum at this time was 35 seconds.
Next, after this undrawn film was preheated by introducing to an oven heated and kept at 120˚C, it was drawn 4.5 times in length direction (longitudinal direction, namely, running direction of the film, hereafter it is abbreviated as MD direction), and cooled with a roll of 100˚C. Then, the film drawn in the MD direction was introduced in a tenter by grasping both ends of the film with clips and was drawn 10 times in the direction perpendicular to the MD direction (transverse direction, hereafter, abbreviated as TD direction) (areal drawn ratio: longitudinal draw ratio x transverse draw ratio = 45 times) in an atmosphere heated to 135˚C. Successively, in order to complete the crystal orientation of the biaxially oriented white polypropylene film to thereby impart smoothness and dimensional stability, relaxation heat treatment of 5 % in transverse direction was performed at 150˚C in a tenter, and, after cooling slowly and uniformly, cooled to room temperature. Furthermore, in order to provide on the surface of the white film of this invention the coating of receiving layer or the other substrates, corona discharge treatment on both sides was performed in air to thereby make the wet tension into 37 mN/m and wound.
The thickness of the film thus obtained was 35 μm, and by SEM observation of a film cross section, it was confirmed that the film contains many fine and non-nucleus voids inside. Next, after a paper of 150 μm thickness was pasted to the D side of the white film of this invention, the above-mentioned coating liquid for forming a receiving layer was coated with a micro gravure coater on the opposite surface side (ND side) of D side which has a high glossiness, such that the coated amount is 3g/m$^2$ when dried, and thereby obtained a receiving sheet for thermal transfer recording.
The resin composition of the biaxially oriented white polypropylene film thus obtained was shown in Table 1, and the properties of the film and the properties of the receiving sheet for thermal transfer recording were shown in Tables 2 and 3. Since the properties of this white film are in the range of this invention, it turns out that it is excellent as a receiving sheet for thermal transfer recording.

(Example 2)

An H-PP (WF836DG3, produced by Sumitomo Chemicals, Co., Ltd., MFR: 7g/10 min, II: 96 %), 94.8 % by weight, linear low density polyethylene obtained by a metallocene catalyst ("Kernel" KS560 produced by Mitsubishi Chemical Corp., MFR:17g/10 min (190°C); hereafter abbreviated as m-LLDPE), 5 % by weight and NU-100, 0.2 % by weight as β-crystal nucleating agent were mixed and supplied to a twin screw extruder to thereby be melted and mixed at 280°C. After that, it was extruded in a shape of a gut, cooled by passing through a water bath of 20°C and cut by a chip cutter into 3 mm length, and then dried at 100°C for 2 hours. β-crystal ratio of said β-crystal PP was 88 %. Next, said β-crystal PP was fed to an extruder heated at 200°C and melted, extruded in a shape of sheet through a monolayer T-die, and it was closely contacted with a metal drum (casting drum) heated to a surface temperature of 120°C, and cooled and solidified by blasting 30°C cold air from the non-drum side and an undrawn film was produced. The contact time with the metal drum at this time was 35 seconds.

After said undrawn film was preheated by introducing to an oven heated and kept at 90°C, it was drawn 4 times in length direction (longitudinal direction, namely, running direction of the film; hereafter abbreviated as MD direction), and cooled with a roll of 40°C.

Then, the film drawn in the MD direction was introduced in a tenter by grasping both ends of the film with clips and was drawn 9 times in the direction perpendicular to the MD direction (transverse direction, hereafter, abbreviated as TD direction) (areal drawn ratio: longitudinal draw ratio x transverse draw ratio = 36 times) in an atmosphere heated to 125°C. Successively, in order to complete the crystal orientation of the biaxially oriented white polypropylene film to thereby impart smoothness and dimensional stability, relaxation heat treatment of 5 % in transverse direction was performed at 150°C in the tenter, and, after cooling slowly and uniformly, cooled to room temperature. Furthermore, in order to provide a coating of receiving layer or other substrate on the surface of the white film of this invention, corona discharge treatment on both sides was performed in air to thereby make the wet tension of surfaces into 37 mN/m and wound.

The thickness of the film thus obtained was 25 $\mu$m, and it was confirmed that the film contains many fine and non-nucleus voids inside. Next, after a paper of 150 $\mu$m thickness was pasted to the D side of the white film of this invention, the above-mentioned coating liquid for forming a receiving layer was coated with a micro gravure coater on the ND side which has a high glossiness, such that the coated amount becomes 3g/m$^2$ when dried, and thereby obtained a receiving sheet for thermal transfer recording.

The resin composition of the biaxially oriented white polypropylene film thus obtained was shown in Table 1, and the properties of the film and the properties of the receiving sheet for thermal transfer recording were shown in Tables 2 and 3. By adding m-LLDPE, it becomes possible to draw under a lower temperature compared to the stretching condition of the homopolypropylene of Example 1, and as the result, void ratio of the film increases and the sheet becomes excellent in flexibility and crease resistance, although whiteness, optical density and cushion factor are also high. Since the properties of this white film are in the range of this invention, it turns out that it is excellent in sensitivity as a receiving sheet for thermal transfer recording.

(Example 3)

Except β-crystal PP of Example 1 was replaced with a mixture of H-PP, 50 % by weight and β-crystal nucleating agent added polypropylene ("BEPOL", type: B-022-SP produced by Sunoco Chemicals; hereafter abbreviated as βPP), 50 % by weight, a biaxially oriented white polypropylene film and a sheet for thermal transfer recording were obtained in the same way of Example 2.

The resin composition was shown in Table 1, and the properties of the film and the properties of the receiving sheet for thermal transfer recording were shown in Tables 2 and 3. Similar to the film of Example 2, void ratio of the film is high and the sheet is excellent in flexibility and crease resistance, although whiteness, optical density and cushion factor are also high. Since the properties of this white film are in the range of this invention, it turns out that it is excellent in sensitivity as a receiving sheet for thermal transfer recording.

(Examples 4 and 5)

In Example 4, instead of m-LLDPE of Example 2, hydrogenated styrene-butylene copolymer ("DYNARON" 1320P produced by JSR Corp. hereafter abbreviated as H-SBR) was added and mixed, and in Example 5, the amount of β-crystal nucleating agent NU-100 of Example 2 was changed to 0.02 % by weight and instead of m-LLDPE of Example 2, an ethylene propylene rubber ("TAFMER" P0480 produced by Mitsui Chemicals, Inc.; hereafter abbreviated as EPR) was used, a biaxially oriented white polypropylene film and a sheet for thermal transfer recording were obtained in the same way of Example 2.

The resin composition was shown in Table 1, and the properties of the film and the properties of the receiving sheet for thermal transfer recording were shown in Tables 2 and 3. Similar to the film of Example 2, void ratio of the film is high and the sheet is excellent in flexibility and crease resistance, although whiteness, optical density and cushion factor are also high. Since the properties of this white film are in the range of this invention, it turns out that it is excellent in sensitivity as a receiving sheet for thermal transfer recording.

(Example 6)

As the A layer, the resin composition of β-crystal PP of Example 2 was fed to an extruder (a) heated to 200˚C, melted and introduced to a multi-layer T-die. On the other hand, as the B layer composition, to an ethylene propylene random copolymer (FM401G produced by Sumitomo Chemicals, Co., Ltd., MFR: 7g/10 min) (hereafter abbreviated as EPC) containing 4 % by weight of ethylene, 0.3 % by weight of silica with average particle diameter of $1.9\mu$ m was added and mixed, and supplied to a twin screw extruder to thereby be extruded in a shape of gut at 260˚C, cooled by passing through a water bath of 20˚C and cut by a chip cutter into 3 mm length, and then it was dried at 100˚C for 2 hours.

Next, said mixed resin is fed to an extruder (b) heated at 240˚C, melted in the same way and introduced to the multi-layer T-die and co-extruded in a sheet shape by laminating the polymer of the extruder (b) to both sides of the polymer of the extruder (a), and except that, a biaxially oriented white polypropylene film was obtained in the same way as Example 2.

The thickness constitution of said laminate film thus obtained is B layer/A layer/ B layer = 3/29/3 $\mu$m and the film has many fine non-nucleus voids in the inside of A layer, in addition, it was confirmed that many fine voids are formed in the skin layer (B layer), too.

Next, after a paper of 150 $\mu$m thickness was pasted on D side of the white film of this invention, the above-mentioned coating liquid for forming a receiving layer was coated on ND side of the film which has high glossiness with a micro gravure coater such that the dried amount of the coating would be 3 g/m$^2$, and a receiving sheet for thermal transfer recording was obtained.

The resin composition of the biaxially oriented white polypropylene film thus obtained was shown in Table 1, and the properties of the film and the properties of the receiving sheet for thermal transfer recording were shown in Tables 2 and 3. By laminating the skin layers, surface glossiness and crease resistance are further improved. In addition, since the properties of this white film are in the range of this invention, it turns out that it is excellent in sensitivity as a receiving sheet for thermal transfer recording.

(Example 7)

After carrying out a corona discharge treatment to the D side of the film longitudinally drawn in Example 1, as a B layer, a polyester urethane based water-dispersed resin "HYDRAN" AP-40F (produced by Dainippon Ink & Chemicals, Inc., solid content 30%; hereafter, abbreviated as PEU), 100 parts by weight and, as a water soluble organic solvent, N-methyl pyrrolidone, 15 parts by weight were mixed to prepare coating material. To the mixture, a melamine compound "BEKKAMIN" APM (produced by Dainippon Ink & Chemicals, Inc.), 5 parts by weight was added as a crosslinking agent, and further, as a crosslinking accelerator, a water-soluble, acidic compound "CATALYST" PTS (Produced by Dainippon Ink & Chemicals, Inc.), 2 parts by weight and a spherical silica particle of 0.1 $\mu$m of average diameter, 0.2 parts by weigh were added and mixed to prepare a coating material. Thus prepared coating material was coated by a coating bar to a thickness of 6 $\mu$m, and successively, the coated film was transversely drawn 10 times by the same way as Example 1 to obtain a biaxially oriented white polypropylene film. The thickness constitution of this film was B layer/A layer = 0.2 $\mu$m/35 $\mu$m. Next, the receiving sheet for thermal transfer recording was obtained by the same way as Example 2. The resin composition of the biaxially oriented polypropylene film thus obtained was shown in Table 1, and the properties of the film and the properties of the receiving sheet for thermal transfer recording were shown in Tables 2 and 3. Here, the color tone and the average surface roughness of this film were measured on the B layer surface side. By laminating the B layer, surface glossiness and crease resistance are further improved. In addition, since the surface became smooth, it turns out that it was excellent in sensitivity as a receiving sheet for thermal transfer recording.

(Example 8)

A receiving sheet for thermal transfer recording was prepared in the same way as Example 2, except that, on one surface of the biaxially oriented white polypropylene film obtained in Example 2, as a B layer, the mixed coating material of Example 7 was coated by an off-line gravure coater, hot air dried at 110˚C to form a B layer of 1 $\mu$m thickness, and the dried film was wound. The resin composition of the biaxially oriented white polypropylene film thus obtained was shown in Table 1, and the properties of the film and the properties of the receiving sheet for thermal transfer recording were shown in Tables 2 and 3. By laminating the B layer, surface glossiness and crease resistance are further improved. In addition, since the properties of this white film are in the range of this invention, it turns out that it is excellent in sensitivity as a receiving sheet for thermal transfer recording.

(Example 9)

Instead of the resin composition of the B layer of Example 6, H-PP (mixture of WF836DG3, 47.5 % by weight and high crystallinity polypropylene F300SV (the product of Idemitsu Petrochemistry, Inc. MFR: 3g /10 min, II: 98%), 47. 5 % by weight) and a poly methyl pentene resin of which melting temperature is 240˚C ("TPX" MX -004 produced by Mitsui Chemicals, Inc., MFR: 26g /10 min; hereafter, abbreviated as PMP), 5 % by weight was mixed, fed to an extruder (b) heated to 290˚C, melted and introduced to a multi-layer T-die, laminated the polymer of the extruder (b) to both sides of the polymer of the extruder (a) and co-extruded in a shape of sheet, closely contacted with a casting drum heated to 110˚C, cooled and solidified by blasting a cold air of 90˚C from the non-drum side, and an undrawn laminated sheet was prepared. At this time, the contact time with the metal drum was 35 seconds. Said laminated undrawn film was preheated by introducing to an oven heated and maintained at 145˚C, drawn 5 times in length direction of the film (longitudinal direction, namely, running direction of the film; hereafter abbreviated as MD direction) and cooled with a cooling roll of 30˚C.

Then, the film drawn in the MD direction was introduced in a tenter by grasping both ends of the film with clips and was drawn 9 times in the direction perpendicular to the MD direction (transverse direction; hereafter, abbreviated as TD direction) (areal drawn ratio: longitudinal draw ratio x transverse draw ratio = 45 times) in an atmosphere heated to 150˚C. Successively, in order to complete the crystal orientation of the biaxially oriented white polypropylene film to thereby impart smoothness and dimensional stability, relaxation heat treatment of 8 % in transverse direction was performed at 160˚C in the tenter, and, after cooling slowly and uniformly, cooled to room temperature. Furthermore, in order to provide on the surface of the white film of this invention a coating of receiving layer or other substrate, corona discharge treatment on both sides was performed in air to thereby make the wet tension into 37 mN/m and the treated film was wound.

The thickness constitution of said laminate film thus obtained was B layer/A layer/B layer = 3/29/3 $\mu$m and it was confirmed that many fine non-nucleus voids were formed in the A layer and the B layer contained in its inside fine voids of 0.5 $\mu$m having PMP as its nucleus. Next, a receiving sheet for thermal transfer recording was obtained in the same way as Example 5. The resin composition of the biaxially oriented polypropylene film thus obtained was shown in Table 1, and the properties of the film and the properties of the receiving sheet for thermal transfer recording were shown in Tables 2 and 3. Since the film of this invention has high glossiness and whiteness and the L, a, b values are in the range of this invention, it turns out that it is excellent for a receiving sheet for thermal transfer recording.

(Comparative example 1)

Except for using a quinacridone based nucleating agent ("Rubicron" 400RG produced by Toyo Soda Manufacturing Co., Ltd.; hereafter abbreviated as 400RG) instead of NU-100 of Example 1, and making an undrawn film by setting surface temperature of the metal drum to 30˚C, a biaxially oriented white polypropylene film and a receiving sheet for thermal transfer recording was obtained in the same way as Example 1.

The resin composition of the biaxially oriented polypropylene film thus obtained is shown in Table 1, and the properties of the film and the properties of the receiving sheet for thermal transfer recording were shown in Tables 2 and 3. Since the β-crystal ratio of the β-crystal PP of this film is low, the void ratio inside the film is low and not uniform, accordingly, the specific gravity is high and F2 value is high and inferior in crease resistance. In addition, whiteness, optical density, OD, and cushion factor are low, the L, a, b values are out of the range of this invention, the thermal conductivity is high and it is inferior in sensitivity for a receiving sheet for thermal transfer recording.

(Comparative example 2)

A biaxially oriented white polypropylene film and a receiving sheet for thermal transfer recording were obtained in the same way as Example 1 except having used EPC (type PC540R produced by SunAllomar Ltd., MFR = 5 g/ 10 min) instead of H-PP of Example 1.

The resin composition of the biaxially oriented polypropylene film thus obtained was shown in Table 1, and the properties of the film and the properties of the receiving sheet for thermal transfer recording were shown in Tables 2 and 3. The β-crystal ratio of this film was low, the whiteness, the optical density, OD, and the cushion factor were also low, the L, a, b values were out of the range of this invention, in addition, since the melting temperature was low as 132˚C, when used as a receiving sheet for thermal transfer recording, due to heat at transfer, the recording paper curled by contraction, and it was inferior in sensitivity.

(Comparative example 3)

A biaxially oriented white polypropylene film and a receiving sheet for thermal transfer recording were obtained in the same way as Example 1 except having used, instead of β-crystal PP, the mixture of H-PP, 84.9 % by weight and β-crystal nucleating agent NU-100, 0.1 % by weight and polystyrene ("Styron" 666 produced by Asahi Kasei Corp., Tg 80˚C; hereafter, abbreviated as PS), 15 % by weight and having changed the temperature of extruder to 260˚C and the surface temperature of metal drum to 30˚C to make an undrawn film.

The resin composition of the biaxially oriented polypropylene film thus obtained was shown in Table 1, and the properties of the film and the properties of the receiving sheet for thermal transfer recording were shown in Tables 2 and 3. This film, because processibility was not good due to falling out and sticking of PS to stretching roll, in addition, the surface glossiness was low due to large average surface roughness, furthermore, crease resistance was inferior since sum of F2 values of MD and TD exceeded 70 MPa, was inferior in sensitivity as a receiving sheet for thermal transfer recording.

(Comparative example 4)

A biaxially oriented white polypropylene film and a receiving sheet for thermal transfer recording were obtained in the same way as Example 1 except having used, instead of β-crystal PP, the mixture of H-PP, 69. 9 % by weight, β-crystal nucleating agent NU-100, 0.1 % by weight and calcium carbonate ($CaCO_3$) of average particle diameter of 4 $\mu$m (produced by Siraishi Calcium Kaisha, Ltd.), 30 % by weight.

The resin composition was shown in Table 1, and the properties of the film and the properties of the receiving sheet for thermal transfer recording were shown in Tables 2 and 3. Because the voids have CaCO3 as nucleus and the size of voids is very large in this film, processibility is not good due to falling out of CaCO3 during the film formation process and during the production of the receiving sheet for thermal transfer recording, the void ratio of the film exceeds 80%, the specific gravity is as low as less than 0.2, (when looking at the L, a, b values) the L value is low, the a value is +6, the b value is +1.0, the film is yellowish, and when a photograph is printed to the receiving sheet for thermal transfer recording, the image is dark as a whole, and reddish or yellowish as a whole, indicating that it is not preferable as a receiving sheet.

(Comparative example 5)

A biaxially oriented white polypropylene film and a receiving sheet for thermal transfer recording were obtained in the same way as Example 1 except having used high crystallinity polypropylene, F300SV, instead of H-PP.

The resin composition was shown in Table 1, and the properties of the film and the properties of the receiving sheet for thermal transfer recording were shown in Tables 2 and 3. As for this film, productivity is inferior because a lot of film breakage occurs at film forming process because the melting temperature exceeds 172˚C, the average surface roughness, Ra, of the obtained film is large as 1 $\mu$m and the surface glossiness is low as less than 10 %, and it is inferior in sensitivity as a receiving sheet for thermal transfer recording.

(Comparative example 6)

Instead of H-PP of Example 1, a low density polyethylene ("SUMIKASEN" L705 produced by Sumitomo Chemicals, Co., Ltd., MFR: 7g/10 min (190˚C) ; hereafter, abbreviated as LDPE), 59.9% by weight, NU-100, 0.1% by weight and calcium carbonate ($CaCO_3$) of average particle diameter of 4 $\mu$m (produced by Siraishi Calcium Kaisha, Ltd.), 40 % by weight were added and mixed and supplied to a twin screw extruder and extruded at 200˚C in a shape of gut, cooled by passing through a water bath of 20˚C and cut by a chip cutter into 3 mm length, and then it was dried at 60˚C for 2 hours. Next, said mixed resin was fed to an extruder heated to 200˚C and melted, and it was closely contacted with a casting drum heated to a surface temperature of 30˚C, and cooled and solidified by blasting 30˚C cold air from non-drum side and an undrawn film was produced. The contact time with the metal drum at this time was 35 seconds.

Next, this undrawn film was longitudinally drawn 6 times at 80˚C, and obtained a uniaxially oriented white film and a receiving sheet for thermal transfer recording. The resin composition of the white film thus obtained was shown in Table 1, and the properties of the film and the properties of the receiving sheet for thermal transfer recording were shown in Tables 2 and 3. As for this film, processibility was not good due to falling out and sticking of $CaCO_3$ to stretching roll during film formation, in addition, the surface glossiness was low due to large average surface roughness, furthermore, since the melting temperature of the resin was low, when the receiving sheet for thermal transfer recording was printed, due to heat at transfer, the recording sheet curled, or melted and stuck to thermal head, and it was inferior in sensitivity.

[Table 1]

| | Resin composition of core layer (A) | | | | | | | | | | Resin composition of skin layer (B) | | | |
| | Polyolefin | | Nucleating agent | | β-crystal ratio (%) | Elastomer component | | Immiscible resin or particle | | Melting point (˚C) | Resin | | Particle | |
| | Resin | Mixing ratio (wt%) | Kind | Mixing ratio (wt%) | | Resin | Mixing ratio (wt%) | Kind | Mixing ratio (wt%) | | Kind | Mixing ratio (wt%) | Kind | Mixing ratio (wt%) |
|---|---|---|---|---|---|---|---|---|---|---|---|---|---|---|
| Example 1 | H-PP | 99.9 | NU-100 | 0.1 | 82 | - | - | - | - | 170 | - | - | - | - |
| Example 2 | H-PP | 94.8 | NU-100 | 0.2 | 88 | m-LLDPE | 5 | - | - | 162 | - | - | - | - |
| Example 3 | H-PP | 50 | βPP | 5 0 | 73 | - | - | - | - | 163 | - | - | - | - |
| Example 4 | H-PP | 94.8 | NU-100 | 0.2 | 88 | H-SBR | 5 | - | - | 162 | - | - | - | - |
| Example 5 | H-PP | 94.98 | NU-100 | 0.02 | 38 | EPR | 5 | - | - | 158 | - | - | - | - |
| Example 6 | H-PP | 94.8 | NU-100 | 0.2 | 88 | m-LLDPE | 5 | - | - | 162 | EPC | 99.7 | Silica | 0.3 |
| Example 7 | H-PP | 99.9 | NU-100 | 0.1 | 82 | - | - | - | - | 170 | PEU | 99.3 | Silica | 0.7 |
| Example 8 | H-PP | 94.8 | NU-100 | 0.2 | 88 | m-LLDPE | 5 | - | - | 162 | PEU | 99.3 | Silica | 0.7 |
| Example 9 | H-PP | 94.8 | NU-100 | 0.2 | 88 | m-LLDPE | 5 | - | - | 158 | H-PP | 95 | PMP | 5 |
| Comp. example 1 | H-PP | 99.9 | 400RG | 0.1 | 25 | - | - | - | - | 170 | - | - | - | - |
| Comp. example 2 | EPC | 99.9 | NU-100 | 0.1 | 12 | - | - | - | - | 132 | - | - | - | - |

| | Resin composition of core layer (A) | | | | | | | | | | | | Resin composition of skin layer (B) | | | |
| | Polyolefin | | Nucleating agent | | β-crystal ratio (%) | Elastomer component | | Immiscible resin or particle | | Melting point (˚C) | Resin | | Particle | |
| | Resin | Mixing ratio (wt%) | Kind | Mixing ratio (wt%) | | Resin | Mixing ratio (wt%) | Kind | Mixing ratio (wt%) | | Kind | Mixing ratio (wt%) | Kind | Mixing ratio (wt%) |
| Comp. example 3 | H-PP | 84.9 | NU-100 | 0.1 | 84 | - | - | PS | 15 | 170 | - | - | - | - |
| Comp. example 4 | H-PP | 69.9 | NU-100 | 0.1 | 84 | - | - | CaCO$_3$ | 30 | 170 | - | - | - | - |
| Comp. example 5 | H-PP | 99.9 | NU-100 | 0.1 | 82 | - | - | - | - | 175 | - | - | - | - |
| Comp. example 6 | LDPE | 59.9 | NU-100 | 0.1 | 0 | - | - | CaCO$_3$ | 40 | 112 | - | - | - | - |

EP 1 702 761 B1

[Table 2]

| | Thickness (μm) | Core layer | Surface glossiness | | | F2 value (MPa) | Whiteness (%) | L value (-) | a value (-) | b value (-) | Specific gravity (-) | Cushion factor (%) | Optical Density (%) | Average surface roughness Ra (μm) |
|---|---|---|---|---|---|---|---|---|---|---|---|---|---|---|
| | | Presence of void nucleus | Void ratio (%) | Core layer (%) | Skin layer (%) | | | | | | | | | |
| Example 1 | 35 | ○ | 50 | 52 | - | 27 | 80 | 81 | -0.05 | -3.10 | 0.45 | 23 | 0.72 | 0.50 |
| Example 2 | 25 | ○ | 61 | 67 | - | 17 | 78 | 76 | -0.14 | -1.80 | 0.35 | 22 | 0.68 | 0.45 |
| Example 3 | 25 | ○ | 31 | 110 | - | 62 | 52 | 65 | -0.02 | -0.45 | 0.62 | 16 | 0.48 | 0.14 |
| Example 4 | 25 | ○ | 49 | 73 | - | 25 | 80 | 78 | -0.37 | -2.95 | 0.46 | 23 | 0.63 | 0.37 |
| Example 5 | 35 | ○ | 33 | 67 | - | 58 | 65 | 63 | -0.07 | -0.50 | 0.60 | 17 | 0.53 | 0.13 |
| Example 6 | 35 | ○ | 46 | - | 142 | 48 | 76 | 75 | -0.02 | -0.85 | 0.53 | 19 | 0.65 | 0.04 |
| Example 7 | 35.2 | ○ | 49 | 82 | 107 | 28 | 82 | 80 | -0.07 | -2.50 | 0.46 | 22 | 0.70 | 0.22 |
| Example 8 | 36 | ○ | 48 | 82 | 127 | 30 | 78 | 78 | -0.05 | -1.78 | 0.47 | 19 | 0.69 | 0.07 |
| Example 9 | 35 | ○ | 31 | - | 120 | 93 | 65 | 75 | -0.08 | -0.89 | 0.62 | 20 | 0.67 | 0.63 |
| Comp. example 1 | 35 | ○ | 8 | 123 | - | 92 | 45 | 43 | 3.75 | 0.15 | 0.83 | 13 | 0.32 | 0.03 |
| Comp. example 2 | 35 | ○ | 4 | 135 | - | 87 | 15 | 27 | 5.82 | 1.25 | 0.86 | 7 | 0.18 | 0.03 |

EP 1 702 761 B1

39

(continued)

| | Thick ness (μm) | Core layer | Surface glossiness | | | F2 value (MPa) | Whiteness (%) | L value (-) | a value (-) | b value (-) | Specific gravity (-) | Cushion factor (%) | Optical Density (%) | Average surface roughness Ra (μm) |
|---|---|---|---|---|---|---|---|---|---|---|---|---|---|---|
| | | Presence of void nucleus | Void rati o (%) | Core laye r (%) | Skin layer (%) | | | | | | | | | |
| Comp. example 3 | 35 | × | 69 | 7 | - | 15 | 88 | 83 | -2.13 | -5.25 | 0.28 | 32 | 0.78 | 1.20 |
| Comp. example 4 | 35 | × | 82 | 5 | - | 7 | 47 | 48 | -6.02 | -1.05 | 0.16 | 14 | 0.38 | 1.55 |
| Comp. example 5 | 35 | ○ | 63 | 8 | - | 88 | 90 | 84 | -0.45 | -3.45 | 0.33 | 27 | 0.74 | 1.17 |
| Comp. example 6 | 25 | × | 50 | 12 | - | 8 | 62 | 58 | -0.0.5 | -0.38 | 0.45 | 18 | 0.48 | 1.25 |

[Table 3]

| | Properties of film | | | | | Properties of receiving sheet |
|---|---|---|---|---|---|---|
| | Thermal conductivity (W/mK) | Wet tension (mN/m) m | Crease resistance | Film forming ability | Processibility | Sensitivity |
| Example 1 | 0.092 | 37 | A | ○ | ○ | A |
| Example 2 | 0.098 | 37 | A | ○ | ○ | A |
| Example 3 | 0.125 | 37 | A | ○ | ○ | B |
| Example 4 | 0.096 | 37 | A | ○ | ○ | A |
| Example 5 | 0.135 | 37 | A | ○ | ○ | B |
| Example 6 | 0.115 | 37 | A | ◎ | ○ | A |
| Example 7 | 0.094 | 37 | A | ○ | ○ | A |
| Example 8 | 0.096 | 37 | B | ○ | ○ | A |
| Example 9 | 0.115 | 37 | A | ◎ | ○ | A |
| Comp. example 1 | 0.165 | 37 | A | ○ | ○ | D |
| Comp. example 2 | 0.172 | 37 | A | ○ | × | D |
| Comp. example 3 | 0.152 | 37 | C | × | × | C |
| Comp. example 4 | 0.168 | 37 | D | × | × | C |
| Comp. example 5 | 0.080 | 37 | C | × | ○ | C |
| Comp. example 6 | 0.156 | 37 | A | × | × | D |

From Tables 1 to 3, the white film of the first to third configuration of this invention has substantially non-nucleus and uniform and fine void, and void ratio, surface glossiness and F2 value are controlled in a moderate range. Thereby, without worsening crease resistance, glossiness is high, cushion factor is high, and optical property is excellent. Moreover, since glossiness and F2 value become still higher by laminating B layer on A layer with substantially non-nucleus, uniform and fine void, the film can be manufactured stably and it excels in productivity. These properties can be controlled by raw material composition or by film production conditions.

A receiving sheet for thermal transfer recording in which such a white film is used as substrate, is improved in close contact with thermal head of printer and diffusion of heat supplied from the thermal head is prevented, therefore, is extremely excellent in sensitivity compared to conventional white film.

(Example 10)

A whole resin of A layer and a whole resin of B layer of biaxially oriented polypropylene white film of the fourth configuration were prepared as follows.

[Whole resin of A layer]

NU-100, 0.1 % by weight is mixed in WF836DG3 (hereafter, abbreviated as hPP1), 99.9% by weight. To this resin composition, 100 parts by weight, as an antioxidant, IRGANOX1010 produced by Ciba-Geigy, 0.15 parts by weight, and as a heat stabilizer, IRGAFOS168 produced by Ciba-Geigy, 0.1 part by weight were added and they were fed to a heated twin screw extruder. After molten and kneaded at 300˚C, it was extruded in a shape of gut and cooled by passing through a water bath of 20˚C, cut into 5 mm length by a chip cutter, then the chip was dried at 100˚C for 2 hours and used.

[Whole resin of B layer]

A spherical silica particles with an average particle diameter of 1.7 $\mu$m (AMT-20S produced by Mizusawa Chemistry; hereafter, may be abbreviated simply as $SiO_2$), 0.2 % by weight and a rosin based $\alpha$-crystal nucleating agent ("PINCRYSTAL" KM-1600 produced by Arakawa Chemical Ind., Ltd.), 0. 2 % by weight were added to a homopolypropylene F107BV produced by Mitsui Chemicals, Inc. (MFR:7g/10 min, 11:98%; hereafter, abbreviated as hPP2), 99.6 % by weight, and they were fed to a heated twin screw extruder. After molten and kneaded at 280˚C, it was extruded in a shape of gut and cooled by passing through a water bath of 20˚C, cut into 5 mm length by a chip cutter, then the chip was dried at 100˚C for 2 hours and used.

The above-mentioned whole resin of A layer was fed to a heated extruder (a), molten and kneaded at 210˚C, filtered by a leaf disk type filter of 35 $\mu$m cut, then, introduced to a multi-manifold type two layer T-die. Next, the above-mentioned whole resin of B layer was fed to a heated extruder (b), molten and kneaded at 260˚C, filtered by a metal gaze filter of 35 $\mu$m cut, then, introduced to the above-mentioned T-die. In the T-die, the molten polymer of extruder (b) was laminated to one side of the molten polymer of extruder (a) and co-extruded in a shape of sheet.

The molten polymer laminate thus obtained, was extruded from the T-die so that the B layer contacts with a metal drum, and solidified on the metal drum maintained at 120˚C, and formed into a shape of sheet. At this time, the sheet was closely contacted with the drum by blasting air of 60˚C from ND side of the sheet using an air knife. Here, the contact time of the sheet with the drum was 20 seconds.

The obtained undrawn laminate sheet was introduced into an oven heated to 125˚C and preheated, and then, it was longitudinally drawn 4 times and cooled by a cooling roller of 100˚C.

Successively, the above-mentioned longitudinally drawn film was introduced in a tenter by grasping both ends of the film with clips and was preheated at 150˚C, was transversely drawn 8 times in an atmosphere heated to 145˚C. Successively, in order to complete the crystal orientation of the biaxially oriented white polypropylene film to thereby impart smoothness and dimensional stability, relaxation heat treatment of 5 % in transverse direction was performed at 160˚C in the tenter, and, after cooling slowly and uniformly, cooled to room temperature.

Furthermore, in a mixed atmosphere of nitrogen volume 80 % and carbon dioxide volume 20 %, the B layer surface of the obtained white film was subjected to a corona discharge treatment. In addition, the surface (A layer) opposite to the B layer was subjected to a corona discharge treatment in air. The treating speed at this time was 15 W·min/m$^2$, and wet tension of the B layer was 42 mN/m, and wet tension of the opposite side was 37 mN/m.

And, the thickness constitution of the obtained white film is A layer/B layer = 20/5 $\mu$m.

Next, by the way of the above-mentioned [Measuring method and evaluation method of properties] (30), a receiving layer was coated on the B layer to process it to a receiving sheet for thermal transfer recording.

The resin composition of the obtained biaxially oriented white polypropylene film, the resin composition of the receiving sheet, the conditions for film formation, the properties of the film and the properties of the receiving sheet are shown in Tables 4 to 7. The obtained white film did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, specific gravity was low in an extent such that crease resistance would not decrease, cushion factor was high, and had a good optical properties (OD, whiteness, L, a, b values) . A receiving sheet for thermal transfer recording in which such a white film was used as substrate and a receiving layer was formed on the B layer was, excellent in adhesive strength of the receiving layer and excellent in sensitivity.

(Example 11)

A whole resin of A layer and a whole resin of B layer were prepared as follows.

[Whole resin of A layer]

Chips were prepared in the same conditions as Example 12 and used except that the $\beta$-nucleating agent was mixed in a ratio of 0.2 % by weight.

[Whole resin of B layer]

Chips were prepared in the same conditions as Example 12 and used except that a resin composition in which $SiO_2$ particle, 1.5 % by weight and a metal salt of organic phosphate based $\alpha$-crystal nucleating agent ("ADK STAB" NA-11 produced by Asahi Denka Co., Ltd.), 0.2 % by weight were added to a publicly known ethylene propylene random copolymer produced by Sumitomo Chemicals, Co., Ltd. (ethylene copolymerization ratio: 1 % by weight, MFR:4g/10 min, II:97%; hereafter, abbreviated simply as rEPC1), 98.3 % by weight, was used.

The above-mentioned whole resin of A layer was fed to a heated extruder (a), molten and kneaded at 210˚C, filtered by a leaf disk type filter of 35 μm cut, then, introduced to a multi-manifold type three layer T-die. Next, the above-mentioned whole resin of B layer was fed to a heated extruder (b), molten and kneaded at 260˚C, filtered by a metal gauze filter of 35 μm cut, then, introduced to the above-mentioned T-die. In the T-die, the molten polymer of extruder (b) was laminated to both sides of the molten polymer of extruder (a) and co-extruded in a shape of sheet.

The molten polymer laminate thus obtained, was extruded from the T-die so that the B layer contacts with a metal drum, and solidified on the metal drum maintained at 110˚C, and formed into a shape of sheet. At this time, the sheet was closely contacted with the drum by blasting air of 60˚C from ND side of the sheet using an air knife. Here, the contact time of the sheet with the drum was 20 seconds.

Using the obtained undrawn laminate sheet, a biaxially oriented white polypropylene sheet was prepared in the same conditions as Example 12. Using the obtained white film as a substrate, a receiving sheet was prepared by forming a receiving layer on D side of the B layers in the same conditions as Example 12.

The thickness constitution of the obtained white film was B layer/A layer/B layer = 3/29/3 μm.

μm. The results are shown in Tables 4 to 7. The obtained white film did not stick to metal drum, and was excellent in film forming ability-processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, specific gravity was low and cushion factor was high in an extent such that crease resistance would not decrease. Furthermore, in the B layer which forms a receiving layer, it had many fine voids and good optical properties. A receiving sheet for thermal transfer recording in which such a white film is used as substrate and a receiving layer is formed on the B layer was, excellent in adhesive strength of the receiving layer and significantly high in sensitivity.

(Example 12)

A whole resin of A layer and a whole resin of B layer were prepared as follows.

[Whole resin of A layer]

The chips prepared in Example 11 were used.

[Whole resin of B layer]

Chips were prepared in the same conditions as Example 11 and used except that, instead of $SiO_2$, a crosslinked polymethyl methacrylate particle of average particle diameter of 2 μm (M1002 produced by Nippon Shokubai Co., Ltd.; hereafter, may be abbreviated simply as crosslinked PMMA), 0.3 % by weight, and, instead of α-crystal nucleating agent, Polypropylene PF-814 produced by Bassell Corp. which has a long chain branch on its main chain skeleton (MFR: 3 g/ 10 min, II: 97 %; hereafter, may be abbreviated simply as HMS-PP), 3 % by weight were added.

A biaxially oriented white polypropylene film was prepared in the same conditions as Example 11 except using the above-mentioned whole resin of A layer and above-mentioned whole resin of B layer, setting the surface temperature of metal drum to 120˚C, and making the thickness constitution to B layer/A layer/B layer = 2/31/2 μm. In addition, using the obtained white film as a substrate, a receiving sheet was prepared by forming a receiving layer on D side of the B layers in the same conditions as Example 10.

The results are shown in Tables 4 to 7. The obtained white film did not stick to metal drum, and was excellent in film forming ability processibility. In addition, a crater-like defect was not observed on the surface of the film after biaxial stretching. Reflecting this, the surface roughness of the B layer was small, and the glossiness was high. In addition, because it had substantially non-nucleus and uniform void, specific gravity was low and cushion factor was high in an extent such that crease resistance would not decrease, and had good optical properties. A receiving sheet for thermal transfer recording in which such a white film is used as substrate and a receiving layer is formed on the B layer was, excellent in adhesive strength of the receiving layer and significantly high in sensitivity.

(Example 13)

A whole resin of A layer and a whole resin of B layer were prepared as follows.

[Whole resin of A layer]

The chips prepared in Example 10 were used.

[Whole resin of B layer]

Chips were prepared in the same conditions as Example 11 and used except adding SiO$_2$, 0.2 % by weight, and, as an α-crystal nucleating agent, "PINECRYSTAL" KM-1600, 0.2 % by weight.

A biaxially oriented white polypropylene film was prepared in the same conditions as Example 2 except using the above-mentioned whole resin of A layer and above-mentioned whole resin of B layer, setting the surface temperature of metal drum to 120˚C, and making the thickness constitution to B layer/A layer/B layer = 3/29/3 μm. In addition, using the obtained white film as a substrate, a receiving sheet was prepared by forming a receiving layer on D side of the B layers in the same conditions as Example 10.

The results are shown in Tables 4 to 7. The obtained white film did not stick to metal drum, and was excellent in film forming ability·processability. In addition, a crater-like defect was not observed on the surface of the film after biaxial stretching. Reflecting this, the surface roughness of the B layer was small, and the glossiness was high. In addition, because it had substantially non-nucleus, uniform and fine void, specific gravity was low and cushion factor was high in an extent such that crease resistance would not decrease, and had good optical properties. A receiving sheet for thermal transfer recording in which such a white film is used as substrate and a receiving layer is formed on the B layer was, excellent in adhesive strength of the receiving layer and significantly high in sensitivity.

(Example 14)

A whole resin of A layer, a whole resin of B layer and a whole resin of other layer (C layer) were prepared as follows.

[Whole resin of A layer]

Chips prepared in the same conditions as Example 10 except, instead of the β-crystal nucleating agent, β-crystal nucleating agent added polypropylene, "BEPOL" B-022-SP, produced by Sunoco Chemicals (abbreviated as βPP) was mixed in a ratio of 50 % by weight, was used.

[Whole resin of B layer]

Chips prepared in Example 12 were used.

[Whole resin of C layer]

The crosslinked PMMA particle, 0.3 % by weight was added to a low stereoregular homopolypropylene E2900 produced by Idemitsu Chemicals (MFR: 2.8 g/10 min, II: 85 %, meso pentad ratio (mmmm.: 73.5 %; hereafter, may be abbreviated as hPP3), 99.7 % by weight, and they were fed to a heated twin screw extruder. After molten and kneaded at 280˚C, it was extruded in a shape of gut and cooled by passing through a water bath of 20˚C, cut into 5 mm length by a chip cutter, then the chip was dried at 100˚C for 2 hours and used.

The above-mentioned whole resin of A layer was fed to a heated extruder (a), molten and kneaded at 210˚C, filtered by a leaf disk type filter of 35 μm cut, then, introduced to a multi-manifold type three layer T-die. Next, the above-mentioned whole resin of B layer was fed to a heated extruder (b), molten and kneaded at 260˚C, filtered by a metal gauze filter of 35 μm cut, then, introduced to the above-mentioned T-die. In addition, the above-mentioned whole resin of C layer was fed to a heated extruder (c), molten and kneaded at 260˚C, filtered by a metal gauze filter of 35 μm cut, then, introduced to the above-mentioned T-die.

In the T-die, both side of the molten polymer of extruder (a), the molten polymer of extruder (b) and the molten polymer of extruder (c) were laminated, respectively, and co-extruded in a shape of sheet.

The molten polymer laminate thus obtained, was extruded from the T-die so that the B layer contacts with a metal drum, and solidified on the metal drum of which surface was maintained at 120˚C, and formed into a shape of sheet. At this time, the sheet was closely contacted with the drum by blasting air of 60˚C from the side which does not contact with the metal drum (hereafter, may be abbreviated as ND side) using an air knife. Here, the contact time of the sheet with the drum was 20 seconds.

After the obtained undrawn laminate sheet was biaxially drawn, a biaxially oriented white polypropylene film was prepared in the same conditions as Example 1 except that the B layer surface which was D side was, in the air, and C layer surface which was ND side was, in a mixed atmosphere of nitrogen volume 80 % and carbon dioxide volume 20 %, subjected to a corona discharge treatment. In addition, using the obtained white film as a substrate, a receiving sheet was prepared by forming a receiving layer on ND side of the C layer in the same conditions as Example 10.

Here, wet tension of the B layer surface of the obtained white film was 37 mN/m, and wet tension of the C layer surface was 42 mN/m. In addition, the thickness constitution of the film is B layer/A layer/C layer = 3/29/3 μm.

The results are shown in Tables 4 to 7. The obtained white film did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease. Furthermore, fine voids were formed in the B layer which constitutes the receiving layer, it had a good optical property. In addition to that, by forming a receiving layer on the C layer which is excellent in adhesion with the receiving layer, the adhesion with the receiving layer was significantly improved, and a receiving sheet for thermal transfer recording in which such a white film is used was significantly high in sensitivity.

(Example 15)

A whole resin of A layer, a whole resin of B layer and a whole resin of C layer were prepared as follows.

[Whole resin of A layer]

β-crystal nucleating agent, NU-100, 0.2 % by weight, a low density polyethylene by metallocene catalyst ("ENGAGE" 8411 produced by DuPont Dow Elastomer Japan, MFR: 18 g/10 min, (190°C); hereafter, abbreviated as mVLDPE), 5 % by weight, as polyolefin based elastomer resin, were mixed to hPP1, 94.8 % by weight. To this resin composition, 100 parts by weight, IRGANOX1010, 0.15 parts by weight, IRGAFOS168, 0.1 part by weight were added and they were fed to a heated twin screw extruder. After molten and kneaded at 300°C, it was extruded in a shape of gut and cooled by passing through a water bath of 20°C, cut into 5 mm length by a chip cutter, then the chip was dried at 100°C for 2 hours and used.

[Whole resin of B layer]

The chip prepared in Example 10 was used.

[Whole resin of C layer]

SiO$_2$ particle, 0.2 % by weight was added to an ethylene propylene random copolymer produced by Sumitomo Chemicals, Co., Ltd, FM401G (ethylene copolymerization ratio: 4 % by weight, MFR: 7 g/10 min; hereafter, abbreviated as rEPC2), 99.8 % by weight, and they were fed to a heated twin screw extruder. After molten and kneaded at 280°C, it was extruded in a shape of gut and cooled by passing through a water bath of 20°C, cut into 5 mm length by a chip cutter, then the chip was dried at 100°C for 2 hours and used.

A biaxially oriented white polypropylene film was prepared in the same conditions as Example 14, except the above-mentioned whole resin of A layer, whole resin of B layer and whole resin of C layer were used. In addition, using the obtained white film as a substrate, a receiving sheet was prepared by forming a receiving layer on the C layer of ND side in the same conditions as Example 10.

The results are shown in Tables 4 to 7. The obtained white film did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. In addition to that, by forming a receiving layer on the C layer which is excellent in adhesion with the receiving layer, the adhesion with the receiving layer was significantly improved, and a receiving sheet for thermal transfer recording in which such a white film is used as substrate was significantly high in sensitivity.

(Example 16)

A whole resin of A layer, a whole resin of B layer and a whole resin of C layer were prepared as follows.

[Whole resin of A layer]

Chips were prepared in the same conditions as Example 15 and used, except making the amount of β-crystal nucleating agent to 0.05 % by weight and making the amount of mVLDPE to 7 % by weight.

[Whole resin of B layer]

Chips prepared in the same conditions as Example 15 and used, except that, instead of α-crystal nucleating agent, HMS-PP, 1 % by weight, and instead of $SiO_2$ particle, immiscible resin, PMP"TPX"MX-004, 3 % by weight were added.

[Whole resin of C layer]

Chips were prepared in the.same conditions as Example 14 and used, except PMP was added in a ratio of 3 % by weight instead of crosslinked PMMA particle.

A biaxially oriented white polypropylene film was prepared in the same conditions as Example 5, except the above-mentioned whole resin of A layer, whole resin of B layer and whole resin of C layer were used. In addition, using the obtained white film as a substrate, a receiving sheet was prepared by forming a receiving layer of the C layer of ND side in the same conditions as Example 10. Both of the average dispersion diameters of the PMP in the B and C layers are 0.6 m.

The results are shown in Tables 4 to 7. The obtained white film did not stick to metal drum, and was excellent in film forming ability·processability. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease. Furthermore, fine void was formed in the B and C layers (void ratio of C layer: 1.8%), and had good optical properties. In addition to that, by forming a receiving layer on the C layer which is excellent in adhesion with the receiving layer, the adhesion with the receiving layer was significantly improved, and a receiving sheet for thermal transfer recording in which such a white film is used was significantly high in sensitivity.

(Example 17)

A biaxially oriented white polypropylene film was prepared in the same conditions as Example 15, except increasing the line speed by increasing rotating speed of the metal drum. Here, the contact time of the sheet with the drum was 13 seconds. In addition, using the obtained white film as a substrate, a receiving sheet was prepared by forming a receiving layer on the C layer, which is ND side, in the same conditions as Example 10.

The results are shown in Tables 4 to 7. The obtained white film, although the contact time with the metal drum was shortened, did not stick to metal drum, and was excellent in film forming ability-processability. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. In addition to that, by forming a receiving layer on the C layer which is excellent in adhesion with the receiving layer, the adhesion with the receiving layer was significantly improved, and a receiving sheet for thermal transfer recording in which such a white film is used was significantly high in sensitivity.

(Example 18)

A biaxially oriented white polypropylene film was prepared in the same conditions as Example 17, except increasing the rotating speed of the metal drum. Here, the contact time with the metal drum was 10 seconds. In addition, using the white film as a substrate, a receiving sheet was prepared by forming a receiving layer on the C layer, which is ND side, in the same conditions as Example 10.

The results are shown in Tables 4 to 7. The obtained white film, although the contact time with the metal drum became extremely short, did not stick to metal drum, and was excellent in film forming ability·processability. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. In addition to that, by forming a receiving layer on the C layer which is excellent in adhesion with the receiving layer, the adhesion with the receiving layer was significantly improved, and a receiving sheet for thermal transfer recording in which such a white film is used as a substrate was significantly high in sensitivity.

(Example 19)

A biaxially oriented white polypropylene film was prepared in the same conditions as Example 12, except elevating the surface temperature of the metal drum to 125˚C. In addition, using the white film as a substrate, a receiving sheet was prepared by forming a receiving layer on the B layer, which is D side, in the same conditions as Example 10.

The results are shown in Tables 4 to 7. The obtained white film, although the temperature of the metal drum was elevated, did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. A receiving sheet for thermal transfer recording prepared, using such a white film as a substrate, by forming a receiving layer on the B layer has a high adhesion of the receiving layer, and was significantly high in sensitivity.

(Example 20)

A biaxially oriented white polypropylene film was prepared in the same conditions as Example 19, except elevating the oven temperature at the longitudinal stretching to 130˚C. In addition, using the white film as a substrate, a receiving sheet was prepared by forming a receiving layer on the B layer, which is D side, in the same conditions as Example 10.

The results are shown in Tables 4 to 7. The obtained white film did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. A receiving sheet for thermal transfer recording prepared, using such a white film as a substrate, by forming a receiving layer on the B layer has a high adhesion of the receiving layer, and was significantly high in sensitivity.

(Example 21)

A biaxially oriented white polypropylene film was prepared in the same conditions as Example 15, except laminating the B layer on both sides of the A layer, and making the film thickness constitution to B layer/A layer/B layer = 2/21/2 μm. In addition, using the white film as a substrate, a receiving sheet was prepared by forming a receiving layer on the B layer, which is D side, in the same conditions as Example 10.

The results are shown in Tables 4 to 7. The obtained white film did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. A receiving sheet for thermal transfer recording prepared, using such a white film as a substrate, by forming a receiving layer on the B layer has a high adhesion of the receiving layer, and was significantly high in sensitivity.

(Example 22)

A biaxially oriented white polypropylene film was prepared in the same conditions as Example 15, except laminating the B layer on both sides of the A layer, and making the film thickness constitution to B layer/A layer/B layer = 3/44/3 μm. In addition, using the obtained white film as a substrate, a receiving sheet was prepared by forming a receiving layer on the B layer, which is D side, in the same conditions as Example 10.

The results are shown in Tables 4 to 7. The obtained white film did not stick to metal drum, and was excellent in film forming ability·processibility. In addition, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. A receiving sheet for thermal transfer recording prepared, using such a white film as a substrate, by forming a receiving layer on the B layer has a high adhesion of the receiving layer, and was significantly high in sensitivity.

(Example 23)

A whole resin of A layer and a whole resin of B layer were prepared as follows.

[Whole resin of A layer]

Chips were prepared in the same conditions as Example 11 except using a resin composition to which hPP1, 96.8 % by weight, HMS-PP, 3 % by weight and β-crystal nucleating agent, 0.2 % by weight were added, and used.

[Whole resin of B layer]

Chips were prepared in the same conditions as Example 16, except using a resin composition to which HMS-PP was added in a ratio of 3 % by weight, and used.

A biaxially oriented white polypropylene film was prepared in the same conditions as Example 12, except using the above-mentioned whole resin of A layer and whole resin of B layer, increasing the longitudinally draw ratio to 5 times, and making the thickness constitution to B layer/A layer/B layer = 3/29/3 μm. Using the white film as a substrate, a receiving sheet was prepared in the same conditions as Example 10, by forming a receiving layer on the B layer, which is D side.

The results are shown in Tables 4 to 7. The obtained white film did not stick to metal drum, and was excellent in productivity since film formability·processibility was excellent even the longitudinal draw ratio was raised. In addition, because a crater-like defect was not observed on the surface of the film after biaxial stretching, the surface roughness of the B layer was small, and the glossiness was high. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. A receiving sheet for thermal transfer recording prepared, using such a white film as a substrate, by forming a receiving layer on the B layer has a high adhesion of the receiving layer, and was significantly high in sensitivity.

(Example 24)

A biaxially oriented white polypropylene film was prepared in the same conditions as Example 23, except increasing the longitudinal draw ratio to 6 times. In addition, using the obtained white film as a substrate, a receiving sheet was prepared by forming a receiving layer on the B layer, which is D side, in the same conditions as Example 10.

The results are shown in Tables 4 to 7. The obtained white film did not stick to metal drum, and was excellent in productivity since film formability·processibility was excellent even the longitudinal draw ratio was raised. And, because a crater-like defect was not observed on the surface of the film after biaxial stretching, the surface roughness of the B layer was small, and the glossiness was high. In addition, because it had substantially non-nucleus, uniform and fine void, the specific gravity was low and the cushion factor was high in an extent such that the crease resistance would not decrease, and had good optical properties. A receiving sheet for thermal transfer recording prepared, using such a white film as a substrate, by forming a receiving layer on the B layer has a high adhesion of the receiving layer, and was significantly high in sensitivity.

(Example 25)

A biaxially oriented white polypropylene film was prepared in the same conditions as Example 23, except decreasing the longitudinal draw ratio to 4 times.

Using a gravure coater, an anchor layer of the following composition was coated on the B layer, which is D side, of the obtained white film such that the thickness of the anchor layer after drying would be 2 μm.

[Composition of anchor layer]

- Polyester urethane based water-dispersed resin produced by Dainippon Ink & Chemicals, Inc. ("HYDRAN" AP-40F, solid content 30%): 100 parts by weight
- N-methylpyrrolidone: 15 parts by weight
- Melamine compound, "BEKKAMIN" APM produced by Dainippon Ink & Chemicals, Inc.): 5 parts by weight
- Water soluble acidic compound produced by Dainippon Ink & Chemicals, Inc. ("CATALYST" PTS): 2 parts by weight

- Spherical $SiO_2$ particle (average particle diameter 0.1 $\mu$m): 0.2 parts by weight

Using the obtained white film as a substrate, a receiving sheet was prepared by forming a receiving layer on the anchor layer in the same conditions as Example 10.

The results are shown in Tables 4 to 7. The obtained white film did not stick to metal drum, and was excellent in film forming ability-processibility. And, a crater-like defect was not observed on the surface of the film after biaxial stretching. Reflecting this, the surface roughness of the B layer was small, and the glossiness was high. In addition, because it had substantially non-nucleus, uniform and fine void, the specific gravity was low and the cushion factor was high in an extent such that the crease resistance would not decrease. In addition to that, by forming a receiving layer on the anchor layer, which is excellent in adhesion to the receiving layer, the adhesion to the receiving layer was significantly high, and the receiving sheet for thermal transfer recording prepared by using such a white film as a substrate, was significantly high in sensitivity.

[Table 4]

| | Resin composition of core layer (A layer) | | | | | | Resin composition of skin layer (B layer) | | | | | | | |
|---|---|---|---|---|---|---|---|---|---|---|---|---|---|---|
| | PP | Ratio (wt%) | β-crystal nucleating agent/βPP | Ratio (wt%) | Polymer other than PP | Ratio (wt%) | PP | Ratio (wt%) | Crystal nucleating agent | Ratio (wt% ) | Additive | Ratio (wt%) | $t_{1/2}$ (sec ) | Tc (°C) |
| Example 10 | hPP1 | 99.9 | NU-100 | 0.1 | - | - | hPP2 | 99.6 | PINECRYSTAL | 0.2 | SiO$_2$ | 0.2 | 5 | 130 |
| Example 11 | hPP1 | 99.8 | NU-100 | 0.2 | - | - | rEPC1 | 98.3 | NA-11 | 0.2 | SiO$_2$ | 1.5 | 10 | 123 |
| Example 12 | hPP1 | 99.8 | NU-100 | 0.2 | - | - | rEPC1 HMS-PP | 96.73 | - | - | Crosslinked PMMA | 0.3 | 15 | 125 |
| Example 13 | hPP1 | 99.9 | NU-100 | 0.1 | - | - | rEPC1 | 99.6 | PINECRYSTAL | 0.2 | SiO$_2$ | 0.2 | 8 | 126 |
| Example 14 | hPP1 | 50 | βPP | 50 | - | - | rEPC1 HMS-PP | 96.73 | - | - | Crosslinked PMMA | 0.3 | 15 | 125 |
| Example 15 | hPP1 | 94.8 | NU-100 | 0.2 | mVLDPE | 5 | hPP2 | 99.6 | PINECRYSTAL | 0.2 | SiO$_2$ | 0.2 | 5 | 130 |
| Example 16 | hPP1 | 92.95 | NU-100 | 0.05 | mVLDPE | 7 | hPP2 HMS-PP | 96.1 | - | - | PMP | 3 | 48 | 119 |
| Example 17 | hPP1 | 94.8 | NU-100 | 0.2 | mVLDPE | 5 | hPP2 | 99.6 | PINECRYSTAL | 0.2 | SiO$_2$ | 0.2 | 5 | 130 |
| Example 18 | hPP1 | 94.8 | NU-100 | 0.2 | mVLDPE | 5 | hPP2 | 99.6 | PINECRYSTAL | 0.2 | SiO$_2$ | 0.2 | 5 | 130 |
| Example 19 | hPP1 | 99.8 | NU-100 | 0.2 | - | - | rEPC1 HMS-PP | 96.73 | - | - | Crosslinked PMMA | 0.3 | 15 | 125 |
| Example 20 | hPP1 | 99.8 | NU-100 | 0.2 | - | - | rEPC1 HMS-PP | 96.73 | - | - | Crosslinked PMMA | 0.3 | 15 | 125 |

| | Resin composition of core layer (A layer) | | | | | | Resin composition of skin layer (B layer) | | | | | | | |
|---|---|---|---|---|---|---|---|---|---|---|---|---|---|---|
| | PP | Ratio (wt%) | β-crystal nucleating agent/βPP | Ratio (wt%) | Polymer other than PP | Ratio (wt%) | PP | Ratio (wt%) | Crystal nucleating agent | Ratio (wt% ) | Additive | Ratio (wt%) | $t_{1/2}$ (sec ) | Tc (°C) |
| Example 21 | hPP1 | 94.8 | NU-100 | 0.2 | mVLDPE | 5 | hPP2 | 99.6 | PINECRYSTAL | 0.2 | $SiO_2$ | 0.2 | 5 | 130 |
| Example 22 | hPP1 | 94.8 | NU-100 | 0.2 | mVLDPE | 5 | hPP2 | 99.6 | PINECRYSTAL | 0.2 | $SiO_2$ | 0.2 | 5 | 130 |
| Example 23 | hPP1 HMS-PP | 96.8 3 | NU-100 | 0.2 | - | - | hPP2 HMS-PP | 96.83 | - | - | $SiO_2$ | 0.2 | 8 | 126 |
| Example 24 | hPP1 HMS-PP | 96.8 3 | NU-100 | 0.2 | - | - | hPP2 HMS-PP | 96.83 | - | - | $SiO_2$ | 0.2 | 8 | 126 |
| Example 25 | hPP1 HMS-PP | 96.8 3 | NU-100 | 0.2 | - | - | hPP2 HMS-PP | 96.83 | - | - | $SiO_2$ | 0.2 | 8 | 126 |

PP: polypropylene, rEPC: ethylene·propylene random copolymer, βPP: β-crystal nucleating agent added polypropylene, $t_{1/2}$: half crystallization time, Tc: crystallization temperature, PMP: polymethylpentene, $SiO_2$: silica particle, PMMA: polymethyl methacrylate, βbEPC: β-crystal nucleating agent added thylene·propylene block copolymer

[Table 5]

| | Skin layer (resin composition of C layer) | | | | Film forming conditions | | | | | Film forming ability | Processibility |
|---|---|---|---|---|---|---|---|---|---|---|---|
| | PP based resin | Ratio (wt %) | Additive | Ratio (wt %) | Thickness constitution ($\mu$m) | CD temp. (°C) | CD contact time (sec) | Stickiness to CD | Draw ratio [MD x TD] | | |
| Example 10 | - | - | - | - | A/B (20/5) | 120 | 20 | ○ | 4 × 8 | ○ | ○ |
| Example 11 | - | - | - | - | B/A/B (3/29/3) | 110 | 20 | ○ | 4 × 8 | ◎ | ○ |
| Example 12 | - | - | - | - | B/A/B (2/31/2) | 120 | 20 | ○ | 4 × 8 | ◎ | ○ |
| Example 13 | - | - | - | - | B/A/B (3/29/3) | 120 | 20 | ○ | 4 × 8. | ○ | ○ |
| Example 14 | hPP3 | 99.7 | Crosslin ked PMMA | 0.3 | B/A/C (3/29/3) | 120 | 20 | ○ | 4 × 8 | ○ | ○ |
| Example 15 | rEPC2 | 99.8 | SiO$_2$ | 0.2 | B/A/C (3/29/3) | 120 | 20 | ○ | 4 × 8 | ◎ | ○ |
| Example 16 | hPP3 | 97 | PMP | 3 | B/A/C) (3/29/3) | 120 | 20 | ○ | 4 × 8 | ○ | ○ |
| Example 17 | rEPC2 | 99.8 | SiO$_2$ | 0.2 | B/A/C (3/29/3) | 120 | 13 | ○ | 4 × 8 | ◎ | ○ |
| Example 18 | rEPC2 | 99.8 | SiO$_2$ | 0.2 | B/A/C (3/29/3) | 120 | 10 | ○ | 4 × 8 | ○ | ○ |
| Example 19 | - | - | - | - | B/A/B (2/31/2) | 125 | 20 | ○ | 4 × 8 | ○ | ○ |
| Example 20 | - | - | - | - | B/A/B (2/31/2) | 125 | 20 | ○ | 4 × 8 | ◎ | ○ |
| Example 21 | - | - | - | - | (B/A/B) (2/21/2) | 120 | 20 | ○ | 4 × 8 | ◎ | ○ |
| Example 22 | - | - | - | - | B/A/B (3/44/3) | 120 | 20 | ○ | 4 × 8 | ◎ | ○ |

| | Skin layer (resin composition of C layer) | | | | Film forming conditions | | | | | Film forming ability | Processability |
|---|---|---|---|---|---|---|---|---|---|---|---|
| | PP based resin | Ratio (wt %) | Additive | Ratio (wt % ) | Thickness constitution (μm) | CD temp. (˚C) | CD contact time (sec) | Stickiness to CD | Draw ratio [MD x TD] | | |
| *Example 23 | - | - | - | - | B/A/B (3/29/3) | 120 | 20 | ○ | 5 × 8 | ◎ | ○ |
| Example 24 | - | - | - | - | B/A/B (3/29/3) | 120 | 20 | ○ | 6 × 8 | ◎ | ○ |
| Example 25 | - | - | - | - | B/A/B (3/29/3) | 120 | 20 | ○ | 4 × 8 | ◎ | ○ |
| CD: casting drum, A: A layer, B: B layer, C: C layer | | | | | | | | | | | |

[Table 6]

| | A layer | | | | B layer | | | | Surface defect |
|---|---|---|---|---|---|---|---|---|---|
| | Thickeness (μm) | β-crystal activity | Specific gravity | Substantially non-nucleus void | β-crystal activity | Void ratio (%) | Surface glossiness (%) | Average surface roughness, Ra (μm) | |
| Example 10 | 25 | ○ | 0.57 | ○ | × | 0.1 | 130 | 0.24 | ○ |
| Example 11 | 35 | ○ | 0.62. | ○ | × | 1.2 | 85 | 0.45 | ○ |
| Example 12 | 35 | ○ | 0.53 | ○ | × | 0.15 | 103 | 0.33 | ○ |
| Example 13 | 35 | ○ | 0.56 | ○ | × | 0.1 | 125 | 0.27 | ○ |
| Example 14 | 35 | ○ | 0.69 | ○ | × | 0.15 | 103 | 0.33 | ○ |
| Example 15 | 35 | ○ | 0.56 | ○ | × | 0.1 | 125 | 0.25 | ○ |
| Example 16 | 35 | ○ | 0.57 | ○ | × | 2.7 | 7.0 | 0.47 | ○ |
| Example 17 | 35 | ○ | 0.6 | ○ | × | 0.1 | 125 | 0.27 | ○ |
| Example 18 | 35 | ○ | 0.65 | ○ | × | 0.1 | 125 | 0.27 | ○ |
| Example 19 | 35 | ○ | 0.5 | ○ | × | 0.15 | 103 | 0.33 | ○ |
| Example 20 | 35 | ○ | 0.55 | ○ | × | 0.15 | 98 | 0.37 | ○ |
| Example 21 | 25 | ○ | 0.53 | ○ | × | 0.1 | 127 | 0.23 | ○ |
| Example 22 | 50 | ○ | 0.54 | ○ | × | 0.1 | 122 | 0.32 | ○ |
| Example 23 | 35 | ○ | 0.38 | ○ | × | 0.1 | 128 | 0.22 | ○ |
| Example 24 | 35 | ○ | 0.33 | ○ | × | 0.1 | 130 | 0.15 | ○ |
| Example 25 | 35 | ○ | 0.56 | ○ | × | 0.1 | 125 | 0.27 | ○ |

Ra: Average surface roughness, measured for skin layer (B layer) of D side

54

[Table 7]

| | Properties of white film | | | | | | | Properties of receiving layer | |
|---|---|---|---|---|---|---|---|---|---|
| | Crease resistance | Cushion factor (%) | OD | Whiteness (%) | L value | a value | b value | Sensitivity | Adhesion of receiving layer |
| Example 10 | A | 20 | 0.70 | 83 | 78 | -0.52 | -3.75 | A | ○ |
| Example 11 | A | 18 | 0.68 | 77 | 68 | -0.32 | -3.95 | A | ○ |
| Example 12 | A | 21 | 0.73 | 84 | 82 | -0.60 | -4.23 | A | ○ |
| Example 13 | A | 20 | 0.71 | 83 | 81 | -0.57 | -9.10 | A | ○ |
| Example 14 | A | 17 | 0.65 | 75 | 65 | -0.28 | -2.65 | B | ◎ |
| Example 15 | A | 20 | 0.71 | 83 | 80 | -0.55 | -4.02 | A | ◎ |
| Example 16 | A | 20 | 0.75 | 85 | 83 | -0.53 | -3.95 | A | ◎ |
| Example 17 | A | 18 | 0.68 | 77 | 68 | -0.32 | -2.73 | A | ◎ |
| Example 18 | A | 19 | 0.67 | 76 | 67 | -0.30 | -2.70 | B | ◎ |
| Example 19 | A | 23 | 0.76 | 885 | 83 | -0.53 | -3.96 | A | ○ |
| Example 20 | A | 20 | 0.72 | 84 | 81 | -0.54 | -3.92 | A | ○ |
| Example 21 | A | 21 | 0.73 | 84 | 82 | -0.54 | -3.98 | A | ○ |
| Example 22 | A | 21 | 0.73 | 84 | 82 | -0.54 | -3.98 | A | ○ |
| Example 23 | B | 24 | 0.80 | 90 | 87 | -0.64 | -4.23 | A | ○ |
| Example 24 | B | 25 | 0.82 | 91 | 93 | -0.70 | -4.97 | A | ○ |
| Example 25 | A | 20 | 0.71 | 83 | 81 | -0.57 | -4.10 | A | ◎ |
| OD: Optical density | | | | | | | | | |

From Tables 4 to 7, the white film of the fourth configuration of this invention has β-crystal activity, in which B layer of which crystallization speed is high is laminated to A layer which has substantially non-nucleus, uniform and fine voids, and its specific gravity is controlled in an adequate range. By this, without damaging its crease resistance, it is possible to manufacture a film of which surface roughness is small, glossiness is high, cushion factor is high and optical properties are good. In addition to that, these properties can be controlled by raw material composition or film forming conditions.

Furthermore, since an excellent white film similar to the above-mentioned can be obtained without causing a stickiness or surface defect, even though undrawn sheet is produced in a high speed casting condition, its productivity is excellent.

A receiving sheet for thermal transfer recording in which such a white film is used as a substrate, has a significantly high sensitivity compared to conventional white film, since close contact with printer thermal head is improved and diffusion of heat supplied from the thermal head is prevented.

(Comparative example 7)

A whole resin of A layer prepared in the same conditions as Example 10, except changing the amount of β-crystal nucleating agent to 0.05 % by weight, was fed to a heated extruder (a), molten and kneaded at 210˚C, filtered by a leaf disk type filter of 35 μm cut, then, introduced to a monolayer T-die. Next, the molten polymer was extruded in a shape of sheet and solidified on the metal drum of which surface temperature was maintained at 120˚C, and formed into a shape of sheet. At this time, the sheet was closely contacted with the drum by blasting air of 60˚C from ND side of the sheet using an air knife. Here, the contact time of the sheet with the drum was 20 seconds.

Using the obtained undrawn sheet, a biaxially oriented micro-porous film of 35 μm thickness was prepared in the same conditions as Example 10. Using the obtained micro-porous film as a substrate, a receiving sheet was prepared by forming a receiving layer on the surface of D side in the same conditions as Example 10.

The results are shown in Tables 8 to 11. The obtained micro-porous film did not stick to metal drum, and was excellent in film formbility and processibility. In addition, a crater-like defect was not observed on the surface of the film after biaxial drawing. However, since B layer is not laminated, there was no glossy feeling. In addition, since it has through holes, when a receiving' layer is coated, the coating material penetrates inside the film, and there was also no glossy feeling after processed into a receiving sheet. Furthermore, the adhesion of the receiving layer was low, which might be due to a lot of voids on the film surface.

(Comparative example 8)

A biaxially oriented micro-porous film having 35 μm thickness was prepared in the same conditions as Comparative' example 7, except that the whole resin of A layer used in Example 10 was used. And, using the obtained micro-porous film as a substrate, a receiving sheet was prepared by forming a receiving layer on the surface of D side in the same conditions as Example.

The results are shown in Tables 8 to 11. The obtained micro-porous film did not stick to metal drum, and was excellent in film formability and processibility. In addition, a crater-like defect was not observed on the surface of the film after biaxial drawing. However, since B layer is not laminated, there was no glossy feeling. In addition, since it has through holes, when a receiving layer is coated, the coating material penetrates inside the film, and there was also no glossy feeling after processed into a receiving sheet. Furthermore, the adhesion of the receiving layer was low, which might be due to a lot of voids on the film surface.

(Comparative example 9)

A biaxially oriented micro-porous film having 35 μm thickness was prepared in the same conditions as Comparative example 7, except that the whole resin of A layer used in Example 11 was used. And, using the obtained micro-porous film as a substrate, a receiving sheet was prepared by forming a receiving layer on the surface of D side in the same conditions as Example.

The results are shown in Tables 8 to 11. The obtained micro-porous film did not stick to metal drum, and was excellent in film formability and processibility. In addition, a crater-like defect was not observed on the surface of the film after biaxial drawing. However, since B layer is not laminated, there was no glossy feeling. In addition, since it has through holes, when a receiving layer is coated, the coating material penetrates inside the film, and there was also no glossy feeling after processed into a receiving sheet. Furthermore, the adhesion of the receiving layer was low, which might be due to a lot of voids on the film surface.

(Comparative example 10)

A whole resin of A layer and a whole resin of B layer were prepared as follows.

[Whole resin of A layer]

Chips prepared in Example 11 were used.

[Whole resin of B layer]

Chips were prepared in the same conditions as Example 10, except that the α-crystal nucleating agent was not added, and used.

A biaxially oriented white polypropylene film was prepared in the same conditions as Example 12, except that the above-mentioned whole resin of A layer and whole resin of B layer were used and that the thickness constitution was changed to 3/29/3 μm. In addition, using the obtained white film as a substrate, a receiving sheet was prepared by forming a receiving layer on the B layer, which is D side, in the same conditions as Example 10.

The results are shown in Tables 8 to 11. The obtained white film stuck to metal drum. In addition, a lot of crater-like defects were observed on the surface of the film after biaxial drawing. Reflecting this, the glossiness of the B layer was very low. In addition, a receiving sheet for thermal transfer recording prepared, using this white film as a substrate, by forming a receiving sheet on the B layer was low in sensitivity.

(Comparative example 11)

A biaxially oriented white polypropylene film was prepared in the same conditions as Example 12, except that the HMS-PP was not added and that the thickness constitution was changed to 3/29/3 μm. In addition, using the obtained white film as a substrate, a receiving sheet was prepared by forming a receiving layer on the B layer, which is D side, in the same conditions as Example 10.

The results are shown in Tables 8 to 11. The obtained white film stuck to metal drum. In addition, a lot of crater-like defects were observed on the surface of the film after biaxial drawing. Reflecting this, the glossiness of the B layer was very low. In addition, a receiving sheet for thermal transfer recording prepared, using this white film as a substrate, by forming a receiving sheet on the B layer was low in sensitivity.

(Comparative example 12)

It was tried to prepare a biaxially oriented white polypropylene film in the same conditions as Comparative example 10, except that the line speed was increased by increasing rotating speed of the metal drum. And, the contact time with the metal drum was 13 seconds

The results are shown in Tables 8 to 11. Since the undrawn sheet stuck to the metal drum and many stuck traces were observed on the surface of the undrawn sheet, it was a film which cannot be industrially produced.

(Comparative example 13)

It was tried to prepare a biaxially oriented white polypropylene film in the same conditions as Comparative example 12, except that the rotating speed of the metal drum was further increased. And, the contact time with the metal drum was 10 seconds.

The results are shown in Tables 8 to 11. The undrawn sheet stuck to the metal drum and wound many laps around the drum without being peeled off. It was a film which cannot be industrially produced since it was impossible to be peeled off from the metal drum at the above-mentioned speed.

(Comparative example 14)

It was tried that to prepare a biaxially oriented white polypropylene film in the same conditions as Comparative example 10, except that the surface temperature of the metal drum was raised to 125°C.

The results are shown in Tables 8 to 11. The undrawn sheet stuck to the metal drum and extremely many stuck traces were observed on the surface of the undrawn sheet. Furthermore, although a white film after biaxial drawing could barely be obtained by raising the surface temperature of the metal drum, since further increased crater-like defects were observed on the film surface, it was a film which cannot be industrially produced.

(Comparative example 15)

A whole resin of A layer and a whole resin of B layer were prepared as follows.

[Whole resin of A layer]

In Example 10, NU-100, 0.1 % by weight as β-crystal nucleating agent, and polycarbonate ("TARFLON" A1500 produced by Idemitsu Chemicals, MFR: 65 g/10 min (300°C), Tg: 150°C; hereafter, abbreviated simply as PC), 15 % by weight as imcompatible resin were added to homopolypropylene FS2016 produced by Sumitomo Chemicals, Co., Ltd. (MFR: 2.3 g/10 min, II: 96.5 %; hereafter, may be abbreviated simply as hPP4), 84.9 % by weight, and they were fed to a heated twin screw extruder. After molten and kneaded at 270˚C, it was extruded in a shape of gut and cooled by passing through a water bath of 20˚C, cut into 5 mm length by a chip cutter, then the chip was dried at 100˚C for 2 hours and used.

[Whole resin of B layer]

Chips prepared in the same conditions as Example 10, except that the α-crystal nucleating agent was not added, were used.

The above-mentioned whole resin of A layer was fed to a heated extruder (a), molten and kneaded at 280˚C, filtered by a leaf disk type filter of 35 μm cut, then, introduced to a multi-manifold type three layer composite T-die. Next, the above-mentioned whole resin of B layer was fed to a heated extruder (b), molten and kneaded at 260˚C, filtered by a metal gaze filter of 35 μm cut, then, introduced to the above-mentioned T-die. In the T-die, the molten polymer of extruder (b) was laminated to both sides of the molten polymer of extruder (a) and co-extruded in a shape of sheet.

The molten polymer laminate thus obtained, was extruded from the T-die so that the B layer contacts with a metal drum, and solidified on the metal drum of which surface temperature was maintained at 80˚C, and formed into a shape of sheet. At this time, the sheet was closely contacted with the drum by blasting air of 30˚C from ND side of the sheet using an air knife. Here, the contact time of the sheet with the drum was 20 seconds.

The obtained undrawn laminate sheet was introduced into an oven heated to 150˚C, preheated and then longitudinally drawn 5 times and cooled by a cooling roller of 30˚C.

Successively, the above-mentioned longitudinally drawn film was introduced in a tenter by grasping both ends of the film with clips and was preheated at 165˚C, and was transversely drawn 9 times in an atmosphere heated to 165˚C. Successively, in order to complete the crystal orientation of the biaxially orientated white polypropylene film to thereby impart flatness and dimensional stability, it was heat set at 160˚C while subjecting to 8 % relaxation in transverse direction in the tenter, and, after cooling slowly and uniformly, cooled to room temperature

Furthermore, in a mixed atmosphere of nitrogen volume 80 % and carbon dioxide volume 20 %, the B layer surface of D side, and in the air, the B layer surface of ND side of the obtained white film, were subjected to corona discharge treatments. The treating speed at this time was 15 W·min/m$^2$, and wet tension of the B layer of D side was 42 mN/m, and wet tension of the B layer of ND side was 37 mN/m.

In addition, the thickness constitution of the obtained white film was B layer/A layer/B layer = 3/29/3 μm

Next, using the obtained white film as a substrate, a receiving sheet was prepared in the same conditions as Example 10, by forming a receiving layer on D side surface of the film.

The results are shown in Tables 8 to 11. The obtained white film, although sticking or defect was not observed, had not substantially non-nucleus void and its void was rough and big. Accordingly, the receiving sheet for thermal transfer recording obtained, using this white film as a substrate, by forming a receiving layer on the B layer was low in sensitivity.

(Comparative example 16)

A whole resin of A layer and a whole resin of B layer were prepared as follows.

[Whole resin of A layer]

β-crystal nucleating agent added ethylene polypropylene block copolymer ("BEPOL" BI-4020-SP produced by Sunoco Chemicals, MFR: 2 g/10 min; hereafter abbreviated as βbEPC), 40 % by weight was added to hPP4, 60 % by weight and they were fed to a heated twin screw extruder. After molten and kneaded at 270˚C, it was extruded in a shape of gut and cooled by passing through a water bath of 20˚C, cut into 5 mm length by a chip cutter, then the chips were dried at 100˚C for 2 hours and used.

[Whole resin of B layer]

The above-mentioned βbEPC was used.

The above-mentioned whole resin of A layer was fed to a heated extruder (a), molten and kneaded at 210˚C, filtered by a leaf disk type filter of 35. μm cut, then, introduced to a multi-manifold type three layer composite T-die. Next, the above-mentioned whole resin of B layer was fed to a heated extruder (b), molten and kneaded at 240˚C, filtered by a metal gaze filter of 35 μm cut, then, introduced to the above-mentioned T-die. In the T-die, the molten polymer of extruder (b) was laminated to both sides of the molten polymer of extruder (a) and co-extruded in a shape of sheet.

The molten polymer laminate thus obtained, was extruded from the T-die so that the B layer contacts with a metal drum, and solidified on the metal drum of which surface temperature was maintained at 120°C, and formed into a shape of sheet. At this time, the sheet was tightly contacted with the drum by blasting air of 60°C from ND side of the sheet using an air knife. Here, the contact time of the sheet with the drum was 20 seconds.

Using the obtained undrawn laminate sheet, a biaxially oriented white polypropylene film was prepared in the same conditions as Example 10, except that the oven temperature at the longitudinal drawing was changed to 110°C. Furthermore, using the obtained white film as a substrate, a receiving sheet was prepared in the same conditions as Example 10 by forming a receiving layer on the B layer of D side.

Here, the thickness constitution of the obtained white film was B layer/A layer/B layer = 2.5/30/2.5 $\mu$m.

The results are shown in Tables 8 to 11. As to the obtained white film, although sticking or surface defect was not observed, surface roughness was large such that stylus was caught and Ra could not be measured, and the surface glossiness became significantly low. And, many particles estimated to be caused by gelation were observed. Furthermore, it had not substantially non-nucleus void and its void was rough and big. Still furthermore, when a receiving layer was coated, the coating material partly penetrated inside the film, the receiving sheet was not glossy, and the adhesion of the receiving layer was low because it had a lot of voids in the skin layer. Accordingly, the receiving sheet for thermal transfer recording prepared, using this white film as a substrate, by forming a receiving layer on the B layer, was very low in sensitivity.

(Comparative example 17)

A whole resin of A layer was prepared as follows.

[Whole resin of A layer]

Calcium carbonate (produced by Siraishi Calcium Kaisha, Ltd., average particle diameter: 4 $\mu$m; hereafter, abbreviated simply as $CaCO_3$) was added to hPP1, 70 % by weight, in a ratio of 30 % by weight and they were fed to a heated twin screw extruder. After molten and kneaded at 200°C, it was extruded in a shape of gut and cooled by passing through a water bath of 20°C, cut into 5 mm length by a chip cutter, then the chips were dried at 100°C for 2 hours and used.

The above-mentioned whole resin of A layer was fed to a heated extruder (a), molten and kneaded at 200°C, filtered by a metal gaze filter of 60 $\mu$m cut, then, introduced to a monolayer T-die. Next, the molten polymer was extruded in a shape of sheet, solidified on a metal drum of which surface temperature was maintained at 90°C, and formed into a shape of sheet. At this time, the sheet was closely contacted with the drum by blasting air of 30°C from ND side using an air knife. Here, the contact time of the sheet with the drum was 20 seconds.

The obtained undrawn sheet was introduced into an oven heated to 120°C and preheated, and then, it was longitudinally drawn 4.5 times and cooled by a cooling drum of 100°C.

Successively, the above-mentioned longitudinally drawn film was introduced in a tenter by grasping both ends of the film with clips and was preheated at 140°C, was transversely drawn 10 times in an atmosphere heated to 135°C. Successively, in order to complete the crystal orientation of the biaxially orientated white polypropylene film to thereby impart flatness and dimensional stability, it was heat set at 150°C while relaxing 5 % in transverse direction in the tenter, and, after cooling slowly and uniformly, cooled to room temperature.

Furthermore, in a mixed atmosphere of nitrogen volume 80 % and carbon dioxide volume 20 %, the surface of D side, and in the air, the surface of ND side of the obtained white film were subjected to corona discharge treatments. The treating speed at this time was 15 W-min/m , and wet tension of D side surface was 42 mN/m, and wet tension of ND side surface was 37 mN/m.

The thickness of the white film was 35 $\mu$m.

Next, using the obtained white film as a substrate, a receiving sheet was prepared in the same conditions as Example 10 by forming a receiving layer on the surface of D side of the film.

The results are shown in Tables 8 to 11. This obtained white film, although a sticking or surface defect was not observed, had no glossy feeling since B layer was not laminated. And, there was no substantially non-nucleus void and its void was quite big. Furthermore, the processability was inferior since, in the film forming process and in the process for processing to a receiving sheet, white powder of CaCO3 particles which were fallen out soiled the process.

In addition to that, when a receiving layer was coated, the coating material partly penetrated inside the film, the receiving sheet was not glossy, and the adhesion of the receiving layer was low because it had a lot of voids on the film surface. Accordingly, the receiving sheet for thermal transfer recording prepared, using this white film as a substrate, by forming a receiving layer on the B layer, was very low in sensitivity.

(Comparative example 18)

A biaxially oriented white polypropylene film was prepared in the same conditions as Comparative example 11, except that the surface temperature of the metal drum was lowered to 100˚C. Furthermore, using the obtained white film as a substrate, a receiving sheet was prepared by forming a receiving layer on the B layer, which was D side, in the same conditions as Example 10.

The results are shown in Tables 8 to 11. This obtained film, although a sticking or surface defect was not observed, had high specific gravity because the surface temperature of the metal drum was lower more than necessary. Therefore, a receiving sheet for thermal transfer recording prepared, using this white film as a substrate, by forming a receiving layer on the B layer, was very low in sensitivity.

(Comparative example 19)

It was tried to prepare a biaxially oriented white polypropylene film in the same conditions as Comparative example 11, except that the temperature of the oven at the longitudinal drawing was changed to 105˚C to lower the specific gravity of the white film.

The results are shown in Tables 8 to 11. It was a film which cannot be industrially produced since in the biaxial drawing process, especially in the transverse drawing process, a lot of film breakages occurred.

(Comparative example 20)

It was tried to prepare a biaxially oriented white polypropylene film in the same conditions as Comparative example 12, except that the longitudinal drawing ratio was raised to 6 times.

The results are shown in Tables 8 to 11. It was a film which entirely cannot be industrially produced since in both of the longitudinal drawing process and transverse drawing process, a lot of film breakages occurred.

(Comparative example 21)

It was tried to prepare a biaxially oriented white film in the same conditions as Example 11 except that the following whole resin of A layer and the whole resin of B layer were used.

[Whole resin of A layer]

Chips were prepared in the same conditions as Example 11, except that the β-crystal nucleating agent was not added.

[Whole resin of B layer]

Chips were prepared in the same conditions as Example 11, except that a resin composition to which $SiO_2$ was added in the ratio of 0.3 % by weight, was used.

The results are shown in Tables 8 to 11. It was a film which cannot be industrially produced since the obtained undrawn sheet had not β-crystal activity, a lot of film breakages occurred, in the biaxial drawing process, especially in the transverse drawing process

[Table 8]

| | Resin composition of core layer (A layer) | | | | | | Skin layer (resin composition of B layer) | | | | | | | |
|---|---|---|---|---|---|---|---|---|---|---|---|---|---|---|
| | PP | Ratio (wt %) | β-crystal nucleating agent/βPP | Ratio (wt %) | Other polymer other than PP | Ratio (wt%) | PP | Ratio (wt %) | Crystal nucleating agent | Ratio (wt%) | Additive | Ratio (wt%) | $t_{1/2}$ (sec ) | Tc (°C) |
| Comp. example 7 | hPP1 | 99.95 | NU-100 | 0.05 | - | - | - | - | - | - | - | - | - | - |
| Comp. example 8 | hPP1 | 99.9 | NU-100 | 0.1 | - | - | - | - | - | - | - | - | - | - |
| Comp. example 9 | hPP1 | 99.8 | NU-100 | 0.2 | - | - | - | - | - | - | - | - | - | - |
| Comp. example 10 | hPP1 | 99.8. | NU-100 | 0.2 | - | - | hPP2 | 99.8 | - | - | SiO₂ | 0.2 | 122 | 113 |
| Comp. example 11 | hPP1 | 99.8 | NU-100 | 0.2 | - | - | rEPC1 | 99.7 | - | - | Cross-linked PMMA | 0.3 | 223 | 111 |
| Comp. example 12 | hPP1 | 99.8 | NU-100 | 0.2 | - | - | hPP2 | 99.8 | - | - | SiO₂ | 0.2 | 122 | 113 |
| Comp. example 13 | hPP1 | 99.8 | NU-100 | 0.2 | - | - | hPP2 | 99.8 | - | - | SiO₂ | 0.2 | 122 | 113 |
| Comp. example 14 | hPP1 | 99.8 | NU-100 | 0.2 | - | - | hPP2 | 99.8 | - | - | SiO₂ | 0.2 | 122 | 113 |
| Comp. example 15 | hPP4 | 84.9 | NU-100 | 0.1 | PC | 15 | hPP2 | 99.8 | - | - | SiO₂ | 0.2 | 122 | 113 |

| | Resin composition of core layer (A layer) | | | | | Skin layer (resin composition of B layer) | | | | | | | |
|---|---|---|---|---|---|---|---|---|---|---|---|---|---|
| | PP | Ratio (wt %) | β-crystal nucleating agent/βPP | Ratio (wt %) | Other polymer other than PP | Ratio (wt%) | PP | Ratio (wt %) | Crystal nucleating agent | Ratio (wt%) | Additive | Ratio (wt%) | $t_{1/2}$ (sec) | Tc (°C) |
| Comp. example 16 | hPP4 | 60 | βbEPC | 40 | - | - | βbEPC | 100 | - | - | - | - | 22. | 129 |
| Comp. example 17 | hPP1 | 70 | - | - | (CaCO₃) | (30) | - | - | - | - | - | - | - | - |
| Comp. example 18 | hPP1 | 99.8 | NU-100 | 0.2 | - | - | rEPC1 | 99.7 | - | - | Cross-linked PMMA | 0.3 | 223 | 111 |
| Comp. example 19 | hPP1 | 99.8 | NU-100 | .0.2 | - | - | rEPC1 | 99.7 | - | - | Cross-linked PMMA | 0.3 | 223 | 111 |
| Comp. example 20 | hPP1 | 99.8 | NU-100 | 0.2 | - | - | rEPC1 | 99.7 | - | - | Cross-linked PMMA | 0.3 | 223 | 111 |
| Comp. example 21 | hPP1 | 100 | - | - | - | - | rEPC1 | 98.3 | NA-11 | 0.2 | SiO₂ | 1.5 | 10 | 123 |
| PC: Polycarbonate, CaCO₃: Calcium carbonate | | | | | | | | | | | | | | |

EP 1 702 761 B1

[Table 9]

| | Skin layer (resin composition of C layer) | | | | Film forming conditions | | | | | Film forming ability | Processibillity |
|---|---|---|---|---|---|---|---|---|---|---|---|
| | PP based resin | Ratio (wt%) | Additive | Ratio (wt%) | Thickness constitution (μm) | CD temp (°C) | CD contact time (sec) | Stick to CD | Draw ratio (longitudinal direction) | | |
| Comp. example 7 | - | - | - | - | A (35) | 120 | 20 | ○ | 4 × 8 | ○ | ○ |
| Comp. example 8 | - | - | - | - | A (35) | 120 | 20 | ○ | 4 × 8 | ○ | ○ |
| Comp. example 9 | - | - | - | - | A (35) | 120 | 20 | ○ | 4 × 8 | ○ | ○ |
| Comp. example 10 | - | - | - | - | B/A/B (3/29/3) | 120 | 20 | × | 4 × 8 | ○ | ○ |
| Comp. example 11 | - | - | - | - | B/A/B (3/2.9/3) | 120 | 20 | × | 4 × 8 | ○ | ○ |
| Comp. example 12 | - | - | - | - | B/A/B (-/-/-) | 120 | 13 | × | - | - | - |
| Comp. example 13 | - | - | - | - | B/A/B (-/-/-) | 120 | 10 | × | - | - | - |
| Comp. example 14 | - | - | - | - | B/A/B (-/-/-) | 125 | 20 | × | - | - | - |
| Comp. example 15 | - | - | - | - | B/A/B (3/29/3) | 80 | 20 | ○ | 5 × 9 | ○ | ○ |
| Comp. example 16 | - | - | - | - | B/A/B (2.5 /30/2.5) | 120 | 20 | ○ | 4 × 8 | ○ | ○ |

| | Skin layer (resin composition of C layer) | | | | Film forming conditions | | | | | Film forming ability | Processibillity |
|---|---|---|---|---|---|---|---|---|---|---|---|
| | PP based resin | Ratio (wt%) | Additive | Ratio (wt%) | Thickness constitution ($\mu$m) | CD temp (°C) | CD contact time (sec) | Stick to CD | Draw ratio (longitudinal direction) | | |
| Comp. example 17 | - | - | - | - | A (35) | 90 | 20 | ○ | 4.5 × 10 | ○ | × |
| Comp. example 18 | - | - | - | - | B/A/B (3/29/3) | 100 | 20 | ○ | 4 × 8 | ○ | ○ |
| Comp. example 19 | - | - | - | - | B/A/B (-/-/-) | 100 | 20 | O | 4 × - | × | ○ |
| Comp. example 20 | - | - | - | - | B/A/B (-/-/-) | 120 | 20 | ○ | 6 × - | × | ○ |
| Comp. example 21 | - | - | - | - | B/A/B (3/29/3) | 110 | 20 | ○ | 4 × - | × | ○ |

EP 1 702 761 B1

[Table 10]

| | Thickness (μm) | β-crystal activity | Specific gravity | A layer | B layer | | | | Surface defect |
|---|---|---|---|---|---|---|---|---|---|
| | | | | Substantially non-nucleus void | β-crystal activity | Void ratio (%) | Surface glossiness (%) | Average surface roughness Ra (μm) | |
| Comp. example 7 | 25 | ○ | 0.59 | ○ | - | - | - | - | ○ |
| Comp. example 8 | 25 | ○ | 0.52 | ○ | - | - | - | - | ○ |
| Comp. example 9 | 25 | ○ | 0.48 | ○ | - | - | - | - | ○ |
| Comp. example 10 | 35 | ○ | 0.53 | ○ | × | 0.1 | 55 | 0.47 | × |
| Comp. example 11 | 35 | ○ | 0.53 | ○ | × | 0.1 | 43 | 0.53 | × |
| Comp. example 12 | - | - | - | - | - | - | - | - | - |
| Comp. example 13 | - | - | - | - | - | - | - | - | - |
| Comp. example 14 | - | - | - | - | - | - | - | - | - |
| Comp. example 15 | 35 | ○ | 0.75 | × | × | 0.05 | 117 | 0.03 | ○ |
| Comp. example 16 | 35 | ○ | 0.56 | ○ | ○ | 31 | 20 | (immeasurable) | (×) |
| Comp. example 17 | 35 | ○ | 0.66 | × | - | - | - | - | (×) |
| Comp. example 18 | 35 | ○ | 0.75 | ○ | × | ○ | 123 | 0.23 | ○ |
| Comp. example 19 | - | ○ | - | - | × | - | - | - | - |

65

(continued)

| | Thickness (μm) | β-crystal activity | Specific gravity | A layer | | B layer | | | |
|---|---|---|---|---|---|---|---|---|---|
| | | | | Substantially non-nucleus void | β-crystal activity | Void ratio (%) | Surface glossiness (%) | Average surface roughness Ra (μm) | Surface defect |
| Comp. example 20 | - | ○ | - | - | × | - | - | - | - |
| Ccmp. example 21 | - | × | - | - | × | - | - | - | - |

[Table 11]

| | Properties of white film | | | | | | | Properties of receiving sheet | |
| | Crease resistance | Cushion factor (%) | OD | Whiteness (%) | L value | a value | b value | Sensitivity | Adhesion of receiving layer |
|---|---|---|---|---|---|---|---|---|---|
| Comp. example 7 | A | 20 | 0.64 | 70 | 68 | -0.02 | -0.85 | B | × |
| Comp. example 8 | A | 21 | 0.67 | 75 | 72 | -0.10 | -1.70 | B | × |
| Comp. example 9 | A | 22. | 0.62 | 78 | 76 | -0.14 | -1.80 | B | × |
| Comp. example 10 | A | 21 | 0.73 | 81 | 79 | -0.47 | -2.35 | C | ○ |
| Comp. example 11 | A | 21 | 0.73 | 80 | 75 | -0.02 | -0.85 | C | ○ |
| Comp. example 12 | - | - | - | - | - | - | - | - | - |
| Comp. example 13 | - | - | - | - | - | - | - | - | - |
| Comp. example 14 | - | - | - | - | - | - | - | - | - |
| Comp. example 15 | A | 13 | 0.63 | 62 | 74 | -0.08 | -0.87 | C | ◎ |
| Comp. example 16 | A | 24 | 0.72 | 80 | 85 | -0.10 | -1.43 | D | × |
| Comp. example 17 | A | 11 | 0.56 | 57 | 71 | +6.02 | +1.00 | D | × |
| Comp. example 18 | A | 16 | 0.67 | 71 | 81 | -0.09 | -1.13 | D | ○ |
| Comp. example 19 | - | - | - | - | - | - | - | - | - |
| Comp. example 20 | - | - | - | - | - | - | - | - | - |

(continued)

| | Properties of white film | | | | | | | Properties of receiving sheet | |
|---|---|---|---|---|---|---|---|---|---|
| | Crease resistance | Cushion factor (%) | OD | Whiteness (%) | L value | a value | b value | Sensitivity | Adhesion of receiving layer |
| Comp. example 21 | - | - | - | - | - | - | - | - | - |

From Tables 4 to 11, the white film of the fourth configuration of this invention has β-crystal activity, in which B layer of which crystallization speed is high is laminated to A layer which has substantially non-nucleus, uniform and fine voids, and its specific gravity is controlled in an adequate range. By this, without damaging its crease resistance, it was possible to manufacture a film of which surface roughness is small, glossiness is high, cushion factor is high and optical properties are good. In addition to that, these properties could be controlled by raw material composition or film forming conditions.

Furthermore, since an excellent white film similar to the above-mentioned can be obtained without causing a sticking or surface defect, even though undrawn sheet is produced in a high speed casting condition, its productivity is excellent.

A receiving sheet for thermal transfer recording in which such a white film is used as a substrate, has a significantly high sensitivity compared to conventional white film, since close contact with printer thermal head is improved and diffusion of heat supplied from the thermal head is prevented.

Furthermore, by laminating other layer which has excellent adhesion with receiving layer or anchor layer on the surface opposite to B layer, it is possible to separately control productivity improvement and properties of the receiving sheet.

[Industrial applicability]

In the biaxially oriented white polypropylene film of this invention, high sensitivity as substrate of a receiving sheet and high productivity which is strongly demanded for the receiving sheet for thermal transfer recording are compatible in a high level.

Such a white film is applicable, although not especially limited thereto, for example, to the followings.

- Since it is excellent in shielding ability and productivity, it can be used as a label or a substrate of poster for general use.
- Since it is excellent in shielding ability and productivity, it can be used as a wrapping film for general use.
- Since cushion factor is high, productivity is high and crystallization speed is high even melted, it is possible to easily recycle without soiling process, accordingly, it is possible to use as a buffer release film in a production process of circuit board represented by flexible print circuit board (FPC)

In any of the above cases, the film of this invention may be used alone, or, in order to impart glossiness, heat sealability, adhesion, thermal resistance or releasing ability, may be used as a processed film in which other layer is laminated to the white film of this invention.

Thus, the white film of this invention can be widely used, not only, as a matter of course, for a receiving sheet for thermal transfer recording, but also for the above-mentioned wrapping use or industrial use.

The biaxially orientated white polypropylene film of this invention can preferably be used for high sensitivity receiving sheet for thermal transfer recording since its glossiness and sum of F2 values of MD and TD are in the specific range, its specific gravity is low, its whiteness, optical density and cushion factor are high, and furthermore, taking advantage of these properties, can be used for food packing or labels.

**Claims**

1. A biaxially oriented white polypropylene film for thermal transfer recording **characterized in that** it is a film comprising of polypropylene resin of which β-crystal ratio is 30% or more and melting temperature is 140 to 172°C, which has substantially non-nucleus voids, a void ratio of 30 - 80% and a sum of strengths of longitudinal direction and of transverse direction of the film at 2% elongation (F2 value) being in the range of 10 to 70 MPa and a surface glossiness being in the range of 10 - 145 % substantially non-nucleus voids having the definition given in the description.

2. A biaxially oriented white polypropylene film for thermal transfer recording **characterized in that** a skin layer (B layer) of which surface glossiness is 10 - 145 % is laminated to at least one side of a core layer (A layer) which consists of polypropylene resin of which β-crystal ratio is 30% or more, melting temperature is 140 to 172˚C, which has substantially non-nucleus voids, a void ratio of 30 - 80% and a sum of the strengths of longitudinal direction and of transverse direction of the film at 2% elongation (F2 value) being in the range of 10 to 70 MPa substantially non-nucleus voids having the definition given in the description.

3. A biaxially oriented white polypropylene film for thermal transfer recording in which a skin layer (B layer) of which surface glossiness is 10 - 145 % is laminated to at least one side of a core layer (A layer) of polypropylene resin which has substantially non-nucleus voids **characterized in that** a sum of strengths of longitudinal direction and of transverse direction of the film at 2% elongation (F2 value) is in the range of 30 to 100 MPa and that the film has β-crystal activity substantially non-nucleus voids having the definition given in the description.

4. A biaxially oriented white polypropylene film for thermal transfer recording according to claim 2 or 3, **characterized in that** said B layer is at least one or more kinds of resin selected from polyolefin based resins, acryl based resins, polyester based resins and polyurethane based resins.

5. A biaxially oriented white polypropylene film for thermal transfer recording according to any one of claims 1 to 3, wherein a specific gravity of said film is in the range of 0.2 to 0.8.

6. A biaxially oriented white polypropylene film for thermal transfer recording according to any one of claims 1 to 3, wherein an average surface roughness (Ra) of at least one side is 0.02 to 1 μm.

7. A biaxially oriented white polypropylene film for thermal transfer recording according to any one of claims 1 to 3, wherein a thermal conductivity is 0.14 W/mK or less.

8. A biaxially oriented white polypropylene film for thermal transfer recording which is a film in which a skin layer (B layer) having a half-crystallization time of 60 seconds or less and a surface glossiness of 30 to 145 % is laminated to at least one side of a core layer (A layer) which consists of polypropylene resin having a substantially non-nucleus void, **characterized in that** it is a film of a specific gravity of 0.3 to 0.7 and has β-crystal activity substantially non-nucleus voids having the definition given in the description.

9. A biaxially oriented white polypropylene film for thermal transfer recording according to claim 8, wherein a crystallization temperature (Tc) of said B layer is 115 ˚C or more.

10. A biaxially oriented white polypropylene film for thermal transfer recording according to claim 8, wherein a void ratio of said B layer is 0.1 to 5

11. A biaxially oriented white polypropylene film for thermal transfer recording according to claim 8, wherein an average surface roughness (Ra) of said B layer is 0.01 to 0.5 μm.

12. A biaxially oriented white polypropylene film for thermal transfer recording according to any one of claims 2,3 and 8 to 11, wherein said B layer contains at least one selected from an immiscible resin, an inorganic particle and an organic particle.

13. A biaxially oriented white polypropylene film for thermal transfer recording according to any one of claims 1 to 3 and 8 to 11, wherein an optical density (OD) is in the range of 0.4 to 1.

14. A biaxially oriented white polypropylene film for thermal transfer recording according to any one of claims 1 to 3 and 8 to 11, wherein a whiteness is 50% or more, L* value is 50 or more, a* value is -2 to 5 , and b* value is -5 to -0.01.

15. A biaxially oriented white polypropylene film for thermal transfer recording according to any one of claims 1 to 3 and 8 to 11, wherein a cushion factor is 15 to 30%.

16. A receiving sheet for thermal transfer recording in which a receiving layer is provided at least on one side of the biaxially oriented white polypropylene film for thermal transfer recording described in any one of claims 1 to 3 and 8 to 11.

17. A receiving sheet for thermal transfer recording according to claim 16, in which an anchor layer is provided between said receiving layer and said film.

18. A receiving sheet for thermal transfer recording according to claim 17, wherein the anchor layer consists of at least one or more kinds of resins selected from acryl based resins, polyester based resins and polyurethane based resins.


**Patentansprüche**

1. Biaxial orientierte weiße Polypropylenfolie für die Thermotransferaufzeichnung, **dadurch gekennzeichnet, daß** sie eine Folie ist, die ein Polypropylenharz aufweist, bei dem der β-Kristallanteil 30 % oder mehr und die Schmelztemperatur 140 bis 172˚C betragen, die im wesentlichen kristallkeimfreie Hohlräume, einen Hohlraumanteil von 30 bis 80 % und eine Summe der Festigkeit in Längsrichtung und der in Querrichtung der Folie bei 2 % Dehnung (F2-Wert) im Bereich von 10 bis 70 MPa und einen Oberflächenglanz im Bereich von 10 bis 145 % hat, wobei die Definition für im wesentlichen kristallkeimfreie Hohlräume wie in der Beschreibung angegeben ist.

2. Biaxial orientierte weiße Polypropylenfolie für die Thermotransferaufzeichnung, **dadurch gekennzeichnet, daß** eine Oberflächenschicht (Schicht B), deren Oberflächenglanz 10 bis 145 % beträgt, auf zumindest eine Seite einer Kernschicht (Schicht A) laminiert ist, die aus Polypropylenharz besteht, dessen β-Kristallanteil 30 % oder mehr beträgt, dessen Schmelztemperatur 140 bis 172˚C beträgt, die im wesentlichen kristallkeimfreie Hohlräume, einen Hohlraumanteil von 30 bis 80 % und eine Summe der Festigkeit in Längsrichtung und der in Querrichtung der Folie bei 2 % Dehnung (F2-Wert) im Bereich von 10 bis 70 MPa aufweist, wobei die Definition für im wesentlichen kristallkeimfreie Hohlräume wie in der Beschreibung angegeben ist.

3. Biaxial orientierte weiße Polypropylenfolie für die Thermotransferaufzeichnung, wobei eine Oberflächenschicht (Schicht B), deren Oberflächenglanz 10 bis 145 % beträgt, auf zumindest eine Seite einer Kernschicht (Schicht A) aus Polypropylenharz laminiert ist, die im wesentlichen kristallkeimfreie Hohlräume aufweist, **dadurch gekennzeichnet, daß** die Summe der Festigkeit in Längsrichtung und der in Querrichtung der Folie bei 2 % Dehnung (F2-Wert) im Bereich von 30 bis 100 MPa liegt und die Folie β-Kristallaktivität aufweist, wobei die Definition für im wesentlichen kristallkeimfreie Hohlräume wie in der Beschreibung angegeben ist.

4. Biaxial orientierte weiße Polypropylenfolie für die Thermotransferaufzeichnung nach Anspruch 2 oder 3, **dadurch gekennzeichnet, daß** die Schicht B zumindest eine oder mehrere Arten eines Harzes ist, das aus auf Polyolefin basierenden Harzen, auf Acryl basierenden Harzen, auf Polyester basierenden Harzen und auf Polyurethan basierenden Harzen ausgewählt ist.

5. Biaxial orientierte weiße Polypropylenfolie für die Thermotransferaufzeichnung nach einem der Ansprüche 1 bis 3, wobei das spezifische Gewicht der Folie im Bereich von 0,2 bis 0,8 liegt.

6. Biaxial orientierte weiße Polypropylenfolie für die Thermotransferaufzeichnung nach einem der Ansprüche 1 bis 3, wobei die mittlere Oberflächenrauheit (Ra) von zumindest einer Seite 0,02 bis 1 μm beträgt.

7. Biaxial orientierte weiße Polypropylenfolie für die Thermotransferaufzeichnung nach einem der Ansprüche 1 bis 3, wobei die Wärmeleitfähigkeit 0,14 W/mK oder weniger beträgt.

8. Biaxial orientierte weiße Polypropylenfolie für die Thermotransferaufzeichnung, die eine Folie ist, bei der eine Oberflächenschicht (Schicht B) mit einer Halbkristallisationszeit von 60 s oder weniger und einem Oberflächenglanz von 30 bis 145 % auf zumindest eine Seite einer Kernschicht (Schicht A) laminiert ist, die aus einem Polypropylenharz mit einem im wesentlichen kristallkeimfreien Hohlraum laminiert ist, **dadurch gekennzeichnet, daß** sie eine Folie mit einem spezifischen Gewicht von 0,3 bis 0,7 ist und β-Kristallaktivität aufweist, wobei die Definition für im wesentlichen kristallkeimfreie Hohlräume wie in der Beschreibung angegeben ist.

9. Biaxial orientierte weiße Polypropylenfolie für die Thermotransferaufzeichnung nach Anspruch 8, wobei die Kristallisationstemperatur (Tc) der Schicht B 115˚C oder mehr beträgt.

**10.** Biaxial orientierte weiße Polypropylenfolie für die Thermotransferaufzeichnung nach Anspruch 8, wobei der Hohlraumanteil der Schicht B 0,1 bis 5 % beträgt.

**11.** Biaxial orientierte weiße Polypropylenfolie für die Thermotransferaufzeichnung nach Anspruch 8, wobei die mittlere Oberflächenrauheit (Ra) der Schicht B 0,01 bis 0,5 $\mu$m beträgt.

**12.** Biaxial orientierte weiße Polypropylenfolie für die Thermotransferaufzeichnung nach einem der Ansprüche 2, 3 und 8 bis 11, wobei die Schicht B zumindest einen Bestandteil enthält, der aus einem nicht mischbaren Harz, einem anorganischen Partikel und einem organischen Partikel ausgewählt ist.

**13.** Biaxial orientierte weiße Polypropylenfolie für die Thermotransferaufzeichnung nach einem der Ansprüche 1 bis 3 und 8 bis 11, wobei die optische Dichte (OD) im Bereich von 0,4 bis 1 liegt.

**14.** Biaxial orientierte weiße Polypropylenfolie für die Thermotransferaufzeichnung nach einem der Ansprüche 1 bis 3 und 8 bis 11, wobei der Weißheitsgrad 50 % oder mehr beträgt, der L*-Wert 50 oder mehr beträgt, der a*-Wert -2 bis 5 beträgt und der b*-Wert -5 bis -0,01 beträgt.

**15.** Biaxial orientierte weiße Polypropylenfolie für die Thermotransferaufzeichnung nach einem der Ansprüche 1 bis 3 und 8 bis 11, wobei der Dämpfungsfaktor 15 bis 30 % beträgt.

**16.** Empfangsbahn für die Thermotransferaufzeichnung, wobei eine Empfangsschicht zumindest auf einer Seite der biaxial orientierten weißen Polypropylenfolie für die Thermotransferaufzeichnung nach einem der Ansprüche 1 bis 3 und 8 bis 11 vorgesehen ist.

**17.** Empfangsbahn für die Thermotransferaufzeichnung nach Anspruch 16, wobei zwischen der Empfangsschicht und der Folie eine Haftschicht vorgesehen ist.

**18.** Empfangsbahn für die Thermotransferaufzeichnung nach Anspruch 17, wobei die Haftschicht aus zumindest einer oder mehreren Arten von Harzen besteht, die aus auf Acryl basierenden Harzen, auf Polyester basierenden Harzen und auf Polyurethan basierenden Harzen ausgewählt sind.

**Revendications**

**1.** Film de polypropylène blanc orienté bi-axialement destiné à l'impression par transfert thermique, **caractérisé en ce qu'**il s'agit d'un film se composant de résine de polypropylène possédant un rapport de cristal β égal ou supérieur à 30% et une température de fusion de 140 à 172˚C. Ledit film de polypropylène blanc orienté bi-axialement se **caractérise en ce qu'**il possède des vides sensiblement énucléés, un rapport de vides de 30 à 80% et une somme de résistances à un allongement de 2% (valeur F2) dans le sens de la longueur et de la largeur du film de 10 à 70 MPa ainsi qu'un degré de brillance superficielle de 10 à 145%, les vides sensiblement énucléés ayant la définition mentionnée dans la description.

**2.** Film de polypropylène blanc orienté bi-axialement destiné à l'impression par transfert thermique, **caractérisé en ce qu'**une couche pelliculaire (couche B) possédant une brillance superficielle de 10 à 145% est laminée sur au moins une face d'une couche centrale (couche A) composée de résine de polypropylène dont le rapport de cristal β est égal ou supérieur à 30%, la température de fusion est de 140 à 172˚C, qui présente des vides sensiblement énucléés, un rapport de vides de 30 à 80% et une somme de résistances à un allongement de 2% (valeur F2) dans le sens de la longueur et de la largeur du film de 10 à 70 MPa, les vides sensiblement énucléés ayant la définition mentionnée dans la description.

**3.** Film de polypropylène blanc orienté bi-axialement destiné à l'impression par transfert thermique, dans lequel une couche pelliculaire (couche B) présentant une brillance superficielle de 10 à 145% est laminée sur au moins une face d'une couche centrale (couche A) composée de résine de polypropylène présentant des vides sensiblement énucléés, **caractérisé en ce qu'**une somme de résistances à un allongement de 2% (valeur F2) dans le sens de la longueur et de la largeur du film est comprise entre 30 et 100 MPa et **en ce que** le film a une activité de cristal β, les vides sensiblement énucléés ayant la définition mentionnée dans la description.

**4.** Film de polypropylène blanc orienté bi-axialement destiné à l'impression par transfert thermique selon la revendication 2 ou la revendication 3, **caractérisé en ce que** ladite couche B est composée d'au moins un ou plusieurs types de résine sélectionnée parmi les résines à base de polyoléfine, les résines à base d'acryle, les résines à base de polyester et les résines à base de polyuréthane.

**5.** Film de polypropylène blanc orienté bi-axialement destiné à l'impression par transfert thermique selon l'une quelconque des revendications 1 à 3, dans lequel une gravité spécifique dudit film est comprise entre 0,2 et 0,8.

**6.** Film de polypropylène blanc orienté bi-axialement destiné à l'impression par transfert thermique selon l'une quelconque des revendications 1 à 3, dans lequel une rugosité superficielle moyenne (Ra) d'au moins une face est de 0,02 à 1 mm.

**7.** Film de polypropylène blanc orienté bi-axialement destiné à l'impression par transfert thermique selon l'une quelconque des revendications 1 à 3, dans lequel une conductivité thermique est inférieure ou égale à 0,14 W/mK.

**8.** Film de polypropylène blanc orienté bi-axialement destiné à l'impression par transfert thermique qui est un film dans lequel une couche pelliculaire (couche B) présentant un temps de semi-cristallisation inférieur ou égal à 60 secondes et une brillance superficielle de 30 à 145% est laminée sur au moins une face d'une couche centrale (couche A) se composant de résine de polypropylène présentant un vide sensiblement énucléé, **caractérisé en ce qu'**il s'agit d'un film d'une gravité spécifique de 0,3 à 0,7 et ayant une activité de cristal β, les vides sensiblement énucléés ayant la définition mentionnée dans la description.

**9.** Film de polypropylène blanc orienté bi-axialement destiné à l'impression par transfert thermique selon la revendication 8, dans lequel une température de cristallisation (Tc) de ladite couche B est égale ou supérieure à 115˚C.

**10.** Film de polypropylène blanc orienté bi-axialement destiné à l'impression par transfert thermique selon la revendication 8, dans lequel un rapport de vide de ladite couche B est de 0,1 à 5%.

**11.** Film de polypropylène blanc orienté bi-axialement destiné à l'impression par transfert thermique selon la revendication 8, dans lequel une rugosité superficielle moyenne (Ra) de ladite couche B est de 0,01 à 0,5 $\mu$m.

**12.** Film de polypropylène blanc orienté bi-axialement destiné à l'impression par transfert thermique selon l'une quelconque des revendications 2, 3 et des revendications 8 à 11 , dans lequel ladite couche B contient au moins un composé sélectionné parmi une résine non miscible, une particule inorganique et une particule organique.

**13.** Film de polypropylène blanc orienté bi-axialement destiné à l'impression par transfert thermique selon l'une quelconque des revendications 1 à 3 et des revendications 8 à 11, dans lequel une densité optique (DO) est comprise entre 0,4 et 1.

**14.** Film de polypropylène blanc orienté bi-axialement destiné à l'impression par transfert thermique selon l'une quelconque des revendications 1 à 3 et des revendications 8 à 11, dans lequel la blancheur est égale ou supérieure à 50%, la valeur L* est égale ou supérieure à 50, la valeur a* est de -2 à 5, et la valeur b* est de -5 à -0,01.

**15.** Film de polypropylène blanc orienté bi-axialement destiné à l'impression par transfert thermique selon l'une quelconque des revendications 1 à 3 et des revendications 8 à 11, dans lequel un facteur d'amortissement est de 15 à 30%.

**16.** Feuille réceptrice destinée à l'impression par transfert thermique, dans laquelle une couche réceptrice est formée sur au moins une face du film de polypropylène blanc orienté bi-axialement destiné à l'impression par transfert thermique décrit dans l'une quelconque des revendications 1 à 3 et des revendications 8 à 11.

**17.** Feuille réceptrice destinée à l'impression par transfert thermique selon la revendication 16, dans laquelle une couche d'ancrage est formée entre ladite couche réceptrice et ledit film.

**18.** Feuille réceptrice destinée à l'impression par transfert thermique selon la revendication 17, dans laquelle la couche d'ancrage se compose d'au moins un ou plusieurs types de résines sélectionnées parmi les résines à base d'acryle, les résines à base de polyester et les résines à base de polyuréthane.

[Fig. 1]

×8.0k 0000  10kV    5μm

4          5

[Fig. 2]

**4**

[Fig. 3]

Endothermic direction

Fusion temperature (°C)

Figure 3

[Fig. 4]

Figure 4

[Fig. 5]

6

## REFERENCES CITED IN THE DESCRIPTION

### Patent documents cited in the description

- JP 2599934 B
- JP 1748101 A
- JP HEI11343357 B
- JP 2611392 B
- JP 2917331 B
- JP 2964608 B
- JP 2735989 B
- JP 2651469 B
- JP 1974511 A
- JP 3443934 B
- JP 2509030 B
- WO 0266233 A
- JP 3523404 B
- WO 0393003 A
- WO 0393004 A
- JP 2004142321 A
- JP SHOU62121704 B
- JP 2869606 B
- JP SHOU6315816 B
- JP SHOU63256651 B
- JP HEI5152159 B

### Non-patent literature cited in the description

- **EDWARD, P ; MOORE, JR.** Polypropylene Handbook. Kogyo Chosakai, 1998, 135-163
- **HIROYUKI TADOKORO.** Structure of Polymer. Kagaku-Dojin, 1976, 393
- **A. TURNER-JONES et al.** *Macromolekulare Chemie,* vol. 75, 134-158
- **KIYOKAZU MATSUMOTO et al.** *The Journal of Society of Fiber Science and Technology, Japan,* 1970, vol. 26th (12), 537-549
- **KIYOKAZU MATSUMOTO.** Making Film. Kyoritsu Shuppan, 1993, 67-86
- **SEIZO OKAMURA et al.** Kobunshi Kagaku Joron. Kagaku-Dojin, 1981, 92-93